# EUROPEAN PATENT SPECIFICATION

(11) **EP 3 597 278 B1**
(45) Date of publication and mention of the grant of the patent: **09.09.2020**
(21) Application number: 18212444.6
(22) Date of filing: 13.12.2018
(51) Int. Cl.: A63H 11/00, G09B 7/00

(54) **LEARNING TOY, MOBILE BODY FOR LEARNING TOY, PANEL FOR LEARNING TOY, AND PORTABLE INFORMATION PROCESSING TERMINAL FOR LEARNING TOY**
LERNSPIELZEUG, MOBILER KÖRPER FÜR LERNSPIELZEUG, PLATTE FÜR LERNSPIELZEUG UND TRAGBARES INFORMATIONSVERARBEITUNGSENDGERÄT FÜR LERNSPIELZEUG
JOUET D'APPRENTISSAGE, CORPS MOBILE POUR JOUET D'APPRENTISSAGE, PANNEAU POUR JOUET D'APPRENTISSAGE ET TERMINAL PORTABLE DE TRAITEMENT D'INFORMATIONS POUR JOUET D'APPRENTISSAGE

(30) Priority: 19.07.2018 JP 2018135792
(43) Date of publication of application: 22.01.2020
(73) Proprietor: Icon Corporation, Kanagawa-ku, Yokohama-shi, Kanagawa 221-0834 (JP)
(72) Inventor: TSUCHIYA, Toshiko, Kanagawa, Kanagawa 221-0834 (JP)
(74) Representative: Klunker IP Patentanwälte PartG mbB

(56) References cited:
- EP-A2- 1 243 134
- US-A1- 2013 288 560
- US-A1- 2016 346 705
- US-A1- 2017 007 915

## Description

### BACKGROUND OF THE INVENTION

### Field of the Invention

The present invention relates to a toy which programs operation of a robot, and relates to a learning toy in which a robot which self-travels on a panel reads command information recorded in the panel, operates on the basis of the command information and performs display at a tablet terminal on the basis of the command information.

### Description of the Related Art

Conventionally, as a toy which causes a self-traveling mobile body to move on a movement path, for example, one disclosed in Japanese Patent Laid-Open No. 2010-167149 is known. In the toy disclosed in Japanese Patent Laid-Open No. 2010-167149, a pattern for data and a pattern for clock are respectively formed in parallel in a right half portion and in a left half portion of a traveling surface along a traveling path. A mobile body moves on the traveling surface while reading these two types of patterns . The whole traveling path is formed in an endless shape, that is, in a loop shape by a plurality of course parts having various kinds of shapes including a linear shape, a curved shape and a slope shape being connected. Because the pattern for data formed on the traveling surface indicates a course part ID which specifies the shape of each course part, the mobile body can identify the course shape by reading the pattern for data. The mobile body not only can identify the course shape but also can acquire actual traveling result data such as a deviation occurrence section and a jump section. Further, such a toy can be used by a portable game device which has a function of being capable of performing transmission and reception with the mobile body. A player can manipulate the mobile body or can transmit traveling control data to the mobile body using the portable game device. The player can enjoy setting traveling control data such as speed and acceleration of the mobile body at each position on the traveling path on the basis of the course shape and the actual traveling result data to make improvements so as to shorten traveling time.

Further, as a toy with which operation of a target can be changed as appropriate on the basis of a command arbitrarily set by a player, one disclosed in U.S. Patent No. 9333427 is known. With the toy disclosed in U.S. Patent No. 9333427, action of an avatar appearing on a screen of a display can be arbitrarily set by a desired activity block being put in a pocket of a master block (that is, an operation device) .

The toy disclosed in Japanese Patent Laid-Open No. 2010-167149 has a configuration where the mobile body identifies a course shape by reading data on the traveling surface, and the player sets traveling control data to cause the mobile body to operate. Further, the toy has a configuration where the player can control a traveling state of the mobile body by manipulating the portable game device.

However, the mobile body disclosed in Japanese Patent Laid-Open No. 2010-167149 merely travels on the traveling path, and an operation form is limited to a certain range. Therefore, there is limited room for application, and the toy disclosed in Japanese Patent Laid-Open No. 2010-167149 merely assumes play. Further, while, with the toy disclosed in Japanese Patent Laid-Open No. 2010-167149, the portable game device can be used, the portable game device is merely used for input as a manipulating unit of the mobile body.

Further, with the toy disclosed in U.S. Patent No. 9333427, the player can arbitrarily set action of the avatar appearing on the screen of the display.

However, the avatar which the player causes to perform action is only acts as an image on the display, and the player cannot directly touch the avatar. Therefore, it is difficult for children such as infants to manipulate the operation device.

Therefore, a problem to be solved by the present invention is to provide a toy with which a player (learner) can cause a mobile body to perform various kinds of operation through manipulation while a configuration where the mobile body reads data from a traveling surface and the mobile body is caused to perform operation is maintained. Further, because an application range is enlarged by causing the mobile body to perform various kinds of operation, a learning toy which is applied to a learning field, particularly, which can be used for learning programming is provided. Because this learning toy has characteristics that the mobile body actually moves, the learning toy is simple to understand and can be used by children such as infants, and, further, because it is possible to learn higher-level programming, this learning toy can be also used by older children.

US 2017/007915 A1 discloses an interactive robotic game which comprises an interlocking tile, an automatic data capture device for identifying a target position and a path on the top surface of the tile. A microprocessor is used in combination with a path sensor and a data reader.

### SUMMARY OF THE INVENTION

To solve such a problem, an invention recited in claim 1 is a learning toy comprising a mobile body, a portable information processing terminal and a plurality of command panels or command sheets in which command information which is a command of operation of the mobile body is recorded are successively arranged, the mobile body reads the command information while self-traveling on the command panels or the command sheets, the mobile body operates on the basis of the command information, the command information read by the mobile body is transmitted from the mobile body to the portable information processing terminal, and the portable information processing terminal operates on the basis of the received command information, the mobile body including a moving unit to self-travel on the command panels or the command sheets, a reading unit to read the command information recorded in the command panels or the command sheets, a mobile body side communication unit to enable the read command information to be communicated with the portable information processing terminal, and a mobile body side control unit to cause the mobile body to operate on the basis of the read command information, and the portable information processing terminal including a first terminal side communication unit to enable the command information read by the reading unit to be communicated with the mobile body, and a terminal side control unit to cause an image to be displayed at a terminal side display unit of the portable information processing terminal or cause sound to be generated from a terminal side sound generating unit of the portable information processing terminal, on the basis of the command information transmitted from the mobile body and received by the first terminal side communication unit.

An invention according to claim 2 is the learning toy in which, in addition to the configuration recited in claim 1, the portable information processing terminal includes an image and sound reproduction data holding unit to hold reproduction data of an image to be displayed at the terminal side display unit or sound to be generated from the terminal side sound generating unit on the basis of the command information transmitted from the mobile body and received by the first terminal side communication unit, and the terminal side control unit of the portable information processing terminal reads out the reproduction data from the image and sound reproduction data holding unit on the basis of the command information transmitted from the mobile body and received by the first terminal side communication unit, and causes an image to be displayed at the terminal side display unit or causes sound to be generated from the terminal side sound generating unit.

An invention according to claim 3 is the learning toy in which, in addition to the configuration recited in claim 1, the portable information processing terminal includes an image and sound reproduction data holding unit to hold reproduction data of an image to be displayed at the terminal side display unit or sound to be generated from the terminal side sound generating unit on a basis of the command information transmitted from the mobile body and received by the first terminal side communication unit, and a first terminal side storage unit to store a plurality of pieces of the command information transmitted from the mobile body and received by the first terminal side communication unit, and the terminal side control unit of the portable information processing terminal reads out predetermined reproduction data from the image and sound reproduction data holding unit on the basis of the plurality of pieces of the command information stored in the first terminal side storage unit, and causes an image to be displayed at the terminal side display unit or causes sound to be generated from the terminal side sound generating unit.

An invention according to claim 4 is the learning toy in which, in addition to the configuration recited in claim 1, the portable information processing terminal includes an image and sound reproduction data holding unit to hold reproduction data of an image to be displayed at the terminal side display unit or sound to be generated from the terminal side sound generating unit on a basis of the command information transmitted from the mobile body and received by the first terminal side communication unit, and an imaging unit to be able to capture an image of the mobile body and background, the terminal side control unit of the portable information processing terminal causes the image of the mobile body and the background captured by the imaging unit to be displayed at the terminal side display unit, reads out an image of the reproduction data from the image and sound reproduction data holding unit on the basis of the command information transmitted from the mobile body and received by the first terminal side communication unit, and causes the read image of the reproduction data to be displayed at the terminal side display unit so as to be superimposed on an image of a portion of the background.

An invention according to claim 5 is the learning toy in which, in addition to the configuration recited in claim 1, the mobile body includes an operation parameter storage unit to store a mobile body operation parameter which determines content of operation of the mobile body based on the command information, the portable information processing terminal includes a terminal side input unit to allow a learner to perform input, the terminal side control unit of the portable information processing terminal causes the first terminal side communication unit to transmit a rewrite parameter for rewriting the mobile body operation parameter and storing the rewritten mobile body operation parameter in the operation parameter storage unit, to the mobile body, the rewrite parameter being input to the terminal side input unit, and the mobile body side control unit of the mobile body rewrites the mobile body operation parameter and stores the rewritten mobile body operation parameter in the operation parameter storage unit on the basis of the rewrite parameter transmitted from the portable information processing terminal and received by the mobile body side communication unit.

An invention according to claim 6 is the learning toy in which, in addition to the configuration recited in claim 1, the terminal side control unit of the portable information processing terminal detects a position of the mobile body in a region where the plurality of the command panels or the command sheets are arranged on the basis of the command information transmitted from the mobile body and received by the first terminal side communication unit, and causes the detected position of the mobile body in the region where the plurality of the command panels or the command sheets are arranged to be displayed at the terminal side display unit.

An invention according to claim 7 is the learning toy in which, in addition to the configuration recited in claim 6, the portable information processing terminal includes a terminal side input unit to allow the learner to perform input, the terminal side control unit of the portable information processing terminal causes the first terminal side communication unit to transmit operation instruction information which is a command of operation of the mobile body input to the terminal side input unit, toward the mobile body, and after the mobile body side control unit of the mobile body causes the mobile body to operate on the basis of the operation instruction information transmitted from the portable information processing terminal and received by the mobile body side communication unit, the mobile body side control unit of the mobile body causes the reading unit of the mobile body to read the command information from the command panels or the command sheets, causes the mobile body side communication unit to transmit the read command information toward the portable information processing terminal, and, then, stops operation of the mobile body and puts the mobile body into a state where the mobile body accepts the operation instruction information.

An invention according to claim 8 is the learning toy in which, in addition to the configuration recited in claim 7, the portable information processing terminal includes a second terminal side storage unit to store a type of a virtual panel input by a learner among a plurality of types of virtual panels which have one-to-one correspondence relationship with a plurality of types of the operation instruction information input to the terminal side input unit, and an input position and an input direction of the virtual panel in a region where the virtual panel can be input, defined in advance, the terminal side control unit of the portable information processing terminal causes the type of the virtual panel input to the terminal side input unit and the input position and the input direction of the virtual panel to be stored in the second terminal side storage unit, causes all the types of the virtual panels and the input positions and the input directions of the virtual panels stored in the second terminal storage unit to be displayed at the terminal side display unit, and, in the case where the input position of the virtual panel input to the terminal side input unit matches the position of the mobile body in the region where the plurality of the command panels or the command sheets are arranged, causes the first terminal side communication unit to transmit the operation instruction information having one-to-one correspondence relationship with the input virtual panel toward the mobile body, and the mobile body side control unit of the mobile body causes the mobile body to operate on the basis of the operation instruction information transmitted from the portable information processing terminal and received by the mobile body side communication unit.

An invention according to claim 9 is the learning toy in which, in addition to the configuration recited in claim 8, a plurality of sets of combination of the mobile body and the portable information processing terminal included in the learning toy recited in claim 8 are provided, the portable information processing terminal in one set among the plurality of sets of combination of the mobile body and the portable information processing terminal includes a second terminal side communication unit to be able to communicate the command information transmitted from the mobile body in one set which is paired with the portable information processing terminal in the one set and received by the first terminal side communication unit, and input information including the type of the virtual panel input to the terminal side input unit, and the input position and the input direction of the virtual panel, with the portable information processing terminal in another set among the plurality of sets of combination of the mobile body and the portable information processing terminal.

An invention according to claim 10 is the learning toy in which, in addition to the configuration recited in claim 9, the terminal side control unit of the portable information processing terminal in the one set among the plurality of sets of combination of the mobile body and the portable information processing terminal causes the second terminal side communication unit of the portable information processing terminal in the one set to transmit the received command information toward the portable information processing terminal in the other set when the command information is transmitted from the mobile body in the one set which is paired with the portable information processing terminal in the one set and received by the terminal side communication unit of the portable information processing terminal in the one set, the terminal side control unit of the portable information processing terminal in the other set detects a position of the mobile body in the one set in the region where the plurality of the command panels or the command sheets are arranged on the basis of the command information transmitted from the portable information processing terminal in the one set and received by the second terminal side communication unit of the portable information processing terminal in the other set, and causes the detected position of the mobile body in the one set in the region where the plurality of the command panels or the command sheets are arranged to be displayed at the terminal side display unit of the portable information processing terminal in the other set.

An invention according to claim 11 is the learning toy in which, in addition to the configuration recited in claim 9, the terminal side control unit of the portable information processing terminal in the one set among the plurality of sets of combination of the mobile body and the portable information processing terminal causes the second terminal side communication unit of the portable information processing terminal in the one set to transmit the input information of the input virtual panel toward the portable information processing terminal in the other set when the type of the virtual panel, and the input position and the input direction of the virtual panel are input to the terminal side input unit of the portable information processing terminal in the one set, and the terminal side control unit of the portable information processing terminal in the other set causes the type of the virtual panel input to the portable information processing terminal in the one set, and the input position and the input direction of the virtual panel to be stored in the second terminal side storage unit of the portable information processing terminal in the other set on the basis of the input information of the virtual panel transmitted from the portable information processing terminal in the one set and received by the second terminal side communication unit of the portable information processing terminal in the other set, and causes all the types of the virtual panels, and the input positions and the input directions of the virtual panels stored in the second terminal side storage unit of the portable information processing terminal in the other set to be displayed at the terminal side display unit of the portable information processing terminal in the other set.

An invention according to claim 12 is the learning toy in which, in addition to the configuration recited in any one of claims 1 to 11, the mobile body includes a mobile body side light emitting unit to cause a body of the mobile body to emit light or a mobile body side sound generating unit to cause sound to be generated from the mobile body, on the basis of the command information.

An invention according to claim 13 is a mobile body for a learning toy used for the learning toy recited in any one of claims 1 to 12.

An invention according to claim 14 is a command panel for a learning toy used for the learning toy recited in any one of claims 1 to 12.

An invention according to claim 15 is a command sheet for a learning toy used for the learning toy recited in any one of claims 1 to 12.

An invention is a portable information processing terminal for a learning toy used for the learning toy recited previously.

According to the invention of claim 1, because the mobile body reads the command information from the command panels or the command sheets and operates on the basis of the command information, it is possible to cause the mobile body to perform various kinds of operation by the learner selecting types of the command panels and arranging the command panels.

Further, because the learner can directly observe movement of the mobile body, even children such as infants can easily understand movement visually, so that the children can learn programming with interest. Further, because the portable information processing terminal is also caused to operate on the basis of the command information, it is possible to express various kinds of content, so that, as well as younger children, older children can learn programming with interest using this learning toy.

Further, because, according to the command information to be read, a plurality of targets including the mobile body and the portable information processing terminal operate as well as a basic configuration in which only the mobile body operates, targets to be manipulated by programming increase, so that it is possible to learn high-level programming. Therefore, children such as infants can learn with the basic configuration which includes only the command panels and the mobile body, which can be easily understood, while older children can learn in a higher level with various kinds of configurations including the command panels, the command sheets, the mobile body and the portable information processing terminal. As a result, it is possible to change a difficulty level in a stepwise manner from basic content to high-level content in accordance with development stages of children. Further, it is possible to prevent children from getting bored or prevent the toy from getting out of use in a short period of time as children grow, and realize usage of this learning toy over a long period of time. Still further, the learner can recognize radio communication, image processing, or the like, which are basic technologies supporting the portable information processing terminal through learning experience, and can obtain basic knowledge which is necessary for programming.

According to the invention of claim 2, the portable information processing terminal can cause various kinds of reproduction data to be displayed at the terminal side display unit or cause various kinds of reproduction data to be generated from the terminal side sound generating unit, on the basis of the command information.

Therefore, the learner can learn while changing content to be reproduced at the portable information processing terminal in a stepwise manner from basic content to high-level content. Further, by holding a plurality of pieces of content to be reproduced, it is possible to change content to be reproduced, so that the learner can continue to learn without getting bored.

According to the invention of claim 3, the portable information processing terminal displays an image or generates sound on the basis of a plurality of pieces of command information. It is possible to hold a number of pieces of reproduction data of images to be displayed or sound to be generated on the basis of types or combination of the plurality of pieces of command information, so that it is possible to change the images or sound in various manners in accordance with types and order of the command panels. Therefore, the learner can continue to learn without getting bored. Further, because the portable information processing terminal operates on the basis of not only one piece of command information but a plurality of pieces of command information, the learner needs to take into account types and combination of the plurality of command panels, so that the learner can learn high-level programming.

According to the invention of claim 4, the portable information processing terminal displays the image captured at the imaging unit at the terminal side display unit and displays an image of the reproduction data at a portion of a background image of the mobile body by performing image processing on the image. This is a technology called Augmented Reality (AR). Therefore, the learner can recognize the technology of augmented reality through learning experience. Further, it is possible to display process of image processing which realizes augmented reality at the terminal side display unit, so that the learner can learn how the image is subjected to processing.

According to the invention of claim 5, the learner can change content of the operation of the mobile body by manipulating the portable information processing terminal. The learner can learn a method for manipulating the portable information processing terminal and can recognize a difference in roles of programs and parameters through learning experience. Further, the learner can manipulate the portable information processing terminal so that the mobile body does not perform the operation itself by setting zero at a mobile body operation parameter, so that the learner can learn concept of zero.

According to the invention of claim 6, the portable information processing terminal detects and displays the position of the mobile body in the region where the plurality of command panels or command sheets are arranged. Therefore, the learner can recognize the position of the mobile body by observing display of the portable information processing terminal. Because the learner can recognize the position of the mobile body at a glance through the portable information processing terminal, the learner can easily recognize position of the mobile body, so that it is possible to smoothly proceed with learning of programming.

According to the invention of claim 7, the learner can control operation of the mobile body by manipulating the portable information processing terminal. The learner can perform manipulation not only from the command panel but also from the portable information processing terminal, so that the learner can learn that the mobile body which is one output target can be manipulated from a plurality of different input routes.

According to the invention of claim 8, the portable information processing terminal stores the input information of the input virtual panel and displays all the stored input information of the virtual panels. Further, the portable information processing terminal causes the mobile body to automatically perform desired operation in accordance with the position of the input virtual panel. Therefore, the learner can recognize the types, the input positions and the input directions of all the virtual panels input so far through display of the portable information processing terminal. Further, the learner can cause the mobile body to perform desired operation by inputting a virtual panel to the portable information processing terminal. As a result, the learner can learn programming in a similar manner by manipulating the portable information processing terminal without actually arranging command panels. Because time and effort for arranging command panels are omitted, the learner can learn efficiently.

According to the invention of claim 9, a plurality of sets of combination of the mobile body and the portable information processing terminal are provided, and all the portable information processing terminals can transmit and receive data through communication and share data. Therefore, all the learners can learn at the same time while sharing data.

According to the invention of claim 10, a plurality of sets of combination of the mobile body and the portable information processing terminal are provided, the positions of all the mobile bodies are shared among all the portable information processing terminals and displayed. Therefore, the learner can recognize the positions of all the mobile bodies of other learners as well as the position of the mobile body of the learner by observing display of the portable information processing terminal of the learner. Therefore, even in the case where the learner is located at a remote location and all the learners cannot directly observe the positions of all the mobile bodies visually, all the learners can learn while recognizing current positions of the mobile bodies of other learners.

According to the invention of claim 11, a plurality of sets of combination of the mobile body and the portable information processing terminal are provided, and input information of all the virtual panels input to all the portable information processing terminals is shared among all the portable information processing terminals and displayed. Therefore, the learner can recognize the input information of all the virtual panels input so far by other learners as well as the input information of all the virtual panels input so far by the learner by observing display of the portable information processing terminal of the learner. Therefore, all the learners can learn while sharing the input information of all the virtual panels input so far and proceed with learning while communicating the input information of the virtual panels input from when learning is started until the present time among the learners.

According to the invention of claim 12, the mobile body can cause the body to emit light or cause sound to be generated on the basis of the command information. Therefore, the learner can directly observe movement of the mobile body, so that even children such as infants can easily understand meaning visually or aurally, and can learn programming with interest. Further, because the mobile body emits light and generates sound as well as moves and rotates, operation of the mobile body becomes diversified. As a result, a width of programming is expanded, so that the learner can learn high-level programming.

According to the invention of claim 13, a plurality of the mobile bodies for a learning toy can be purchased, so that the leaner can perform learning using a plurality of mobile bodies.

According to the invention of claim 14, because types of command information to be recorded in the command panel for a learning toy can increase, it is possible to cause the mobile body to perform various kinds of operation. As a result, it is possible to learn various kinds of high-level programming. Further, by selecting types of command panels to be used for learning, it is possible to adjust a difficulty level of programming in a stepwise manner. Therefore, the learner can learn programming in accordance with a development stage of the learner. Further, because it is possible to sell a command panel for a learning toy alone, the learner can additionally purchase a command panel for a learning toy as needed.

According to the invention of claim 15, the learner can learn using a command sheet without using a command panel, so that a learning method becomes diversified. As a result, the learner can continue to learn without getting bored.

According to the invention of a portable information processing terminal, because the portable information processing terminal for a learning toy includes an image display unit or a sound generating unit, it is possible to express various kinds of content, so that older children as well as younger children can learn programming with interest. Further, the learner can learn a method for manipulating the portable information processing terminal through learning experience. Still further, the learner can use a commercially available portable information processing terminal as well as a portable information processing terminal which is developed and manufactured as exclusive goods, so that it is possible to learn programming at low cost.

### BRIEF DESCRIPTION OF THE DRAWINGS

FIG. 1 is a perspective view schematically illustrating an overall configuration of a learning toy according to Embodiment 1 of the present invention;
FIG. 2 is a diagram schematically illustrating a mobile robot according to Embodiment 1, FIG. 2A is a front view, and FIG. 2B is a bottom view;
FIG. 3 is a schematic perspective view of a traveling mechanism of the mobile robot seen from a lower side according to Embodiment 1;
FIG. 4 is a block diagram schematically illustrating a mobile robot side control circuit of the mobile robot according to Embodiment 1;

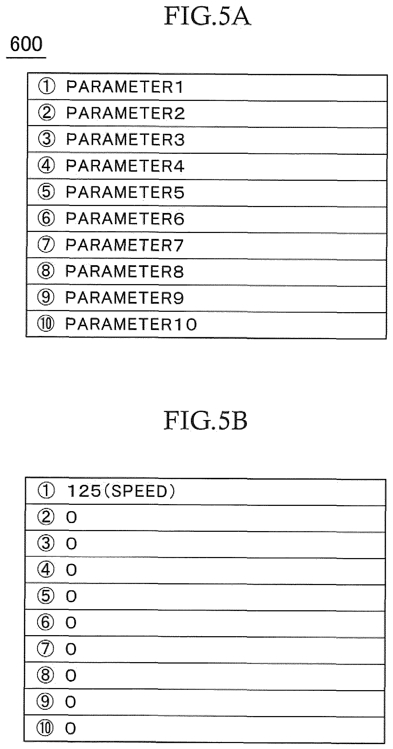

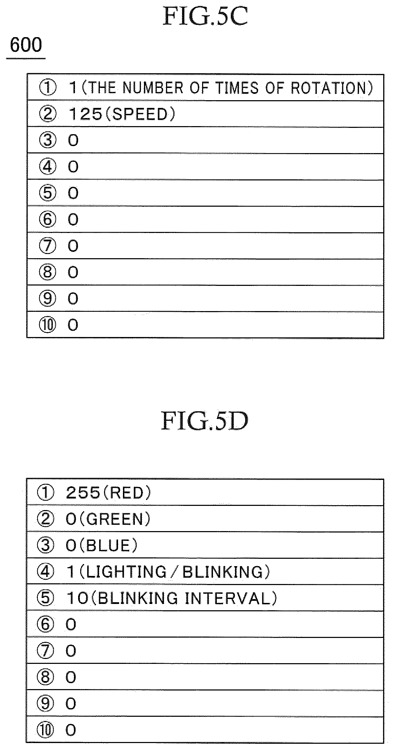

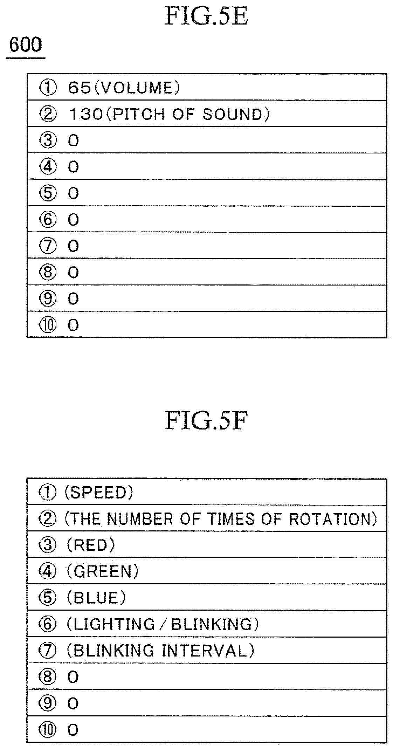

FIG. 5 is a diagram illustrating a data structure of an operation parameter of the mobile robot, FIG. 5A is a diagram explaining the data structure, FIG. 5B is a diagram explaining a data structure corresponding to command information which determines a traveling direction of the mobile robot, FIG. 5C is a diagram explaining a data structure corresponding to command information which causes the mobile robot to rotate one revolution, FIG. 5D is a diagram explaining a data structure corresponding to command information which causes a light emitting unit of the mobile robot to emit light, FIG. 5E is a diagram explaining a data structure corresponding to command information which causes the mobile robot to reproduce bark of a dog, and FIG. 5F is a diagram explaining a data structure corresponding to command information recorded in an original panel;
FIG. 6 is a schematic front view of a tablet computer according to Embodiment 1;
FIG. 7 is a block diagram schematically illustrating a control circuit of the tablet computer according to Embodiment 1;

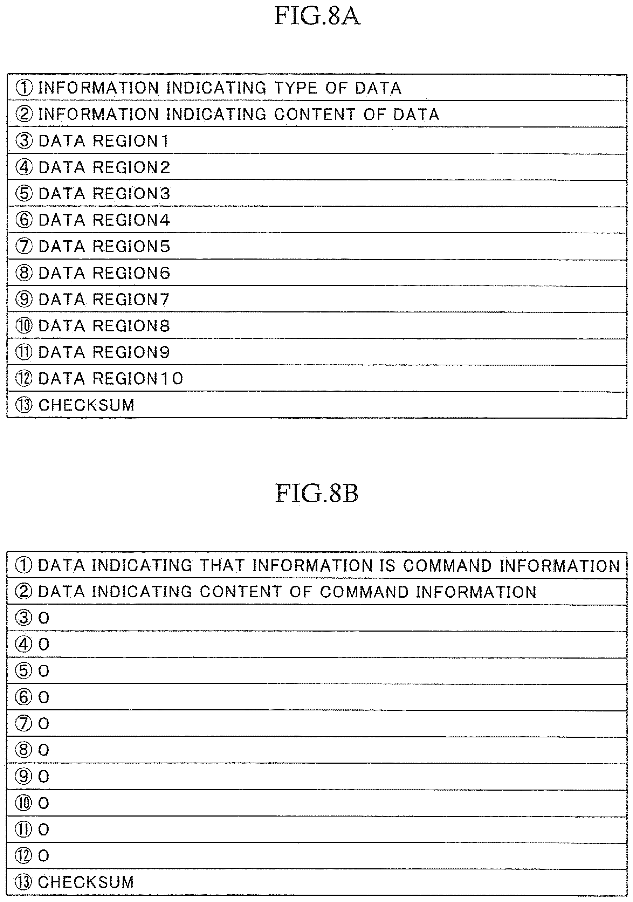

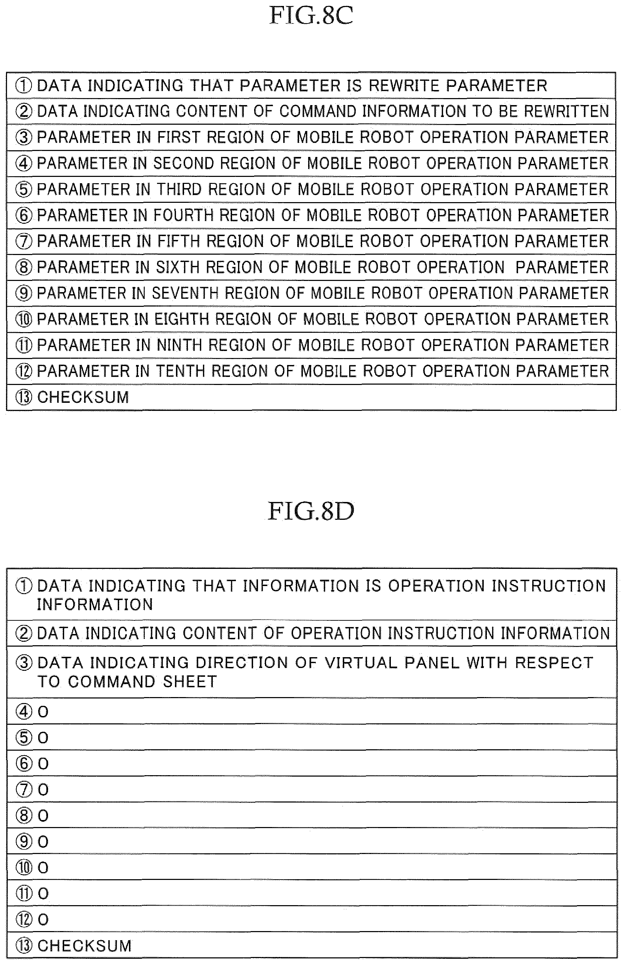

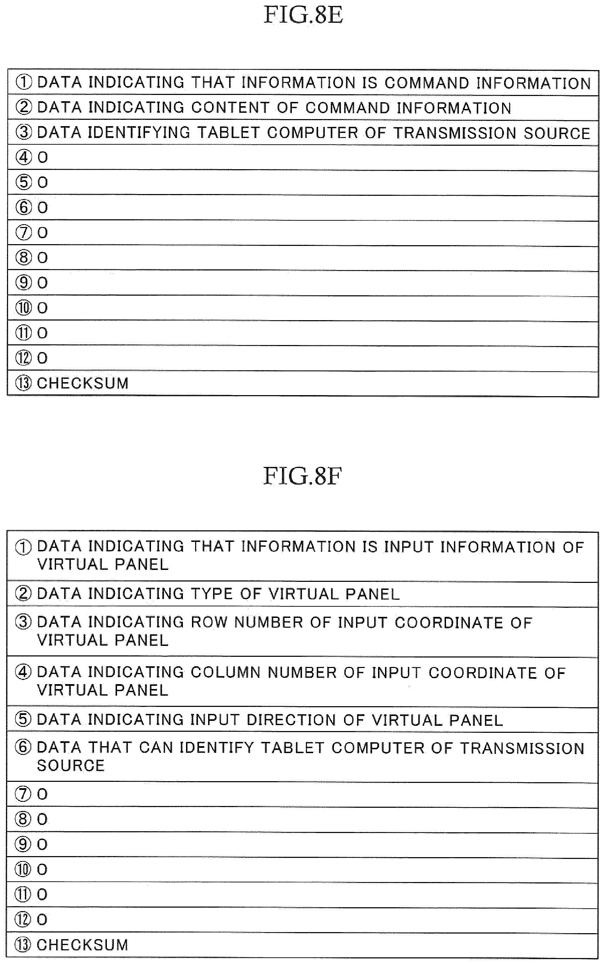

FIG. 8 is a diagram illustrating a data structure of communication according to Embodiment 1, FIG. 8A is a diagram explaining the data structure of communication, FIG. 8B is a diagram explaining a data structure of data transmitted from the mobile robot, FIG. 8C is a diagram explaining a data structure of communication when a rewrite parameter is transmitted toward the mobile robot, FIG. 8D is a diagram explaining a data structure of communication when operation instruction information is transmitted toward the mobile robot, FIG. 8E is a diagram explaining a data structure of communication when command information is transmitted and received between tablet computers, and FIG. 8F is a diagram explaining a data structure of communication when input information of a virtual panel is transmitted and received between the tablet computers;
FIG. 9 is a plan view illustrating a plurality of examples of a command panel according to Embodiment 1;
FIG. 10 is a plan view illustrating a plurality of examples of the command panel according to Embodiment 1;
FIG. 11 is a plan view illustrating an example of a plurality of command panels arranged in a traveling direction of the mobile robot according to Embodiment 1, FIG. 11A is a diagram illustrating a first example, and FIG. 11B is a diagram illustrating a second example;
FIG. 12 is a conceptual diagram illustrating aspect where a predetermined image is displayed at the tablet computer on the basis of command information according to Embodiment 1;
FIG. 13 is a conceptual diagram illustrating aspect where a learner observes an image while capturing the image of the mobile robot and its background using the tablet computer according to Embodiment 1;
FIG. 14 is a conceptual diagram illustrating a screen when a mobile robot operation parameter is rewritten and stored in the tablet computer according to Embodiment 1;
FIG. 15 is a conceptual diagram illustrating a screen when a mobile robot operation parameter of the original parameter is set at the tablet computer according to Embodiment 1;
FIG. 16 is a plan view schematically illustrating aspect where a competitive game is executed according to Embodiment 2;
FIG. 17 is a plan view illustrating a plurality of examples of a virtual panel according to Embodiment 2; and
FIG. 18 is a conceptual diagram illustrating an operation state of a tablet computer when the competitive game is executed according to Embodiment 2.

### DETAILED DESCRIPTION OF THE PREFERRED EMBODIMENTS

### [Embodiment 1 of the invention]

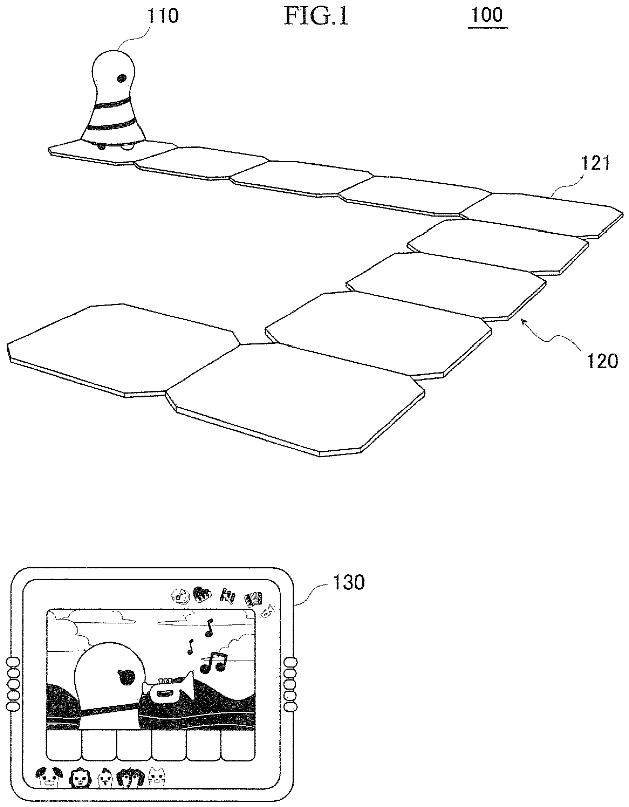

Embodiment 1 of the present invention will be described using FIG. 1 to FIG. 15.

FIG. 1 is a diagram schematically illustrating an overall configuration of a learning toy 100 according to Embodiment 1. As illustrated in FIG. 1, the learning toy 100 includes one mobile robot 110 as a "mobile body", a plurality of command panels 121 and a tablet computer 130 which is a "portable information processing terminal". Further, the plurality of command panels 121 are successively arranged to form a movement path 120. In these command panels 121, different kinds of command information which are commands of operation of the mobile robot 110 are recorded. The learner sequentially arranges the plurality of command panels 121 to form an arbitrary movement path 120 in accordance with operation which the learner wants the mobile robot 110 to perform. The mobile robot 110 reads the command information recorded in the command panels 121 while self-traveling on these command panels 121, and perform various kinds of operation in accordance with the command information.

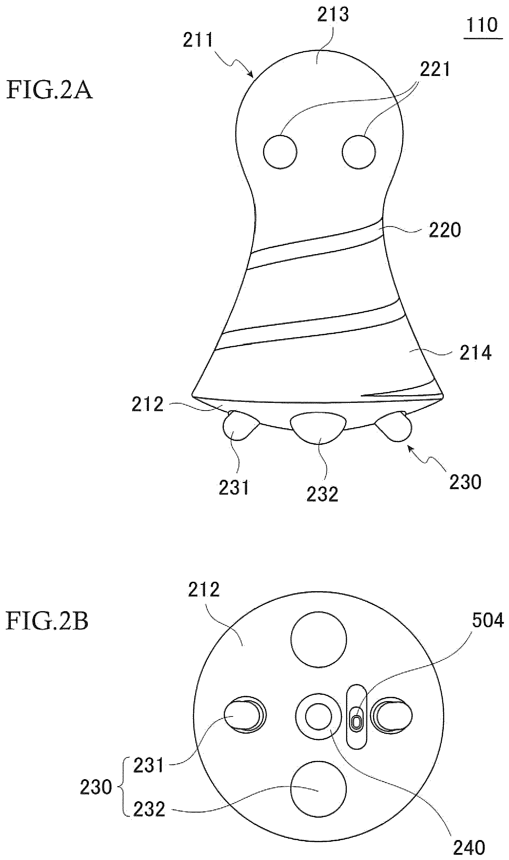

FIG. 2A and FIG. 2B are diagrams illustrating brief appearance of the mobile robot 110. This mobile robot 110 includes a body portion 211 and a bottom portion 212 and has a structure in which the body portion 211 and the bottom portion 212 are detachable. A light emitting portion 220 is formed around the body portion 211 in a spiral shape. Further, two front circular portions 221 are provided as design which imitates the eyes in the face. At the bottom portion 212, a moving mechanism 230 which is a "moving unit" for the mobile robot 110 to self-travel, and an optical reading module 240 which is a "reading unit" which reads the command information of the command panels 121 are provided.

The body portion 211 is preferably formed with a material with high safety such as, for example, a resin, and is formed with combination of a spherical portion 213 and a conical portion 214. However, this body portion 211 may have arbitrary shape, size, or the like.

The light emitting portion 220 is formed with a material with high safety such as, for example, a transparent resin. Within the body portion 211, an RGB light source 503 (for example, using an LED, not illustrated in FIG. 1 and FIG. 2) which is a "mobile body side light emitting unit" to cause the mobile robot 110 to emit light is provided. It is configured such that it seems as if this light emitting portion 220 emitted light by the RGB light source 503 emitting light. The RGB light source 503 is configured with LEDs of red, green and blue, and can cause the light emitting portion 220 of the mobile robot 110 to emit light of arbitrary color through combination of light of red, green and blue emitted from the RGB light source 503. In Embodiment 1, while the shape of the light emitting portion 220 is made a spiral shape as illustrated in FIG. 2A, this light emitting portion 220 may have an arbitrary shape.

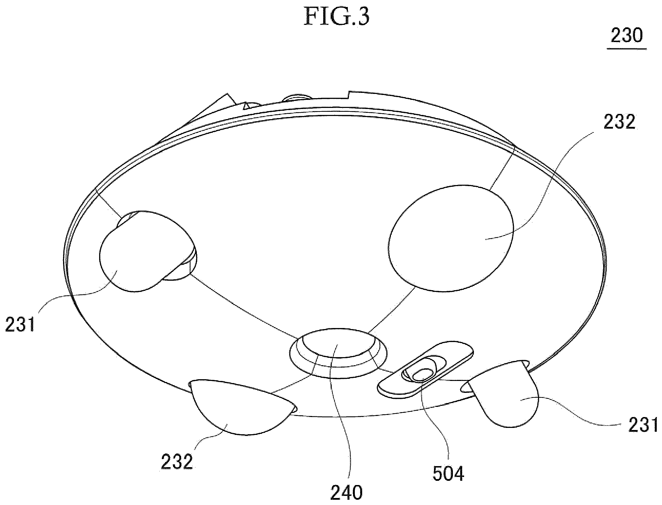

The bottom portion 212 is preferably formed with a material with high safety such as, for example, a resin, and has a convex surface which projects downward. However, the bottom portion 212 may have an arbitrary shape, or the like. FIG. 3 illustrates the moving mechanism 230 disposed at the bottom portion 212 in a state where the bottom portion 212 is removed from the body portion 211. FIG. 3 is a perspective view seen from obliquely below.

The moving mechanism 230 is a mechanism for causing this mobile robot 110 to move, rotate, or the like. This moving mechanism 230 includes a pair of rotating legs 231 and a pair of supporting balls 232 as illustrated in FIG. 2 and FIG. 3.

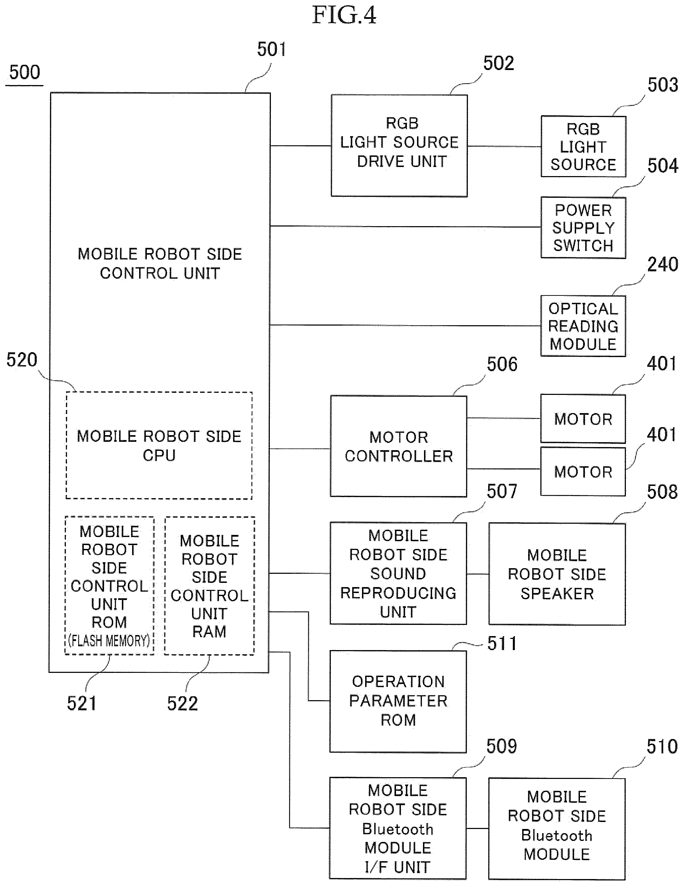

The pair of rotating legs 231 are disposed to project from portions near an outer edge of the bottom portion 212 in a state where the rotating legs 231 tilt outward. These rotating legs 231 are disposed at positions symmetric across the center of the bottom portion 212. Spherical surfaces formed at tips of these rotating legs 231 abut on a floor surface. Further, these rotating legs 231 are respectively connected to drive shafts (not illustrated) of a pair of motors 401 (see FIG. 4) disposed inside the body portion 211, and rotationally driven by these drive shafts.

The pair of supporting balls 232 is provided so as to freely rotate near the outer edge of the bottom portion 212 in a state where the supporting balls 232 project from this bottom portion 212. That is, these supporting balls 232 are merely held with holding members (not illustrated) provided on an upper side of the bottom portion 212 and do not have drive force. Further, the supporting balls 232 are reliably held inside the body portion 211. Because measures for safety are taken so that the supporting balls 232 never come out from pore diameters of the bottom portion 212 to outside, the supporting balls 232 never drop off, so that the learner can learn at ease. Further, these supporting balls 232 are disposed at positions approximately 90° from the rotating legs 231 in planar view (see FIG. 2B), and disposed at a height so as to abut on the floor surface at the same time as these rotating legs 231 (see FIG. 2A).

By the rotating legs 231 and the supporting balls 232 being disposed in this manner, it is possible to place the body portion 211 of the mobile robot 110 on the floor surface in a stable state without the body portion 211 tilting, and it is possible to make operation such as movement and rotation of the mobile robot 110 smooth. However, the moving mechanism 230 may have an arbitrary specific structure, and may have any structure if operation of moving forward and rotation can be performed.

The mobile robot 110 can go straight ahead, rotate, turn right, turn left, or the like, by individually performing rotation control of the pair of rotating legs 231. For example, in the case where it is desired to make the mobile robot 110 go straight ahead, it is only necessary to rotate the pair of rotating legs 231 in the same direction at the same rotation speed. Meanwhile, in the case where it is desired to rotate the mobile robot 110 on the spot without moving, it is only necessary to rotate the pair of rotating legs 231 in opposite directions at the same rotation speed. Further, if the pair of rotating legs 231 are all stopped, the moving mobile robot 110 stops.

The mobile robot 110 reads the command information recorded in the command panel 121 in a state where the mobile robot 110 is on the command panel 121, and performs desired operation on the basis of the read command information.

The optical reading module 240 of the mobile robot 110 is attached to a portion of a central position of the bottom portion 212 to face downward as illustrated in FIG. 2 and FIG. 3, and can read the command panel 121 which is located immediately below the optical reading module 240.

The optical reading module 240 is configured to be able to optically read the command information recorded in the command panel 121 using a scheme which uses a two-dimensional dot pattern (Japanese Patent No. 3829143, Japanese Patent No. 4054339) .

A two-dimensional dot pattern which corresponds to the command information on a one-to-one basis is printed on a surface of the command panel 121, and an optical sensor in two-dimensional array which is incorporated into this optical reading module 240 is configured to be able to optically detect an image of this dot pattern. From the read two-dimensional dot pattern, not only the command information, but also orientation of the command panel 121 can be detected. Therefore, it is possible to identify which direction the mobile robot 110 faces with respect to the command panel 121. Further, the two-dimensional dot pattern is small and printed so as not to be prominent.

With this method which uses a two-dimensional dot pattern, because it is possible to record a sufficiently large volume of data in the command panel 121, and it is possible to add the two-dimensional dot pattern in a state where the two-dimensional dot pattern is difficult to be visually recognized, this method is suitable as a method for the optical reading module 240 to read the command panel 121.

Note that the method for adding the command information to the command panel 121 is not particularly limited. For example, a method of optically reading a barcode, a two-dimensional code, or the like, a method of magnetically recording information, a method of using an IC (Integrated Circuit) chip, or the like, or other methods may be used. Further, the command information may be added to the surface of the command panel 121 through printing, or the like, or may be added to inside or back side of the command panel 121. That is, any method may be used if the mobile robot 110 can read the command information when the mobile robot 110 is located on the command panel 121.

A mobile robot side control circuit 500 as illustrated in FIG. 4 is disposed at the body portion 211 of the mobile robot 110.

This mobile robot side control circuit 500 includes a mobile robot side Bluetooth (registered trademark) module 510 which is a "mobile body side communication unit" that communicates the read command information with the tablet computer 130, an operation parameter ROM (Read Only Memory) 511 which is an "operation parameter storage unit", and a mobile robot side control unit 501 which is a "mobile body side control unit" that causes the mobile robot 110 to operate. Further, this mobile robot side control circuit 500 includes an RGB light source 503, and a mobile robot side speaker 508 which is a "mobile body side sound generating unit" that causes sound to be generated from this mobile robot 110. Further, functions of the mobile robot 110 are not limited to these, and other functions may be added.

The mobile robot side Bluetooth (registered trademark) module 510 is a module which enables transmission and reception of data through wireless communication with the tablet computer 130 having a Bluetooth (registered trademark) communication function. Note that, the wireless communication scheme is not limited to Bluetooth (registered trademark), and other wireless communication schemes such as Wi-Fi (registered trademark) can be used if the scheme enables communication between the mobile robot 110 and the tablet computer 130. Further, it is also possible to employ a configuration where the mobile robot 110 and the tablet computer 130 perform communication in a wired manner.

As the operation parameter ROM 511, a flash memory is used. The flash memory is a non-volatile memory in which data can be electrically rewritten, and the data is stored even if the mobile robot 110 is powered off. Note that other types of memories such as an EEPROM (Electrically Erasable Programmable Read-Only Memory) can be used if the memory is a non-volatile memory. Note that the flash memory is also called a flash ROM. In the operation parameter ROM 511, a mobile robot operation parameter 600 which is a "mobile body operation parameter" that determines content of operation of the mobile robot 110 based on the command information is stored.

The mobile robot operation parameter 600 has a structure in which, for example, 10 parameters are successively arranged as illustrated in FIG. 5A. In one parameter, numerical values from 0 to 255 which can express one byte (eight bits) can be stored. Of course, a storage region of the mobile robot operation parameter 600 may have other structures. There are a plurality of mobile robot operation parameters 600 so as to correspond to respective pieces of the command information on a one-to-one basis, and memory regions are secured for each command information by segmenting the operation parameter ROM 511 with addresses. Further, a parameter of an arbitrary address of the operation parameter ROM 511 can be written and read out, and the written parameter is stored even if the mobile robot 110 is powered off. Note that details of the mobile robot operation parameter 600 will be described later.

Further, the operation parameter ROM 511 may realize its functions by a mobile robot side control unit ROM (flash memory) 521 which will be described later.

As illustrated in FIG. 4, to the mobile robot side control unit 501, an RGB light source drive unit 502, a power supply switch 504, the optical reading module 240, a motor controller 506, a mobile robot side sound reproducing unit 507 and a mobile robot side Bluetooth (registered trademark) module I/F unit 509 are connected.

The mobile robot side control unit 501 is configured with a mobile robot side CPU (Central Processing Unit) 520 which performs processing in accordance with a program that controls connected electronic components, a mobile robot side control unit ROM (flash memory) 521 which holds a program and data for causing the mobile robot side CPU 520 to operate, a mobile robot side control unit RAM (Random Access Memory) 522 which temporarily holds data necessary for operation of the mobile robot side CPU 520, or the like. While a flash memory is used as the mobile robot side control unit ROM (flash memory) 521, and an SRAM (Static Random Access Memory) is used as the mobile robot side control unit RAM 522, other types of memories may be used.

The mobile robot side control unit 501 causes the mobile robot 110 to execute operation by controlling the RGB light source drive unit 502, the motor controller 506, the mobile robot side sound reproducing unit 507 and the mobile robot side Bluetooth (registered trademark) module I/F unit 509 on the basis of the command information received from the optical reading module 240.

The RGB light source drive unit 502 can adjust strength of light emission of red, green and blue to change color of light emitted from the RGB light source 503 by changing voltages to be applied to the respective LEDs of red, green and blue of the RGB light source 503 to successive rectangular shapes by pulse width modulation on the basis of control by the mobile robot side control unit 501 so that a light emission time period during which the RGB light source 503 is caused to blink is changed. However, the strength of the light emission of the respective LEDs of red, green and blue of the RGB light source 503 may be adjusted by controlling voltages to be applied. Further, the RGB light source drive unit 502 supplies a current flowing through the RGB light source 503. As described above, the RGB light source 503 causes the light emitting portion 220 of the mobile robot 110 to emit light of predetermined color on the basis of control by the mobile robot side control unit 501.

The power supply switch 504 is a switch for powering on/off the mobile robot 110, but is not essential. This power supply switch 504 is preferably disposed at a location of the body portion 211 or the bottom portion 212 of the mobile robot 110, where the power switch 504 is not prominent.

The optical reading module 240 detects the command information and a direction of the mobile robot 110 with respect to the command panel 121 from the optical information read by this optical reading module 240 and transmits the command information and the direction to the mobile robot side control unit 501.

The motor controller 506 drives a pair of motors 401 on the basis of control by the mobile robot side control unit 501. As described above, rotation speed and rotation directions of these motors 401 are individually determined in accordance with the command information of the corresponding command panel 121.

The mobile robot side sound reproducing unit 507 causes the mobile robot side speaker 508 to reproduce sound on the basis of control by the mobile robot side control unit 501. Types, scales, or the like, of sound to be reproduced by the mobile robot side speaker 508 are determined in accordance with the command information of the corresponding command panel 121.

The mobile robot side Bluetooth (registered trademark) module I/F unit 509 exerts a function as an interface between the mobile robot side control unit 501 and the mobile robot side Bluetooth (registered trademark) module 510. The mobile robot side control unit 501 can perform communication with the tablet computer 130 by being through the mobile robot side Bluetooth (registered trademark) module I/F unit 509 without particularly making the leaner conscious of hardware or protocol of wireless communication.

In addition to such a mobile robot side control circuit 500, a battery (not illustrated), or the like, is also held in the body portion 211. A type of the battery is not limited, and, for example, the battery may be a dry cell, a rechargeable battery, or the like.

Note that, while not illustrated in FIG. 4, it is also possible to connect an acceleration sensor, a microphone for sound recording, or the like, to the mobile robot side control circuit 500, and cause the mobile robot 110 to execute more complicated operation.

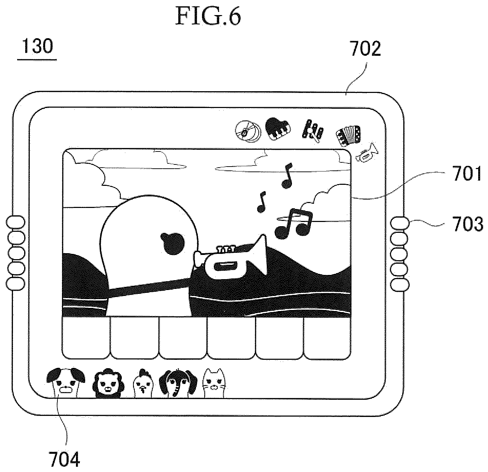

FIG. 6 is a schematic diagram of the tablet computer 130. On a surface of the tablet computer 130, a liquid crystal screen with a touch panel 701 in which a liquid crystal screen which is a "terminal side display unit" and a touch panel which is a "terminal side input unit" which allows the learner to perform input are integrated, is provided. The learner can see an image displayed on the liquid crystal screen with the touch panel 701 and can perform input to the tablet computer 130 by touching the liquid crystal screen with the touch panel 701 with his/her finger. Note that, the device is not limited to the tablet computer 130, and a smartphone, a portable information terminal (PDA), or a personal computer, or the like, may be used if the device has a function of being able to perform communication with the mobile robot 110 and a function of being able to display an image and generate sound. Further, the tablet computer 130 may be developed and manufactured as exclusive goods or one which is commonly distributed and easily available may be used. Further, as the display unit, other than a liquid crystal display, other devices such as an organic EL display may be used.

As illustrated in FIG. 6, the tablet computer 130 has a structure such that the tablet computer 130 is covered with a rubber guard 702 so that the tablet computer 130 is difficult to be broken down even if the tablet computer 130 drops. Further, grip portions 703 are formed at the central portions of both ends of the guard 702 of the tablet computer 130 so that even children can easily handle the tablet computer 130. Still further, a design display unit 704 is provided at a lower left portion on the surface of the tablet computer 130, and pictures of animals such as a dog, a lion, a chicken, an elephant and a cat are printed to provide display which is friendly to children.

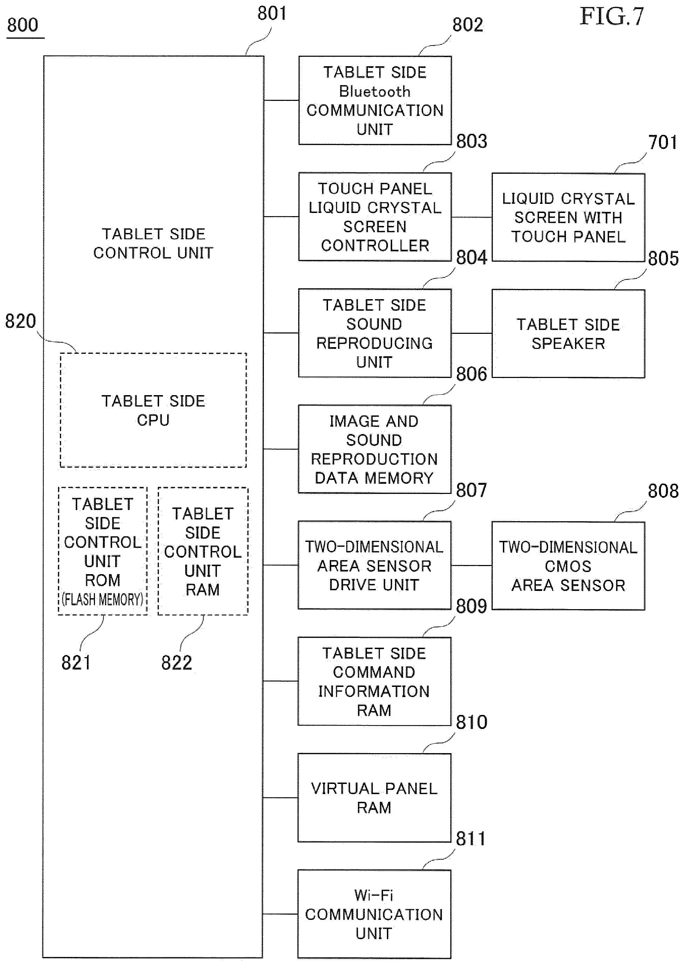

FIG. 7 illustrates a block diagram of the tablet side control circuit 800 which is incorporated into the tablet computer 130.

This tablet side control circuit 800 includes a tablet side Bluetooth (registered trademark) communication unit 802 which is a "first terminal side communication unit", the liquid crystal screen with the touch panel 701, a touch panel liquid crystal screen controller 803 which controls this liquid crystal screen with the touch panel 701, a tablet side speaker 805 which is a "terminal side sound generating unit", and a tablet side sound reproducing unit 804 which causes sound to be generated from this tablet side speaker 805.

Further, the tablet side control circuit 800 includes a tablet side control unit 801 which is a "terminal side control unit" which causes an image to be displayed at the liquid crystal screen with the touch panel 701 or causes sound to be generated from the tablet side speaker 805.

Further, the tablet side control circuit 800 includes an image and sound reproduction data memory 806 which is an "image and sound reproduction data holding unit" of data which stores an image and sound to be reproduced from the liquid crystal screen with the touch panel 701 and the tablet side speaker 805.

Still further, the tablet side control circuit 800 includes a two-dimensional CMOS (Complementary Metal-Oxide Semiconductor) area sensor 808 which is an "imaging unit" which is capable of capturing an image of the mobile robot 110 and a two-dimensional area sensor drive unit 807 which is capable of activating this two-dimensional CMOS area sensor 808 to read out the captured image data.

Still further, the tablet side control circuit 800 includes a tablet side command information RAM 809 which is a "first terminal side storage unit" which stores a plurality of pieces of command information transmitted from the mobile robot 110 and received by the tablet computer 130.

Further, the tablet side control circuit 800 includes a virtual panel RAM 810 which is a "second terminal side storage unit" which stores types, input positions and input directions of a plurality of virtual panels 122 input by the learner to the liquid crystal screen with the touch panel 701.

Here, the virtual panel 122 is a virtual panel which can be input by the learner to the liquid crystal screen with the touch panel 701. It is possible to cause the mobile robot 110 to perform desired operation by inputting operation instruction information which is a command of operation of the mobile robot 110 to the liquid crystal screen with the touch panel 701 in place of the command information recorded in the command panel 121 and the command sheet 125. On the liquid crystal screen with the touch panel 701, an image of a picture which is similar to the picture printed on the surface of the command panel 121 is displayed so that the learner can recognize the operation instruction information, and the learner can recognize and input the operation instruction information using this image of the picture as a mark. This image whose picture is similar to that on the command panel 121 is referred to as the virtual panel 122. The virtual panel 122 has one-to-one correspondence relationship with the operation instruction information, and provides similar effects to those provided by the operation instruction information being input, by setting the virtual panel 122. Further, both the command information and the operation instruction information are commands of operation of the mobile robot 110, and if the pictures on the command panel 121 and the virtual panel 122 are the same, the commands of the operation of the mobile robot 110 are also the same. That is, if the pictures are the same, the mobile robot 110 performs the same operation. The reason why the information has different names as the command information and the operation instruction information is that, while the command information is information recorded in the command panel 121 or the command sheet 125 and read by the mobile robot 110 from the command panel 121 or the command sheet 125, the operation instruction information is information which is input to the liquid crystal screen with the touch panel 701, has one-to-one correspondence relationship with the virtual panel 122 and is transmitted from the tablet computer 130 toward the mobile robot 110, that is, there is a difference in routes. To clarify this difference, the information is differently named as the command information and the operation instruction information.

Further, if the input direction of the virtual panel 122 is determined, a traveling direction of the mobile robot 110 is determined on the basis of orientation of the input virtual panel 122. Therefore, the learner can designate the direction in which the learner desires to cause the mobile robot 110 to travel by selecting the input direction of the virtual panel 122 and can cause the mobile robot 110 to travel in the direction.

Note that, while the operation instruction information associated with the virtual panel 122 is the same, four types of virtual panels 122 indicating respective four directions among front, back, left and right directions may be prepared. By this means, the learner can cause the mobile robot 110 to travel in a desired traveling direction by selecting the type of the virtual panel 122 and the input position of the virtual panel 122. In this case, it is not necessary to select the input direction of the virtual panel 122.

Further, the tablet side control circuit 800 includes a Wi-Fi communication unit 811 which is a "second terminal side communication unit" which enables communication among a plurality of tablet computers 130.

As illustrated in FIG. 7, to the tablet side control unit 801, a tablet side Bluetooth (registered trademark) communication unit 802, a touch panel liquid crystal screen controller 803, a tablet side sound reproducing unit 804, an image and sound reproduction data memory 806, a two-dimensional area sensor drive unit 807, a tablet side command information RAM 809, a virtual panel RAM 810 and a Wi-Fi communication unit 811 are connected, and, by controlling these, the tablet computer 130 is caused to execute desired operation.

The tablet side control unit 801 is configured with a tablet side CPU 820 which performs processing in accordance with a program controlling connected electronic components, a tablet side control unit ROM (flash memory) 821 which holds a program and data for causing the tablet side CPU 820 to perform operation, a tablet side control unit RAM 822 which temporarily holds data necessary for operation of the tablet side CPU 820, or the like. A flash memory is used as the tablet side control unit ROM (flash memory) 821, and an SRAM and a DRAM (Dynamic Random Access Memory) is used as the tablet side control unit RAM 822. Note that a memory used as the tablet side control unit ROM (flash memory) 821 may be other types of memories such as an EEPROM and a hard disk, and a memory used as the tablet side control unit RAM 822 may be other types of memories.

The tablet side Bluetooth (registered trademark) communication unit 802 is configured to enable communication between the tablet computer 130 and the mobile robot 110 and transmission and reception of data on the basis of control by the tablet side control unit 801.

FIG. 8A illustrates an example of a data structure of communication transmitted and received between the tablet computer 130 and the mobile robot 110. FIG. 8A illustrates, for example, a data structure in which 13 regions each including one byte (eight bits) are successively arranged. As illustrated in FIG. 8A, information of a tag indicating a type of data is stored in a first region. For example, it is possible to recognize that this communication data holds the command information by a numerical value indicating the command information being stored in this region. In a second region, information indicating content of the data is stored. For example, numerical values which correspond to the respective pieces of command information on a one-to-one basis are stored in this region so that content of the command information can be identified. Third to twelfth regions are data regions which can be used to indicate arbitrary content. For example, a parameter, or the like, which specifies operation of the mobile robot 110 with respect to each command information is stored in this region. In a last region, a result obtained by calculating checksum is stored. As a calculation method of the checksum, to easily calculate the checksum, it is only necessary to obtain a numerical value of lower-order one byte in the numerical value obtained by adding data in the first to twelfth regions. It is possible to detect whether an error occurs in the process of communication by confirming whether the checksum of the transmitted data structure matches the checksum of the received data structure.

In the mobile robot 110 according to Embodiment 1, a data structure of communication transmitted from the mobile robot 110 and received by the tablet computer 130 and a data structure of communication transmitted from the tablet computer 130 and received by the mobile robot 110 are the same. By making the data structures the same in this manner, mistakes upon development and improvement of the learning toy 100 are reduced, so that it is possible to contribute to improvement of development efficiency.

Note that, while it is necessary to use the same wireless communication scheme at the tablet computer 130 and the mobile robot 110, the wireless communication scheme is not limited to Bluetooth (registered trademark), and it is also possible to employ a configuration where other wireless communication schemes such as Wi-Fi are used. Further, it is also possible to employ a configuration where the tablet computer 130 and the mobile robot 110 perform communication in a wired manner.

The touch panel liquid crystal screen controller 803 activates the liquid crystal screen with the touch panel 701, displays an image on the liquid crystal screen and detects a signal input to the touch panel from the learner on the basis of control by the tablet side control unit 801, so that this signal can be read by the tablet side control unit 801.

The tablet side sound reproducing unit 804 causes the tablet side speaker 805 to reproduce sound on the basis of control by the tablet side control unit 801. A type, a scale, or the like, of the sound to be reproduced by the tablet side speaker 805 are determined among those stored in the image and sound reproduction data memory 806 on the basis of the command information.

In the image and sound reproduction data memory 806, a plurality of image and sound data files which are "reproduction data" of images to be displayed on the liquid crystal screen with the touch panel 701 of the tablet computer 130, and sound to be generated from the tablet side speaker 805 are stored. In the image and sound data file, data for reproducing a moving image of an image and sound is recorded in an MP4 file format. However, the file format may be a format other than MP4, such as AVI, MOV and MPEG-2. Further, the reproduction data may be a still image. As the file format in this case, PNG, JPEG, GIF, or the like, can be used. The image and sound data file to be reproduced is determined by the tablet side control unit 801 from the plurality of image and sound data files stored in the image and sound reproduction data memory 806 on the basis of the command information. While a flash memory is used as the image and sound reproduction data memory 806, other non-volatile memories may be used. Further, the image and sound reproduction data memory 806 may implement its functions by the tablet side control unit ROM (flash memory) 821. Further, instead of being incorporated into the tablet computer 130, the image and sound reproduction data memory 806 may be realized by a plurality of image and sound data files being stored in an external memory such as an SD card and a USB memory and this external memory being loaded to the tablet computer 130.

The two-dimensional area sensor drive unit 807 activates the two-dimensional CMOS area sensor 808 incorporated into the tablet computer 130 on the basis of control by the tablet side control unit 801, to capture an image by causing the CMOS area sensor to receive light of the image from outside, and perform A/D conversion on a received light signal. By this means, an analog signal is converted into digital data, and the image data thereof can be read into a DRAM which is the tablet side control unit RAM 822. The tablet side control unit 801 can perform image processing on the read image data. Further, it is also possible to cause an image processed by the tablet side control unit 801 to be displayed on the liquid crystal screen with the touch panel 701. Note that, as the two-dimensional CMOS area sensor 808, it is also possible to use sensors of types other than the CMOS area sensor, such as a CCD (Charged-Coupled Device) area sensor.

The tablet side command information RAM 809 can sequentially store a plurality of pieces of command information transmitted from the mobile robot 110 and received by the tablet side Bluetooth (registered trademark) communication unit 802 on the basis of control by the tablet side control unit 801. All the pieces of the command information which are read by the mobile robot 110 are transmitted from the mobile robot 110 toward the tablet computer 130, and all the command information is received by the tablet computer 130. The tablet side control unit 801 sequentially stores all the command information in the tablet side command information RAM 809. Of course, it is not necessary to store all the command information transmitted from the mobile robot 110, and only the selected plurality of pieces of the command information may be stored. By the command information read by the mobile robot 110 being stored in the tablet side command information RAM 809, the tablet side control unit 801 not only can detect current operation of the mobile robot 110 but also can read out the command information from the past to the present at any time, so that it is possible to reproduce what kind of operation the mobile robot 110 has performed in the past. Further, the tablet side control unit 801 can change an image to be displayed at the liquid crystal screen with the touch panel 701 or sound to be generated from the tablet side speaker 805 on the basis of combination of a plurality of pieces of command information. While an SRAM is used as the tablet side command information RAM 809, other types of memories may be used. Further, the tablet side command information RAM 809 may realize its functions by the tablet side control unit RAM 822.

The virtual panel RAM 810 can sequentially store types of a plurality of virtual panels 122 to be input to the liquid crystal screen with the touch panel 701 by the learner, input coordinate which is input positions of the virtual panels 122 in a region where the virtual panel 122 can be input defined in advance, and input directions of the virtual panels 122 in the region where the virtual panel 122 can be input on the basis of control by the tablet side control unit 801.

The region where the virtual panel 122 can be input is a region where a plurality of command panels 121 or command sheets 125 are paved in a rectangular region, and which is displayed as an image on the liquid crystal screen with the touch panel 701 which has correspondence relationship with the rectangular region on which the mobile robot 110 can move. A position in the rectangular region on which the mobile robot 110 can move has one-to-one correspondence relationship with a position in the region where the virtual panel 122 can be input. That is, by inputting the virtual panel 122 at a position in the region where the virtual panel 122 can be input, which is displayed on the liquid crystal screen with the touch panel 701, it is possible to provide effects similar to those obtained by disposing the virtual panel 122 at a position in the rectangular region on which the mobile robot 110 can move, which has one-to-one correspondence relationship with the region where the virtual panel 122 can be input.

For example, it is assumed that the mobile robot 110 can move on a region where the plurality of command panels 121 or command sheets 125 are arranged so as to constitute a square region of seven rows and seven columns. By displaying an image of a grid-shape of a total of 49 positions from a position in the first row, in the first column to a position in the seventh row, in the seventh column as respectively corresponding coordinate positions from a coordinate position corresponding to the position in the first row, in the first column to a coordinate position corresponding to the position in the seventh row, in the seventh column, on the liquid crystal screen with the touch panel 701, it is possible to display the region where the virtual panel 122 can be input. By this means, it is possible to associate coordinate positions in the square region where the mobile robot 110 can move with coordinate positions in the region where the virtual panel 122 can be input, displayed on the liquid crystal screen with the touch panel 701 on a one-to-one basis.

Note that three types of a region of seven rows and seven columns, a region of 13 rows and 13 columns, and a region of 21 rows and 21 columns are prepared in advance as the region where the virtual panel 122 can be input. The learner can select one type among these three types before starting learning using this learning toy 100. However, a size of the region where the virtual panel 122 can be input is not limited to these three types, and can be arbitrarily set.

Note that the rectangular region in which the plurality of command panels 121 or the command sheets 125 are paved and on which the mobile robot 110 can move corresponds to a "region where a plurality of command panels 121 or command sheets 125 are arranged". This region where the mobile robot 110 can move is not limited to a rectangular region, and may have other shapes.

When the learner inputs a type of the virtual panel 122 and a direction of the virtual panel 122 at an arbitrary coordinate position in the region where the virtual panel 122 can be input, displayed on the liquid crystal screen with the touch panel 701, this input signal is detected by the tablet side control unit 801 through the touch panel liquid crystal screen controller 803. The tablet side control unit 801 causes a row number and a column number which are input coordinate in the region where the virtual panel 122 can be input, a type of the input virtual panel 122 and a direction of the input virtual panel 122 to be stored in the virtual panel RAM 810. The tablet side control unit 801 reads out a type and a direction of the virtual panel 122 input at an arbitrary coordinate position in the region where the virtual panel 122 can be input by sequentially reading out row numbers and column numbers in the region where the virtual panel 122 can be input from the virtual panel RAM 810 and reading out a type and a direction of the virtual panel 122 in a storage region whose row number and column number match the row number and the column number of the coordinate position to be read out.

While an SRAM is used as the virtual panel RAM 810, other types of memories may be used. Further, the virtual panel RAM 810 may realize its functions by the tablet side control unit RAM 822.

The Wi-Fi communication unit 811 enables communication among a plurality of tablet computers 130 and enables transmission and reception of data on the basis of control by the tablet side control unit 801. A data structure of communication among the plurality of tablet computers 130 by the Wi-Fi communication unit 811 is similar to that illustrated in FIG. 8A. The data structure of communication illustrated in FIG. 8A is the same as a data structure of communication between the tablet computer 130 and the mobile robot 110 by the above-described tablet side Bluetooth (registered trademark) communication unit 802. By making the data structures of communication the same, mistakes upon development and improvement of the learning toy 100 is reduced, so that it is possible to contribute to improvement of development efficiency. However, the data structure of communication illustrated in FIG. 8A is an example, and other data structures may be of course employed.

In communication among the plurality of tablet computers 130, the command information which is read by the mobile robot 110 from the command panel 121 or the command sheet 125, and which is transmitted from the mobile robot 110 toward the tablet computer 130, input information including a type of the virtual panel 122 input to the liquid crystal screen with the touch panel 701, a row number and a column number constituting input coordinate which is an input position in the region where the virtual panel 122 can be input and an input direction in the region where the virtual panel 122 can be input, or the like, are transmitted and received.

Note that, by preparing four types of virtual panels 122 which respectively indicate four directions of front, back, left and right directions in advance, it is possible to determine the traveling direction of the mobile robot 110 by selecting one type among the four types of virtual panels 122 without inputting the input direction of the virtual panel 122. By this means, it is possible to remove the input direction of the virtual panel 122 from the input information.

In the case where the command information is transmitted and received, by a numerical value indicating the command information being stored in a first region illustrated in FIG. 8A, it can be recognized that communication data holds the command information. Further, in a second region, a numerical value which corresponds to each piece of the command information on a one-to-one basis is stored so that content of each piece of the command information can be identified. In a third region, a numerical value which enables identification of the tablet computer 130 which is a transmission source is stored. This numerical value is utilized to specify the tablet computer 130 of the transmission source by the numerical value stored in this third region being detected, because communication is performed among the plurality of tablet computers 130. By specifying the tablet computer 130 of the transmission source, it is possible to detect a position, or the like, of the mobile robot 110 which is paired with the specified tablet computer 130 on the basis of the transmitted command information. In fourth to twelfth regions, arbitrary numerical values are stored. In a last region, a result obtained by calculating checksum is stored.

Meanwhile, in the case where the input information of the virtual panel 122 is transmitted and received, by a numerical value indicating the input information of the virtual panel 122 being stored in a first region illustrated in FIG. 8A, it can be recognized that the communication data holds the input information of the virtual panel 122. Further, in a second region, a numerical value which corresponds to each virtual panel 122 on a one-to-one basis is stored that a type of each virtual panels 122 can be identified. Still further, in a third region, a row number as input coordinate in the region where the virtual panel 122 can be input is stored. In a fourth region, a column number as the input coordinate in the region where the virtual panel 122 can be input is stored. In a fifth region, a numerical value indicating the input direction of the virtual panel 122 in the region where the virtual panel 122 can be input is stored. In a sixth region, a numerical value which enables identification of the tablet computer 130 which is the transmission source is stored. This numerical value is utilized to specify the tablet computer 130 of the transmission source by the numerical value stored in this sixth region being detected, because communication is performed among the plurality of tablet computers 130. By specifying the tablet computer 130 of the transmission source, it is possible to detect a type, input coordinate, an input direction, or the like, of the virtual panel 122 input to the specified tablet computer 130 on the basis of the transmitted input information of the virtual panel 122. In seventh to twelfth regions, arbitrary numerical values are stored. In a last region, a result obtained by calculating checksum is stored.

Further, the tablet computer 130 can be connected to the Internet by connecting to a wireless LAN router via the Wi-Fi communication unit 811. Therefore, it is possible to perform communication with the tablet computers 130 of learners in remote locations, so that the learners in the remote locations can learn using this learning toy 100 while sharing data.

Further, by connecting the tablet computer 130 to the Internet, it is possible to download and capture firmware which is a control program of the tablet computer 130, various kinds of programs of application software and various kinds of data. By this means, it is possible to update the tablet computer 130 to the latest condition.

Note that, while it is necessary to use the same wireless communication scheme at the plurality of tablet computers 130, the wireless communication scheme is not limited to Wi-Fi, and it is also possible to employ a configuration where other wireless communication schemes such as Bluetooth (registered trademark) are used. Further, it is also possible to employ a configuration where the tablet computers 130 perform communication in a wired manner.

While not illustrated in FIG. 7, a rechargeable battery which is a battery is incorporated into the tablet computer 130, and power is supplied to the tablet side control circuit 800, or the like. A type of the battery is not limited, and, for example, a dry cell battery may be used.

Further, while not illustrated in FIG. 7, it is also possible to connect a GPS module, an acceleration sensor, a gyro sensor, a microphone for sound recording, or the like, to the tablet computer 130, so that the tablet computer 130 can execute more complicated operation.

The command panel 121 will be described next.

The command panel 121 has a shape in which corner portions of a square plate are cut out. By the command panel 121 having the shape in which the corner portions of the square are cut out, even if the command panels 121 are tightly arranged in a planar shape, because voids through which a finger can enter are formed at portions of the corner portions of the command panel 121, an advantage that even the command panel 121 arranged inside a plane can be easily taken out is provided. Further, because an angle of the corner portion becomes an obtuse angle, even if the command panel 121 drops and the corner portion is hit, the command panel 121 is less likely to be broken, so that it is possible to prevent children from getting injured, such as getting scratched.

Further, the command panel 121 is preferably formed with a material with high safety, such as, for example, a resin.

Different pieces of command information are respectively recorded in the command panels 121. As described above, a two-dimensional dot pattern which corresponds to the command information on a one-to-one basis is printed on the surface of the command panel 121 and detected by the optical reading module 240. Because the command information cannot be directly recognized by the learner, a picture displaying operation of the mobile robot 110 based on the command information is drawn on the command panel 121, so that the learner can recognize the command information through this picture. The picture drawn on the command panel 121 is preferably a picture which gives the learner an image of the command information.

Further, the same command information may be recorded on the surface and the back side of the command panel 121, or different command information may be recorded.

The pictures drawn on the command panels 121 and operation of the mobile robot 110 based on the command information corresponding to the pictures will be described next.

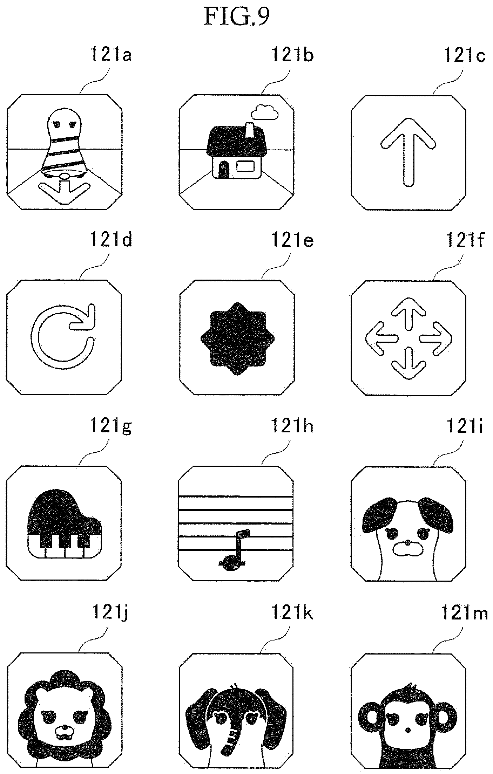

FIG. 9 illustrates pictures of part of the command panels 121. Displays of the pictures in FIG. 9 are an example, and the command information may be displayed using pictures other than these pictures.

As described above, the mobile robot 110 detects the two-dimensional dot pattern printed on the surface of the command panel 121 with the optical reading module 240 to read the command information. The mobile robot side control unit 501 reads out a program which specifies operation of the mobile robot 110, which corresponds to the read command information on a one-to-one basis from the mobile robot side control unit ROM (flash memory) 521, executes the program and causes the mobile robot 110 to perform desired operation.

A command panel 121a illustrated in FIG. 9 is a panel including command information for causing the mobile robot 110 to start movement, and is disposed at a start point of the movement path 120. The mobile robot 110 placed on this command panel 121a starts movement in a direction of an arrow indicated in a picture of this command panel 121a. The mobile robot side control unit 501 first activates the moving mechanism 230 so as to make the direction of the mobile robot 110 the same as the direction of the arrow indicated in the picture of this command panel 121a and, then, activates the moving mechanism 230 to cause the mobile robot 110 to move forward in the direction.

A command panel 121b includes command information for causing the mobile robot 110 to stop movement, and is disposed at a goal point of the movement path 120. The mobile robot side control unit 501 stops the moving mechanism 230 on this command panel 121b. Note that, it is also possible to cause the mobile robot 110 to perform a plurality of types of operation on the basis of the command information included in one command panel 121b, for example, causing the mobile robot 110 to reproduce fanfare sound and causing the light emitting portion 220 of the mobile robot 110 to emit light at the same time as causing the mobile robot 110 to stop.

A command panel 121c includes command information for determining the traveling direction of the mobile robot 110. For example, in the case where this command panel 121c is disposed so that a direction of an arrow printed on this command panel 121c is the same direction as the traveling direction of the mobile robot 110, the mobile robot 110 goes straight ahead. Meanwhile, in the case where this command panel 121c is disposed so that the direction of the arrow printed on this command panel 121c points to a right direction, the mobile robot 110 turns right at a central portion of this command panel 121c. In a similar manner, in the case where this command panel 121c is disposed so that the direction of the arrow printed on this command panel 121c points a left direction, the mobile robot 110 turns left at the central portion of this command panel 121c.

A command panel 121d includes command information for causing the mobile robot 110 to rotate one revolution on the command panel 121d.

A command panel 121e includes command information for causing the light emitting portion 220 of the mobile robot 110 to emit light of predetermined color. The mobile robot side control unit 501 causes the RGB light source 503 to emit light of desired color by controlling the RGB light source drive unit 502. Further, it is also possible to cause the RGB light source 503 to blink as well as light as the light emission state. For example, it is possible to make setting so as to cause the light emitting portion 220 of the mobile robot 110 to emit light in color in accordance with a picture, for example, in the case where a picture of the command panel 121e is red, the light emitting portion 220 is caused to emit red light, and, in the case where the picture is blue, the light emitting portion 220 is caused to emit blue light. Color of light emitted by the light emitting portion 220 can be switched every time the mobile robot 110 passes through central portions on the command panels 121e corresponding to different colors of light emission.

A command panel 121f includes command information for causing the mobile robot 110 to determine the traveling direction of the mobile robot 110 in accordance with the light emitted from the light emitting portion 220. An up arrow is displayed in blue, a left arrow is displayed in red, a down arrow is displayed in green, and a right arrow is displayed in yellow. For example, it is possible to cause the mobile robot 110 to determine the traveling direction such that, when the mobile robot 110 reaches the central portion on the command panel 121f, if the light emitting portion 220 emits red light, the mobile robot 110 goes straight, if the light emitting portion 220 emits blue light, the mobile robot 110 turns right, if the light emitting portion 220 emits yellow light, the mobile robot 110 goes backward, and if the light emitting portion 220 emits green light, the mobile robot 110 turns left. While four arrows are drawn on this command panel 121f, it is desirable that colors of respective arrows are set so as to match respective traveling directions. That is, the command panel 121f corresponds to an "IF" sentence (that is, a branch instruction) in programing language. In this manner, the mobile robot 110 according to Embodiment 1 can execute one operation on the basis of combination of the command information included in two command panels 121e and 121f.

Here, for example, in the case where, although the command panel 121e for causing the light emitting portion 220 of the mobile robot 110 to emit light in blue is disposed in front of the command panel 121f, the command panel 121 is not disposed on the right side of the command panel 121f for determining the traveling direction (that is, in a direction in which the mobile robot 110 travels when blue light is emitted), this mobile robot 110 deviates from the movement path 120. In such a case, the mobile robot 110 is caused to perform error operation. As the error operation, for example, it is possible to employ operation of stopping movement while producing error sound when the mobile robot 110 deviates from the movement path 120.

Further, for example, in the case where the mobile robot 110 reaches the central portion of the command panel 121f for determining the traveling direction although the mobile robot 110 does not pass through the command panel 121e for light emission, the mobile robot 110 may stop at the command panel 121f and produce error sound.

A command panel 121g includes command information for causing the mobile robot 110 to set an instrument for reproduction sound. While, on this command panel 121g, a picture of a piano is drawn, and piano sound is set as the reproduction sound, it is, of course, possible to provide command panels 121 for setting other instruments such as a trumpet, a xylophone and an accordion. Note that the command information of this command panel 121g merely causes the mobile robot 110 to set an instrument of reproduction sound and does not cause the mobile robot 110 to reproduce sound.

A command panel 121h includes command information for causing the mobile robot 110 to output reproduction sound of a predetermined scale. The mobile robot side control unit 501 controls the mobile robot side sound reproducing unit 507 to cause a desired scale to be generated from the mobile robot side speaker 508. While this command panel 121h is an example of a reproduction scale of "do", it is, of course, possible to provide command panels 121 for setting other scales. In this manner, the mobile robot 110 according to Embodiment 1 can execute one sound reproduction operation on the basis of combination of the command information included in the two command panels 121g and 121h. Further, by arranging a plurality of command panels 121 including command information for outputting reproduction sound of predetermined scales after the command panel 121g, it is also possible to cause desired melody to be reproduced in piano sound. Still further, movement speed of the mobile robot 110 may be made faster when the mobile robot 110 passes on these pluralities of command panels 121. Meanwhile, instead of the mobile robot 110 reproducing sound while moving, the mobile robot 110 may sequentially store scales when passing through the command panels 121 for outputting scales and may reproduce melody constituted with these scales the predetermined number of times when the mobile robot 110 reaches the command panel 121b at the goal point.

A command panel 121i includes command information for causing the mobile robot 110 to reproduce bark of a dog from the mobile robot side speaker 508. A picture of a dog is drawn on this command panel 121i, and bark of a dog is reproduced once when the mobile robot 110 passes through the central portion of this command panel 121i.

A command panel 121j includes command information for causing the mobile robot 110 to reproduce roar of a lion from the mobile robot side speaker 508. A picture of a lion is drawn on this command panel 121j, and roar of a lion is reproduced once when the mobile robot 110 passes through a central portion of this command panel 121j.

A command panel 121k includes command information for causing the mobile robot 110 to reproduce trumpet of an elephant from the mobile robot side speaker 508. A picture of an elephant is drawn on this command panel 121k, and trumpet of an elephant is reproduced once when the mobile robot 110 passes through a central portion of this command panel 121k.

A command panel 121m includes command information for causing the mobile robot 110 to reproduce cry of a monkey from the mobile robot side speaker 508. A picture of a monkey is drawn on this command panel 121m, and cry of a monkey is reproduced once when the mobile robot 110 passes through a central portion of this command panel 121m.

Note that, it is, of course, possible to provide command panels 121 for causing cry of other animals such as a chicken and a cat, to be reproduced.

In this manner, according to Embodiment 1, by arranging various command panels 121 between the command panel 121a for start and the command panel 121b for goal, it is possible to cause the learner to learn basis of computer programming while using operation of the mobile robot 110 to resemble computer processing. Further, for example, by using the command panel 121f for determining the traveling direction (corresponding to an IF sentence in computer language), or the like, the learner can learn a basic programming method such as "branch" and "loop". Still further, by concept of "error stop" being introduced, the learner can learn "debug".

Note that, concerning part or all of the command panels 121, it is also possible to allow the learner, or the like, to draw a picture himself/herself without using the command panel 121 on which a picture is printed in advance.

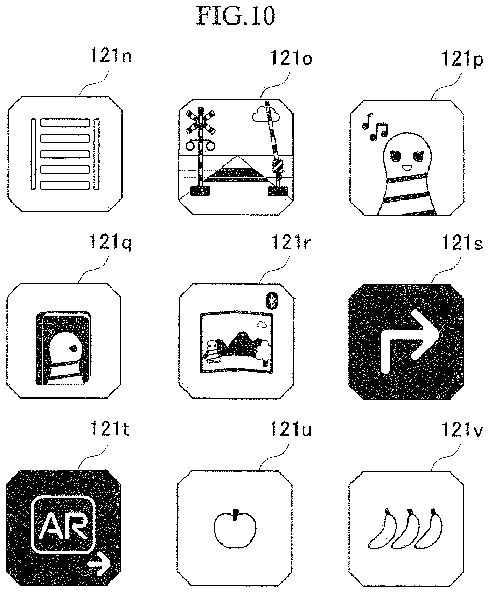

In the command panel 121 illustrated in FIG. 9, command information which becomes a basic command for the mobile robot 110 is recorded. Meanwhile, in the command panel 121 illustrated in FIG. 10, command information which enables the mobile robot 110 to perform more complicated operation is recorded.

A command panel 121n illustrated in FIG. 10 includes command information for causing the mobile robot 110 to perform predetermined operation like crossing of a crosswalk at a traffic light. The mobile robot side control unit 501 causes sound of a car to be reproduced from the mobile robot side speaker 508 when the mobile robot 110 reaches on this command panel 121n. The mobile robot side control unit 501 causes the mobile robot 110 to stay on this command panel 121n while sound of a car is reproduced. Then, after reproduction of sound of a car is finished, the mobile robot side control unit 501 causes the mobile robot 110 to rotate 90 degrees respectively in a left direction and in a right direction to imitate operation of looking both ways. After these operation, the mobile robot 110 moves forward. Through operation of the mobile robot 110, the learner can learn a series of behavior upon crossing of a crosswalk at a traffic light, of first stopping at the point and, after there is no traffic of cars, crossing the crosswalk after looking both ways. Further, in the case where the above-described command panels 121f on which four arrows of red, green, blue and yellow are drawn are arranged subsequent to the command panel 121n, it is also possible to cause the mobile robot 110 to move in the direction of the green arrow.

A command panel 121o includes command information for causing the mobile robot 110 to perform predetermined operation like crossing of a railroad. The mobile robot side control unit 501 causes the mobile robot 110 to first generate alarm sound and causes the light emitting portion 220 to emit red light and blink when the mobile robot 110 reaches on this command panel 121o. Then, the mobile robot side control unit 501 causes the mobile robot 110 to generate sound of a train and causes the light emitting portion 220 to emit red light and blink. The mobile robot side control unit 501 causes the mobile robot 110 to stay on this command panel 121o while alarm sound or sound of a train is generated from the mobile robot 110. Then, after the mobile robot side control unit 501 stops the sound of the train and the alarm sound, the mobile robot 110 moves forward. Through the operation of the mobile robot 110, the learner can learn a series of behavior upon crossing of a railroad, of stopping at the point while red light is blinking, and crossing the railroad after a train passes, blinking of red light is stopped, and sound of a train is lost. Further, in the case where the above-described command panels 121f on which four arrows in red, green, blue and yellow are drawn are arranged subsequent to the command panel 121o, the mobile robot 110 may move in the direction of the red arrow.

A command panel 121p includes command information for causing the mobile robot 110 to express feeling, and a picture of the command panel 121p expresses feeling of "fun". To cause the mobile robot 110 to express feeling, color and blinking of light emitted from the light emitting portion 220 of the mobile robot 110 is changed, or sound generated from the speaker 507 of the mobile robot 110 is changed. As other types of feeling, it is also possible to express feeling of "delightful", feeling of "impressed", and other types of feeling.

The command panel 121q and the command panel 121r are panels which cause an image like a picture book to be displayed on the liquid crystal screen with the touch panel 701 of the tablet computer 130 on the basis of the command information recorded in three command panels 121 put between these two command panels 121 and cause sound to be reproduced from the tablet side speaker 805, and are called picture-book panels.

At the mobile robot 110 according to Embodiment 1, all the command information read by the mobile robot 110 is transmitted from the mobile robot 110 toward the tablet computer 130. Therefore, when the mobile robot 110 passes through these two command panels of the command panel 121q and the command panel 121r, and three command panels 121 put between these two command panels, all the command information recorded in these five command panels is transmitted from the mobile robot 110 toward the tablet computer 130. The tablet computer 130 sequentially receive these five pieces of the command information, and the tablet side control unit 801 causes all these five pieces of the command information to be stored in the tablet side command information RAM 809. The tablet side control unit 801 can detect the command information recorded in two command panels of the command panel 121q and the command panel 121r among the plurality of pieces of the command information stored in the tablet side command information RAM 809 and extract three pieces of the command information put between these two pieces of the command information. By the command information being read in this manner, the tablet side control unit 801 can sequentially detect types and order of these three pieces of command information. Content to be reproduced on the liquid crystal screen with the touch panel 701 and from the tablet side speaker 805 sequentially changes in accordance with the types and the order of these three pieces of the command information. The tablet side control unit 801 selects and reproduces one image and sound data file from the above-described image and sound reproduction data memory 806 on the basis of the types and the order of these three pieces of the command information.

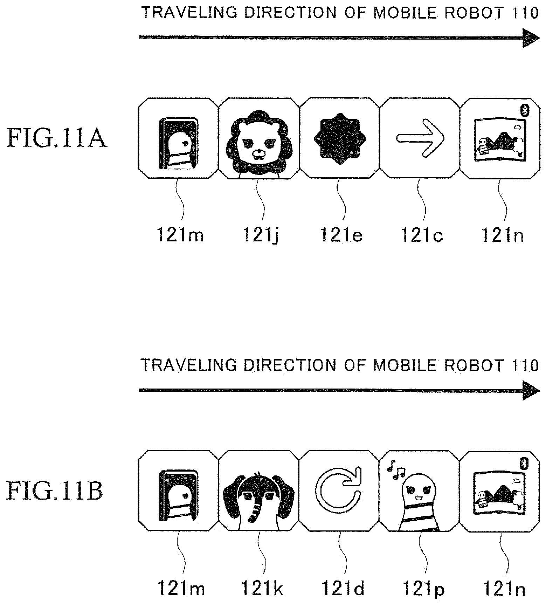

In the case where the command panels 121 put between the command panel 121q and the command panel 121r are, for example, three command panels 121 in which the command information for reproducing roar of a lion, the command information for causing the light emitting portion 220 of the mobile robot 110 to emit blue light and the command information regarding an arrow for determining the traveling direction of the mobile robot 110 are recorded as illustrated in FIG. 11A, as the content to be reproduced, for example, an image of "meet a lion, turn pale and run away" is displayed on the liquid crystal screen with the touch panel 701, and sound in association with this is generated from the tablet side speaker 805. Further, for example, as illustrated in FIG. 11B, in the case where three command panels 121 in which the command information for reproducing trumpet of an elephant, the command information regarding rotation for causing the mobile robot 110 to rotate one revolution, and the command information for causing the mobile robot 110 to express feeling of "fun" are recorded are arranged between the command panel 121q and the command panel 121r, for example, an image and sound for content of "meets an elephant, turns around and has fun" are reproduced.

The content of a picture book to be displayed at the tablet computer 130 changes in accordance with types and order of arrangement of the three command panels 121. The tablet computer 130 expresses the picture book using an image and sound or using only an image or only sound.

Note that the number of command panels 121 put between the command panel 121q and the command panel 121r is not limited to three, and may be equal to or larger than three or equal to or less than three.

Further, the learner can store an image and sound data file created by himself/herself in the image and sound reproduction data memory 806 and can associate the image and sound data file with types and order of the three pieces of the command information put between the command panel 121q and the command panel 121r. By the image and sound data file being associated with the types and the order of the three pieces of the command information, the image and sound data file created by the learner may be reproduced in the case where the corresponding types and order of the command information are read.

The learner can perform higher-level programming by considering types and order of the plurality of command panels 121 while imagining content of an image and sound to be reproduced.

A command panel 121s includes command information for causing the mobile robot 110 to turn in a direction of an arrow and move forward. The mobile robot 110 goes into the command panel 121s from a rear end side of the arrow, turns in the direction of the arrow at a central portion of the command panel 121s, and goes out from the command panel 121s from a tip side of the arrow. When the mobile robot 110 reaches a portion near the center of the command panel 121s, the mobile robot side control unit 501 controls a rotation direction of the left and right rotating legs 231 of the moving mechanism 230 to rotate orientation of the mobile robot 110 by 90 degrees. Then, the mobile robot side control unit 501 controls the rotation direction of the rotating legs 231 of the moving mechanism 230 to cause the mobile robot 110 to move forward and pass through this command panel 121s. Note that, in the case where the mobile robot 110 goes into the command panel 121b from a side other than the rear end side of the arrow, the mobile robot side control unit 501 causes the mobile robot 110 to perform error operation.

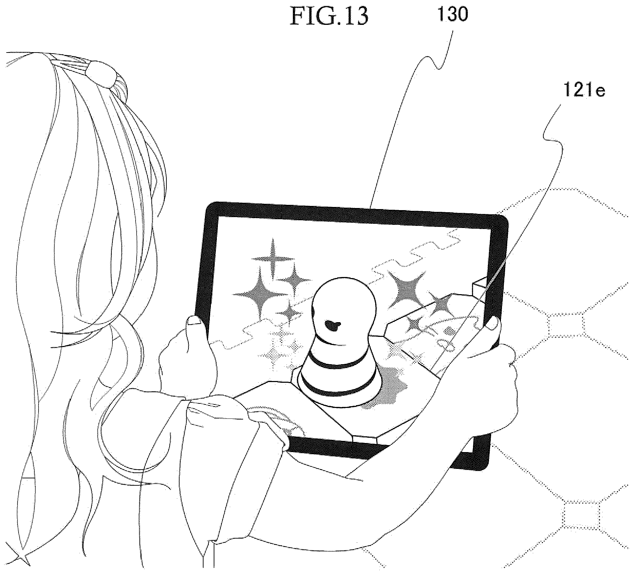

A command panel 121t includes command information for causing the mobile robot 110 to perform transmission so as to cause the tablet computer 130 to start display of augmented reality (AR). The mobile robot side control unit 501 controls the mobile robot side Bluetooth (registered trademark) module I/F unit 509 to transmit this command information toward the tablet computer 130. When the tablet computer 130 receives this command information, the tablet side control unit 801 causes the display of augmented reality (AR) to be displayed on the liquid crystal screen with the touch panel 701. An image utilizing a technology of augmented reality (AR) displayed on the liquid crystal screen with the touch panel 701 will be described later using FIG. 13.

A command panel 121u includes command information for causing the mobile robot 110 to store that one apple is acquired. A picture of one apple is printed on this command panel 121u. Note that a command panel 121u on which two apples are drawn is also prepared. When the mobile robot 110 reaches a central portion of this command panel 121u, the light emitting portion 220 may be caused to blink in red the same number of times as the number of printed apples. Red light from the light emitting portion 220 makes the leaner imagine color of an apple, so that the learner can recognize that this color of light emission indicates the number of apples. Further, because the number of printed apples is the same as the number of times of blinking of the light emitting portion 220, the learner can visually recognize the number and can learn the number.

A command panel 121v includes command information for causing the mobile robot 110 to store that three bananas are acquired. A picture of three bananas is printed on this command panel 121v. Note that a command panel 121v on which bananas of the number other than three are drawn is also prepared. As with the case of the above-described command panel 121u of an apple, the mobile robot 110 may cause the light emitting portion 220 to blink in yellow the same number of times as the number of printed bananas on this command panel 121v. Yellow light from the light emitting portion 220 makes the leaner imagine color of a banana, so that the learner can recognize that this color of light emission indicates the number of bananas.

By using the command panel 121u and the command panel 121v, the leaner can learn the number through familiar things such as an apple and a banana instead of numbers.

Further, the number of drawn apples may be added up when the mobile robot 110 passes through the central portions of the command panels 121u of apples. At this time, the mobile robot 110 may cause the light emitting portion 220 to blink in red the same number of times as the added number of apples on this command panel 121u. The learner can visually learn addition without using numbers by observing the number of times of blinking of the light emitting portion 220. By this means, it is also possible to enable even an infant for whom it is difficult to recognize numbers, to learn addition.

Further, it is also possible to define a rule that, when the mobile robot 110 passes through the command panel 121k on which a picture of an elephant is printed, assuming that the elephant eats one apple, the number of apples acquired by the mobile robot 110 so far decreases by one. At this time, the mobile robot 110 may cause the light emitting portion 220 to blink in red the same number of times as the number of apples after the number of apples acquired so far decreases by one, on the command panel 121k of an elephant. The learner can visually learn subtraction without using numbers by observing the number of times of blinking of the light emitting portion 220. By this means, it is also possible to enable even an infant for whom it is difficult to learn numbers, to learn subtraction.

Also concerning the command panel 121v on which a picture of bananas is printed, in a similar manner, the number of bananas may be added up by the mobile robot 110 passing through the command panels 121v. As with the case of the above-described command panel 121u of an apple, when the mobile robot 110 reaches on the command panel 121v of a banana, the light emitting portion 220 may be caused to blink in yellow the same number of times as the number of added up bananas. Further, it is also possible to define a rule that, when the mobile robot 110 passes through the command panel 121m on which a picture of a monkey is printed, assuming that the monkey eats one banana, the number of bananas acquired by the mobile robot 110 so far decreases by one. Also at this time, as with the case of the above-described command panel 121u of an apple, the mobile robot 110 may cause the light emitting portion 220 to blink in yellow the same number of times as the number of bananas after the number of bananas acquired so far decreases by one, on the command panel 121 of a banana.

By this means, the learner can learn addition and subtraction without using numbers.

A learning method using the learning toy 100 according to Embodiment 1 will be described next.

The learner first arranges the command panel 121a for a start point on a floor surface, or the like.

Then, desired command panels 121 are sequentially arranged adjacent to this command panel 121a.

Then, the command panel 121b for a goal point is arranged at the last position of the movement path 120 configured with the plurality of arranged command panels 121.

After the movement path 120 is completed by arranging the command panels 121 in this manner, a power supply switch 504 of the mobile robot 110 is turned on, and the mobile robot 110 is placed on the command panel 121a for the start point. By this means, the mobile robot 110 starts movement on the movement path 120. The mobile robot 110 sequentially reads the command information of the command panels 121 and sequentially executes operation on the basis of the command information while moving on the movement path 120. Further, the command information read by the mobile robot 110 is transmitted from the mobile robot 110 toward the tablet computer 130, and the tablet computer 130 sequentially executes desired operation on the basis of the received command information.

As a result of these kinds of operation, when this mobile robot 110 reaches the command panel 121b for the goal point and stops, the operation is "successful". Meanwhile, in the case where the mobile robot 110 deviates from the movement path 120 or an error occurs in the middle of the movement path 120, the mobile robot 110 cannot reach the command panel 121b which is the goal point, and the operation is "failure".

The operation performed by the tablet computer 130 on the basis of the command information transmitted from the mobile robot 110 will be described next.

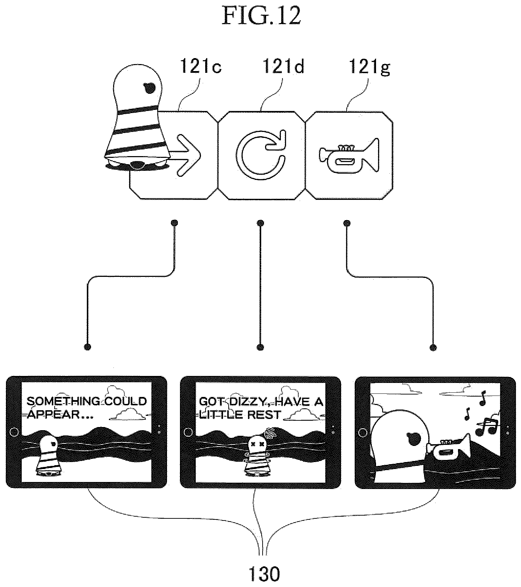

FIG. 12 is a conceptual diagram illustrating aspect where a predetermined image stored in the tablet computer 130 in advance is displayed on the liquid crystal screen with the touch panel 701 on the basis of the command information read by the mobile robot 110.

This is application in which the image and sound data file which has one-to-one correspondence relationship with the command information is stored in the tablet computer 130 in advance, and the corresponding image and sound data file is automatically selected and reproduced on the basis of the read command information.

Because the predetermined image is displayed on the basis of the command panel 121 on which the mobile robot 110 is located, images are sequentially switched in accordance with switching of the command panels 121 as the mobile robot 110 moves. The learner can consider relationship between the command panels 121 and images displayed in association with the command panels or can consider arrangement of the command panels 121 so that images which are successively displayed have certain meaning or story.

Flow of execution of this application will be described below.

First, the learner activates dedicated application software stored in the tablet computer 130. By this means, the tablet computer 130 can perform communication with the mobile robot 110, so that the tablet computer 130 is put into a state where the tablet computer 130 can receive the command information transmitted from the mobile robot 110 and display an image or generate sound on the basis of the command information.

As illustrated in FIG. 12, a case will be described where the command panels 121 are arranged in order of, for example, the command panel 121c for determining the traveling direction of the mobile robot 110, the command panel 121d for causing the mobile robot 110 to rotate one revolution, and the command panel 121g for setting trumpet as sound to be reproduced from the mobile robot side speaker 508.

In a case of such arrangement of the command panels 121, first, the mobile robot 110 reaches the command panel 121c, reads the command information, moves forward in the direction of the drawn arrow on the basis of this command information, and transmits this command information toward the tablet computer 130.

A data structure of data transmitted from the mobile robot 110 is transmitted as 13 successive data arrays as illustrated in FIG. 8B. In a first region, data indicating that the information is the command information is stored, and, in a second region, data corresponding to the command information to be read is stored. In third to twelfth regions, because there is no data to be transmitted, while arbitrary data is stored, zero is stored here. In a thirteenth region, checksum is stored.

After the tablet computer 130 receives communication data transmitted from the mobile robot 110, the tablet side control unit 801 analyzes this received data. The tablet side control unit 801 detects from the first region of this received data that the command information is transmitted, and detects from the second region that content of the command information is command information for determining the traveling direction of the mobile robot 110.

Then, the tablet side control unit 801 reads out the image and sound data file corresponding to the received command information from the image and sound reproduction data memory 806, causes an image to be displayed on the liquid crystal screen with the touch panel 701 and causes sound to be generated from the tablet side speaker 805.

When the mobile robot 110 reaches the command panel 121c, an image corresponding to the command information for determining the traveling direction of the mobile robot 110 is displayed. For example, content such as "something could appear" in the schematic diagram of the liquid crystal screen with the touch panel 701 illustrated in a lower left part of FIG. 12 is displayed. In the learning toy 100 according to Embodiment 1, while content to be reproduced by the image and sound data file is animation, other types of content may be reproduced.

When the mobile robot 110 further moves forward and reaches the command panel 121d arranged adjacent on the right side, the mobile robot 110 rotates one revolution at the central portion of the command panel 121d and transmits the read command information toward the tablet computer 130. This command information includes a command for causing the mobile robot 110 to rotate one revolution. The tablet computer 130 which receives this command information reads out an image and sound data file corresponding to this command information from the image and sound reproduction data memory 806 and displays an image. For example, content such as "got dizzy, have a little rest" illustrated in a lower central part of FIG. 12 is displayed.

Further, when the mobile robot 110 moves forward and reaches the command panel 121g adjacent on the right side, the mobile robot 110 causes sound of trumpet to be generated once at the central portion of the command panel 121g, and transmits the read command information toward the tablet computer 130. The tablet computer 130 which receives this command information reads out an image and sound data file corresponding to this command information from the image and sound reproduction data memory 806 and displays an image. For example, content such as "playing the trumpet" illustrated in a lower right part of FIG. 12 is displayed.

Note that the learner may store an image and sound data file created by himself/herself in the image and sound reproduction data memory 806 in association with the command information, and, in the case where the corresponding command information is read, the image and sound data file created by the learner may be reproduced.

The learner arranges the plurality of command panels 121 while considering types and order of the command panels 121 and while imaging content of images and sound to be reproduced at the tablet computer 130 as well as operation of the mobile robot 110, so that the learner can perform higher-level programming.

Further, the learner can confirm that operation of the mobile robot 110 coordinates with an image to be displayed on the tablet computer 130 and sound to be generated from the tablet computer 130 although the mobile robot 110 is not connected to the tablet computer 130 in a wired manner. This is realized by data being transmitted and received between the mobile robot 110 and the tablet computer 130 through wireless communication. Through such learning experience, the learner can learn what wireless communication is like.

Still further, a material such as quiz which enables the learner to enjoy learning can be introduced as content to be reproduced at the tablet computer 130 on the basis of the command information, so that it is possible to further improve learning effects.

Application in which an image utilizing a technology of augmented reality (AR) is displayed on the liquid crystal screen with the touch panel 701 will be described next.

Augmented reality (AR) refers to a technology of superimposing digital information on an image which is actually taken. As one example which utilizes this technology of augmented reality (AR), it is possible to display a taken image of the mobile robot 110 and background thereof on the liquid crystal screen with the touch panel 701, and display an image recorded in the tablet computer 130 in advance while the image is superimposed on a portion of the background except the mobile robot 110. The tablet computer 130 can extract the portion of the image corresponding to the mobile robot 110 by performing image processing on the taken image of the mobile robot 110 and the background thereof. By performing such processing, when the image recorded in advance in the tablet computer 130 is displayed in a superimposed manner, it is possible to display the image while the image is superimposed only on the image of the portion of the background. Meanwhile, because the image recorded in advance in the tablet computer 130 is not superimposed on the portion of the image corresponding to the mobile robot 110, the image of the mobile robot 110 is displayed without a lack.

FIG. 13 is a conceptual diagram illustrating aspect where the learner observes an image while taking the image of the mobile robot 110 moving on the command panel 121 and background thereof with the two-dimensional CMOS area sensor 808 incorporated into the tablet computer 130.

Flow of execution of this application will be described below.

First, the learner activates dedicated application software stored in the tablet computer 130. By this means, the image taken with the two-dimensional CMOS area sensor 808 incorporated into the tablet computer 130 is displayed on the liquid crystal screen with the touch panel 701.

Then, the learner directs the two-dimensional CMOS area sensor 808 toward the mobile robot 110 moving on the command panel 121 to take an image of the mobile robot 110 and background thereof, and causes the image to be displayed on the liquid crystal screen with the touch panel 701.

At this time point, an image utilizing the technology of augmented reality (AR) is not yet displayed, and only the image of the mobile robot 110 and background thereof is displayed.

When the mobile robot 110 self-travels on the command panel 121 and reaches the central portion of the command panel 121t for causing the tablet computer 130 to start display of augmented reality (AR) illustrated in FIG. 10, the mobile robot 110 transmits the read command information toward the tablet computer 130. After the tablet computer 130 receives this command information, the liquid crystal screen with the touch panel 701 is switched to an image utilizing the technology of augmented reality (AR).

FIG. 13 illustrates a case where the mobile robot 110 moves on the command panel 121e which causes the light emitting portion 220 to emit red light as one example, and description will be provided with reference to this example.

In FIG. 13, the learner directs the two-dimensional CMOS area sensor 808 to the mobile robot 110 to take an image of the mobile robot 110 and background thereof. Therefore, the mobile robot 110 and part of a picture of the command panel 121e for causing the light emitting portion 220 to emit red light illustrated in FIG. 9 are displayed as background on the liquid crystal screen with the touch panel 701. Further, in addition to this, an image of cross-shaped stars is displayed in a superimposed manner on the liquid crystal screen with the touch panel 701. This image of the cross-shaped stars displayed around the mobile robot 110 is a reproduction image of the image and sound data file read out from the image and sound reproduction data memory 806 on the basis of the command information for causing the light emitting portion 220 to emit red light. This image of stars is displayed while the image is superimposed on only a background portion of the image of the mobile robot 110 and the background thereof. Meanwhile, this image of stars is not displayed in a superimposed manner at a portion of the mobile robot 110.

The learner can observe the image utilizing the technology of augmented reality (AR) in this manner.

Operation inside the tablet computer 130 at this time will be described next.

When the image of the mobile robot 110 and the background thereof is received at the two-dimensional CMOS area sensor 808, an electrical signal is output on the basis of the image. The output electrical signal is A/D converted into digital data to generate image data. The tablet side control unit 801 controls the two-dimensional area sensor drive unit 807 to capture this image data and causes this image data to be temporarily stored in a DRAM which is the tablet side control unit RAM 822. Because this image data is digital data, the tablet side control unit 801 can perform image processing on this image data. By performing image processing, it is possible to extract a portion corresponding to the mobile robot 110 from the image. That is, the tablet side control unit 801 can separately detect a pixel range of the image of the mobile robot 110 and an image of the background portion which is a pixel range other than the pixel range of the image of the mobile robot 110 in the image.

As illustrated in FIG. 13, when the mobile robot 110 reaches on the command panel 121e for causing the light emitting portion 220 to emit red light, the command information is read, and the read command information is transmitted toward the tablet computer 130.

After the tablet computer 130 receives the communication data transmitted from the mobile robot 110, the tablet side control unit 801 analyzes the received communication data. Through such processing, the tablet side control unit 801 detects that content of the received command information is command information for causing the light emitting portion 220 to emit red light. Subsequently, the tablet side control unit 801 reads out the image and sound data file corresponding to the received command information from the image and sound reproduction data memory 806. Then, this reproduction image is superimposed on the image of the background portion among the image including the mobile robot 110 and the background thereof. At this time, the reproduction image is superimposed so that this reproduction image is displayed around the portion of the mobile robot 110 in the image as illustrated in FIG. 13. These kinds of processing are performed inside a memory of the DRAM which is the tablet side control unit RAM 822. After this processing is performed, the tablet side control unit 801 causes image data which is subjected to processing and which is stored in the tablet side control unit RAM 822 to be displayed on the liquid crystal screen with the touch panel 701 by controlling the touch panel liquid crystal screen controller 803.

By the processing as described above being performed, the reproduction image of the image and sound data file read out from the image and sound reproduction data memory 806 is displayed on the liquid crystal screen with the touch panel 701 while the image is superimposed only on the background portion without being superimposed on the portion of the mobile robot 110.

Note that the image and sound data files read out from the image and sound reproduction data memory 806 so as to correspond to the command information may be the same file or different files between the application illustrated in FIG. 12 and the application illustrated in FIG. 13.

Further, process of image processing in which the tablet side control unit 801 extracts a portion corresponding to the mobile robot 110 in the image taken with the two-dimensional CMOS area sensor 808 can be displayed on the liquid crystal screen with the touch panel 701. Through such display, the learner can learn image processing.

The application illustrated in FIG. 13 is one type of the technology called augmented reality (AR), and the learner can recognize what the technology of augmented reality is like through learning experience.

As another example utilizing the technology of augmented reality (AR), it is also possible to display a taken image of the command panel 121 and background thereof on the liquid crystal screen with the touch panel 701 and display an image of the mobile robot 110 recorded in advance in the tablet computer 130 while the image is superimposed on the portion of the command panel 121. It is possible to display an image on the liquid crystal screen with the touch panel 701 as if the mobile robot 110 moved on the command panel 121 although the mobile robot 110 does not exist. Further, it is also possible to display a taken image of a room or a park on the liquid crystal screen with the touch panel 701 and display an image of the mobile robot 110 while the image is superimposed on, for example, a taken image of a desk and the head of a person.

Flow for causing such an image to be displayed on the liquid crystal screen with the touch panel 701 will be described below.

First, the learner activates dedicated application software stored in the tablet computer 130. Then, the learner directs the two-dimensional CMOS area sensor 808 incorporated into the tablet computer 130 to the command panel 121 to take an image of the command panel 121 and background thereof.

At this time, inside the tablet computer 130, the image projected on the two-dimensional CMOS area sensor 808 is captured in the tablet side control unit RAM 822 as image data. The tablet side control unit 801 can detect a portion of the command panel 121 in this image data by performing image processing on this image data.

Further, in the image and sound reproduction data memory 806, an image of the mobile robot 110 is stored in advance as an image and sound data file. Therefore, the tablet side control unit 801 can take out this image and sound data file at any time and can display the image of the mobile robot 110.

The tablet side control unit 801 can superimpose the image of the mobile robot 110 recorded in the image and sound data file on the portion of the command panel 121 in the image data on the basis of a result of the image processing. This processing is performed by processing data so that image data of the mobile robot 110 is superimposed on taken image data of the command panel 121 and the background thereof stored in the tablet side control unit RAM 822.

After this processing, the tablet side control unit 801 controls the touch panel liquid crystal screen controller 803 to cause the image data processed in this manner to be displayed on the liquid crystal screen with the touch panel 701.

By performing the processing as described above, it is possible to display the image of the mobile robot 110 while the image is superimposed on the portion of the command panel 121, along with the image of the command panel 121 and the background thereof on the liquid crystal screen with the touch panel 701. The learner can observe this image through the liquid crystal screen with the touch panel 701 and can learn augmented reality (AR).

A mobile robot operation parameter 600 for determining content of operation of the mobile robot 110 will be described next.

The mobile robot 110 reads the command information recorded in the command panel 121 and executes operation on the basis of the command information. The mobile robot side control unit 501 first reads out a setting value of the mobile robot operation parameter 600 which corresponds to the read command information on a one-to-one basis from the operation parameter ROM 511. Then, a program which specifies operation of the mobile robot 110 which corresponds to the read command information on a one-to-one basis is selected from the mobile robot side control unit ROM (flash memory) 521, and is executed using the setting value of the mobile robot operation parameter 600 read out in advance as input to the program to cause the mobile robot 110 to perform desired operation.

As described above, the mobile robot operation parameter 600 has a structure as illustrated in, for example, FIG. 5A, and is stored in the operation parameter ROM 511. In the mobile robot operation parameter 600, for example, ten storage regions are secured, and content different for each piece of command information is allocated as content of a parameter stored in each storage region.

FIG. 5B illustrates an example of content of the mobile robot operation parameter 600 corresponding to the command information recorded in the command panel 121c. This command information determines the traveling direction of the mobile robot 110. In a first storage region, a parameter which determines speed of movement of the mobile robot 110 is allocated, and a numerical value of "125" is stored. A setting range of the parameter is between 1 and 255, 0 indicates the slowest speed, and 255 indicates the fastest speed. "125" corresponds to medium speed. In this command information, parameters are not allocated to second to tenth storage regions. Therefore, arbitrary numerical values are stored in these storage regions, and in FIG. 5B, "0" is stored in second to tenth storage regions.

FIG. 5C illustrates an example of content of the mobile robot operation parameter 600 corresponding to the command information recorded in the command panel 121d. This command information causes the mobile robot 110 to rotate one revolution. In a first storage region, a parameter which determines the number of times of rotation of the mobile robot 110 is allocated, and a numerical value of "1" is stored. It is possible to change the number of times of rotation of the mobile robot 110 by rewriting this parameter. A setting range of the parameter is between 0 and 255, and, if the parameter is set at 0, the mobile robot 110 does not rotate, and if the parameter is set at 255, the mobile robot 110 rotates 255 times. "1" is setting for causing the mobile robot 110 to rotate once. In a second storage region, a parameter which determines speed of movement of the mobile robot 110 is allocated, and a numerical value of "125" is stored. A setting range of the parameter is between 0 and 255, 0 indicates the slowest speed, and 255 indicates the fastest speed. "125" corresponds to medium speed. In this command information, parameters are not allocated in third to tenth storage regions. Therefore, arbitrary numerical values are stored, and, in FIG. 5C, "0" is stored in the third to the tenth storage regions.

FIG. 5D illustrates an example of content of the mobile robot operation parameter 600 corresponding to the command information recorded in the command panel 121e. This command information causes the light emitting portion 220 of the mobile robot 110 to emit red light. In the first to third storage regions, parameters which determine strength of light emitted from LEDs of red, green and blue of the RGB light source 503 are respectively allocated, and, in a first storage region, a numerical value of "255" is stored. Further, in second and third storage regions, "0" is stored. By this combination, the light emitting portion 220 of the mobile robot 110 is set to emit red light. Note that numerical values between 0 and 255 can be respectively set in the first to third storage regions, and, it is possible to change color of light emitted from the light emitting portion 220 of the mobile robot 110 by changing these three numerical values. Note that ranges of numerical values for setting strength of light emitted from respective LEDs of red, green and blue may be, of course, arbitrarily determined. For example, in the case where the respective setting values of red, green and blue are made to fall within a range between 0 and 3, it is possible to cause light to be emitted while adjusting 64 types of color by combination of the setting values . In a fourth storage region, a parameter which determines a light emission state is allocated. If "0" is set in this storage region, light emission is put into a lighting state, while, if "1" is set, light emission is put into a blinking state. In FIG. 5D, "1" is set, light emission is put into a blinking state. In a fifth storage region, a parameter which determines a blinking interval of light emission is allocated, and, for example, a numerical value can be set in unit of 0.1 second. If a numerical value of "5" is set in this storage region, light blinks at intervals of 0.5 seconds. Because, in FIG. 5D, "10" is set, light blinks at intervals of one second. In this command information, a parameter is not allocated in sixth to tenth storage regions. Therefore, arbitrary numerical values are stored, and, in FIG. 5D, "0" is stored in sixth to tenth storage regions.

FIG. 5E illustrates an example of content of the mobile robot operation parameter 600 corresponding to the command information stored in the command panel 121i. This command information causes the mobile robot 110 to reproduce bark of a dog. In a first storage region, a parameter which determines a volume of sound to be reproduced from the mobile robot side speaker 508 is allocated, and a numerical value of "65" is stored. It is possible to change a volume of sound to be reproduced by rewriting this parameter. A setting range of the parameter is between 0 and 255, and, if the parameter is set at 0, a volume becomes a minimum volume, and, if the parameter is set at 255, the volume becomes a maximum volume. "65" indicates that the volume is set at approximately 25% of the maximum volume. In a second storage region, a parameter which determines pitch of sound to be reproduced is allocated, and a numerical value of "130" is stored. It is possible to change pitch of sound to be reproduced by rewriting this parameter. A setting range of the parameter is between 0 and 255, and, if the parameter is set at 0, pitch of the sound becomes the lowest, and, if the parameter is set at 255, pitch of the sound becomes the highest. "130" indicates that the parameter is set so that the sound is reproduced at pitch slightly higher than normal pitch of sound. In this command information, a parameter is not allocated in third to tenth storage regions. Therefore, arbitrary numerical values are stored, and, in FIG. 5E, "0" is stored in the third to the tenth storage regions.

Operation of rewriting the mobile robot operation parameter 600 from the tablet computer 130 will be described next.

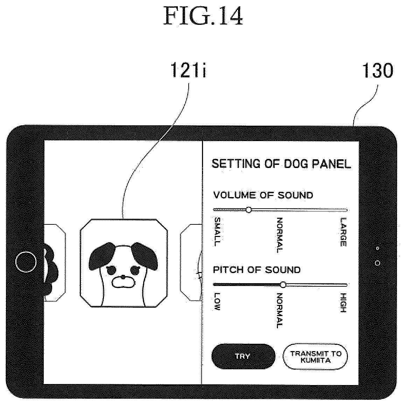

FIG. 14 illustrates a conceptual diagram of an image displayed on the liquid crystal screen with the touch panel 701 when the learner manipulates the tablet computer 130 to rewrite the mobile robot operation parameter 600 stored in the operation parameter ROM 511 of the mobile robot 110 and store the rewritten mobile robot operation parameter 600.

In FIG. 14, as an example, a screen for rewriting the mobile robot operation parameter 600 for the command information recorded in the command panel 121i and storing the rewritten mobile robot operation parameter 600 is displayed, and description will be provided with reference to this screen. Note that this command information is command information for causing the mobile robot 110 to reproduce bark of a dog.

First, dedicated application software stored in the tablet computer 130 is activated, and the tablet computer 130 is put into a state where the tablet computer 130 can perform communication with the mobile robot 110.

Subsequently, the tablet computer 130 reads out the mobile robot operation parameter 600 corresponding to the command information recorded in the command panel 121i from the mobile robot 110, and displays the read mobile robot operation parameter 600 on the liquid crystal screen with the touch panel 701.

The tablet computer 130 transmits a command for reading out the mobile robot operation parameter 600 toward the mobile robot 110 to read out the mobile robot operation parameter 600 from the mobile robot 110. The mobile robot side control unit 501 of the mobile robot 110 which receives this command reads out a setting value of the mobile robot operation parameter 600 of the corresponding command information from the operation parameter ROM 511 and transmits the content toward the tablet computer 130.

A data structure of communication including a setting value of the mobile robot operation parameter 600 transmitted from the mobile robot 110 toward the tablet computer 130 is substantially similar to that described using FIG. 8B, in a first region of the data structure of the communication, data indicating that the information is the command information is stored, and, in a second region, data specifying the command information is stored. Further, in third and subsequent regions of the data structure of the communication, numerical values set as the mobile robot operation parameter 600 are sequentially stored from the beginning. That is, in the third region of the data structure of the communication, a parameter set in the first region of the mobile robot operation parameter 600 illustrated in FIG. 5A is stored, and, in a fourth region of the data structure of the communication, a parameter set in the second region of the mobile robot operation parameter 600 illustrated in FIG. 5A is stored. Also in fifth and subsequent regions of the data structure of the communication, parameters set in the third and subsequent regions of the mobile robot operation parameter 600 illustrated in FIG. 5A are sequentially stored. Further, in a last region of the data structure of the communication, checksum is stored.

For the command information for causing the mobile robot 110 to reproduce bark of a dog, in a third region of the data structure of the communication, a parameter which determines a volume of sound to be reproduced from the mobile robot side speaker 508 is stored, and, in a fourth region, a parameter which determines pitch of sound to be reproduced is stored. By the tablet side control unit 801 analyzing the communication data received by the tablet computer 130, it is possible to acquire a numerical value set as the parameter which determines a volume of sound to be reproduced from the mobile robot side speaker 508 and a numerical value set as the parameter which determines pitch of sound to be reproduced, from the third and the fourth regions.

In this manner, the tablet side control unit 801 can read out the mobile robot operation parameter 600 set at the time.

In FIG. 14, "setting of dog panel" is displayed at an upper right portion of the screen to indicate that the information is the command information for reproducing bark of a dog. Further, below the display, "volume of sound" is displayed, and a setting value of the parameter which determines the volume of sound to be reproduced is displayed as a position of an outline plot. Still further, below the display, "pitch of sound" is displayed, and a setting value of the parameter which determines the pitch of sound to be reproduced is displayed as a position of an outline plot.

The learner then manipulates the liquid crystal screen with the touch panel 701 to input the mobile robot operation parameter 600 to be newly set. Specifically, the learner moves the position of the outline plot to a position at which the setting value is to be set by touching and tapping the liquid crystal screen with the touch panel 701 with his/her finger. Then, a rewrite parameter is transmitted toward the mobile robot 110 by the learner touching and tapping with his/her finger a portion where "transmit to Kumiita" is displayed, which is displayed in a lower right portion of the screen in FIG. 14. Note that, because the mobile robot 110 is named Kumiita which is Japanese expression of KUMIITA (registered trademark), the screen display on the liquid crystal screen with the touch panel 701 includes characters of Kumiita. Here, the rewrite parameter is a parameter for rewriting the mobile robot operation parameter 600 and storing the rewritten mobile root operation parameter 600 in the operation parameter ROM 511, which specifies content of operation of the mobile robot 110.

A data structure of communication when the rewrite parameter is transmitted toward the mobile robot 110 is as illustrated in FIG. 8C.

This data structure of the communication is configured as 13 successive data arrays. In a first region, data indicating that the parameter is the rewrite parameter is stored, and, in a second region, data indicating the command information for which the mobile robot operation parameter 600 is to be rewritten is stored. In third to twelfth regions, numerical values of parameters to be rewritten are stored, and numerical values set as the mobile robot operation parameter 600 having the structure illustrated in FIG. 5A are sequentially stored from the beginning. That is, in a third region of the data structure of the communication, a parameter set in the first region of the mobile robot operation parameter 600 illustrated in FIG. 5A is stored, and, in the fourth region of the data structure of the communication, a parameter set in the second region of the mobile robot operation parameter 600 illustrated in FIG. 5A is stored. Also in fifth and subsequent regions of the data structure of the communication, parameters set in third and subsequent regions of the mobile robot operation parameter 600 illustrated in FIG. 5A are sequentially stored. Further, in a last region of the data structure of the communication, checksum is stored.

In a case illustrated in FIG. 14, in a first region, data indicating that the parameter is the rewrite parameter is stored, and, in a second region, data indicating the command information for reproducing bark of a dog, for which the mobile robot operation parameter 600 is to be rewritten, is stored. In a third region, a setting value of the parameter which determines a volume of sound to be reproduced from the mobile robot side speaker 508 is stored, and, in a fourth region, a setting value of the parameter which determines pitch of sound to be reproduced is stored. While, in fifth to twelfth regions, arbitrary numerical values are stored, here, "0" is stored. In a thirteenth region, checksum is stored.

By the mobile robot side control unit 501 analyzing the communication data received by the mobile robot 110, it is detected from the first region that the parameter is the rewrite parameter, and it is detected from the second region that the information is the command information for reproducing bark of a dog. Further, a setting value of the parameter which determines the volume of sound to be reproduced from the mobile robot side speaker 508 and a setting value of the parameter which determines the pitch of sound to be reproduced are acquired from the third and the fourth regions . In this manner, the mobile robot side control unit 501 can acquire content to be rewritten in the mobile robot operation parameter 600 which is input to the liquid crystal screen with the touch panel 701 by the learner to try to newly set the mobile robot operation parameter 600. Then, the mobile robot side control unit 501 rewrites the first and the second regions of the mobile robot operation parameter 600 for the command information for reproducing bark of a dog and store the rewritten mobile robot operation parameter 600 in the operation parameter ROM 511. As described above, because the operation parameter ROM 511 is a non-volatile memory, even if the mobile robot 110 is powered off, the data is stored, and the mobile robot 110 operates with content of the rewritten mobile robot operation parameter 600 when the mobile robot 110 is powered on again.

Note that, it is assumed that, even while the mobile robot operation parameter 600 is read out or rewritten, the mobile robot 110 reads the command information recorded in the command panel 121, performs operation on the basis of the read command information, and, further, transmits the read command information to the tablet computer 130 in parallel. In this case, response of the mobile robot 110 to the command transmitted from the tablet computer 130 is preferentially executed. Then, after response to the command from the tablet computer 130 is completed, the mobile robot 110 returns to original operation of reading the command information recorded in the command panel 121, performing operation on the basis of the read command information, and, further, transmitting the read command information to the tablet computer 130, and continuously executes the operation. The mobile robot side control unit 501 controls operation of the mobile robot 110 so that response of the mobile robot 110 to the command from the tablet computer 130 acts as one type of interruption processing.

The learner can learn a method for manipulating the tablet computer 130 through entry work to the tablet computer 130. Further, the learner can confirm that, by rewriting the mobile robot operation parameter 600, content of the operation of the mobile robot 110 changes on the basis of the rewrite, and can recognize a difference in functions between a program portion which determines operation itself of the mobile robot 110 and a parameter portion which determines content of the operation of the mobile robot 110, through learning experience.

The learner can create an original panel 121z which is a command panel 121 unique to the learner as application of the application which rewrites the mobile robot operation parameter 600 stored in the operation parameter ROM 511 of the mobile robot 110.

Creation of the original panel 121z will be described next.

First, a two-dimensional dot pattern which can be read with the optical reading module 240 of the mobile robot 110 is printed on a transparent film sheet. The command information can be detected from this two-dimensional dot pattern. However, this command information is information from which it can be detected that the information is printed on the transparent film sheet, and is different from the command information recorded in the command panel 121 which already exists. Further, this command information is recorded in advance in the mobile robot side control unit ROM (flash memory) 521 and the tablet side control unit ROM (flash memory) 821 so that the mobile robot side control unit 501 and the tablet side control unit 801 can identify the command information printed on the transparent film sheet.

The leaner prepares a panel having approximately the same size as that of the command panel 121, designs the panel with a picture by drawing a picture by himself/herself on the surface, or the like, and covers this transparent film sheet on which the two-dimensional dot pattern is printed on the panel. In this manner, hardware of the original panel 121z is created by the learner.

Subsequently, the learner sets content of the operation of the mobile robot 110 based on the command information of this original panel 121z.

A storage region for the mobile robot operation parameter 600 corresponding to the command information of the original panel 121z is secured in advance in the operation parameter ROM 511, and a parameter allocated to each storage region of the mobile robot operation parameter 600 is also determined as illustrated in, for example, FIG. 5F.

As illustrated in FIG. 5F, in a first storage region, a parameter which determines speed of movement of the mobile robot 110 is allocated. A setting range of the parameter is between 0 and 255, and 0 indicates the slowest speed, and 255 indicates the fastest speed. In a second storage region, a parameter which determines the number of times of rotation of the mobile robot 110 is allocated. A setting range of the parameter is between 0 and 255, and if the parameter is set at 0, the mobile robot 110 does not rotate, and, if the parameter is set at 255, the mobile robot 110 rotates 255 times. In third to fifth storage regions, parameters which determine strength of light emitted from respective LEDs of red, green and blue of the RGB light source 503 are respectively allocated, and numerical values between 0 and 255 can be respectively set. By changing these three numerical values, it is possible to adjust and change color of light emitted from the light emitting portion 220 of the mobile robot 110. In a sixth storage region, a parameter which determines a light emission state of the light emitting portion 220 of the mobile robot 110 is allocated. If "0" is set in this storage region, light emission is put into a lighting state, and, if "1" is set, light emission is put into a blinking state. In a seventh storage region, a parameter which determines a blinking interval of light emission is allocated. For example, the parameter can be set in unit of 0.1 second, and if a numerical value of "5" is set in this storage region, light blinks at intervals of 0.5 seconds. Note that a parameter is not allocated in eighth to tenth storage regions. Therefore, while arbitrary numerical values are stored, "0" is stored in the eighth to tenth storage regions in FIG. 5F.

Operation of setting the mobile robot operation parameter 600 for the command information of the original panel 121z from the tablet computer 130 will be described next.

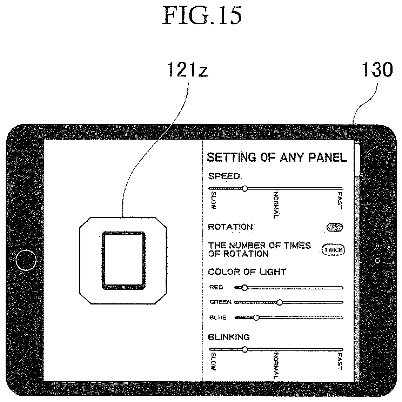

FIG. 15 illustrates a conceptual diagram of an image displayed on the liquid crystal screen with the touch panel 701 when the learner sets the mobile robot operation parameter 600 for the command information of the original panel 121z.

First, dedicated application software stored in the tablet computer 130 is activated, and the tablet computer 130 is put into a state where the tablet computer 130 can perform communication with the mobile robot 110.

"Setting of any panel" is displayed in an upper right portion of the screen so that the learner can recognize that this screen indicates setting for the command information of the original panel 121z as illustrated in FIG. 15. "Speed" is displayed below the display, and a setting value of the parameter which determines speed of movement of the mobile robot 110 is displayed as a position of an outline plot. Further, below the display, "rotation" and "the number of times of rotation" are displayed, and a setting value of the parameter which determines the number of times of rotation of the mobile robot 110 is displayed with a position of the switch and a numerical value. When the switch of "rotation" is located on the right side, the mobile robot 110 rotates, and when the switch is located on the left side, the mobile robot 110 does not rotate. In the case where the switch of "rotation" is located on the left side, the parameter which determines the number of times of rotation of the mobile robot 110 is set at "0". Meanwhile, in the case where the switch of "rotation" is located on the right side, a numerical value displayed in "the number of times of rotation" is set as the parameter which determines the number of times of rotation of the mobile robot 110. Further, below the display, "color of light" is displayed, and setting values of the parameters which determine strength of light emitted from the respective LEDs of red, green and blue of the RGB light source 503 are displayed as positions of three outline plots. Still further, below the display "blinking" is displayed, and setting values of the parameter which determines the light emission state of the light emitting unit 220 of the mobile robot 110 and the parameter which determines the blinking interval of light emission are displayed as positions of outline plots. In the case where the position of the outline plot of "blinking" is set at a position of "slow" on the leftmost side, assuming that light emission state is lighting, the parameter which determines the light emission state is set at "0" which indicates the lighting state. In other cases, the parameter which determines the light emission state is set at "1" which indicates a blinking state, and a numerical value corresponding to the position of the outline plot of "blinking" is set as the parameter which determines the blinking interval of light emission.

The learner manipulates the liquid crystal screen with the touch panel 701 to input the setting value of each parameter illustrated in FIG. 15, and, then, touches and taps a portion where "transmit to Kumiita" (not illustrated) is displayed with his/her finger. By this means, the rewrite parameter is transmitted from the tablet computer 130 toward the mobile robot 110.

By the mobile robot side control unit 501 analyzing the communication data transmitted from the tablet computer 130 and received by the mobile robot 110, each setting value of the mobile robot operation parameter 600 for the command information of the original panel 121z is acquired. The mobile robot operation parameter 600 for the command information of the original panel 121z is set by the mobile robot side control unit 501 causing the acquired mobile robot operation parameter 600 to be stored in the operation parameter ROM 511. As described above, because the operation parameter ROM 511 is a non-volatile memory, even if the mobile robot 110 is powered off, the data is stored, and the mobile robot 110 operates with content of the rewritten mobile robot operation parameter 600 when the mobile robot 110 is powered on again.

As described above, the learner can create the original panel 121z by himself/herself and can set content of the operation of the mobile robot 110.

The learner can set whether or not to cause the mobile robot 110 to rotate through input to "rotation" and "the number of times of rotation" illustrated in FIG. 15, and can operate the mobile robot 110 so as not to perform operation itself by setting zero at the parameter which determines the number of times of rotation of the mobile robot 110. In this manner, the learner can learn concept of zero.

Further, the learner can enjoy learning programming using this learning toy 100. How the learner can learn programming by arranging a plurality of different command panels 121 to cause the mobile robot 110 which self-travels on the command panels 121 to perform desired operation, will be described as the following correspondence relationship.

Considering by the learner what kind of operation is caused to be performed by the mobile robot 110 corresponds to programming design. Then, work of arranging the command panels 121 corresponds to implementation of programming. Subsequently, causing the mobile robot 110 to self-travel on the command panels 121 to execute operation corresponds to execution of the program. As a result of causing the mobile robot 110 to perform operation, if there is a failure, it is necessary to change selection of the command panels 121 or change the arrangement positions, which corresponds to debug work of the program.

Specific learning action by the learner is as follows.

First, the learner considers what kind of operation is caused to be performed by the mobile robot 110 (programming design). After determining the operation which is caused to be performed by the mobile robot 110, the learner selects an optimal command panel 121 while imaging operation of the mobile robot 110 from a picture drawn on the command panel 121 and arranges the command panel 121 at an optimal position and in an optimal direction (implementation of programming). After the learner completes arrangement of the command panels 121, the learner causes the mobile robot 110 to actually perform operation to confirm whether the operation matches operation of the mobile robot 110 designed by himself/herself (execution of the program). If the operation of the mobile robot 110 is beyond the scope of the assumption, the learner selects an optimal command panel 121 again, rearranges the command panel 121 at an optimal position and in an optimal direction to correct the operation so that the mobile robot 110 performs operation as designed (debug work of the program).

According to Embodiment 1, because the mobile robot 110 reads the command information from the command panel 121 and performs operation on the basis of the command information, the learner can cause the mobile robot 110 to perform various kinds of operation by selecting a type of the command panel 121 and arranging the command panel 121.

Further, because the learner can directly observe movement of the mobile robot 110, even children such as infants can easily visually understand movement and can learn programming with interest. Meanwhile, by also causing the tablet computer 130 to perform operation on the basis of the command information, it is possible to express various kinds of content, so that older children as well as younger children can learn programming with this learning toy 100 with interest.

Further, because, as well as a basic configuration in which only the mobile robot 110 operates, a plurality of targets of the mobile robot 110 and the tablet computer 130 operate in accordance with the read command information, targets of operation by the programming increase, so that it is possible to learn high-level programming. As a result, it is possible to change a difficulty level in a stepwise manner from basic content to higher-level content in accordance with development stages of children. Further, it is possible to prevent children from getting bored or prevent the learning toy from getting out of use in a short period of time as children grow, and realize usage of this learning toy 100 over a long period of time. Still further, the learner can recognize wireless communication, image processing, or the like, which are basic technologies supporting the tablet computer 130 through learning experience and can obtain basic knowledge which is necessary for programming.

Further, according to Embodiment 1, the tablet computer 130 displays an image captured with the two-dimensional CMOS area sensor 808 on the liquid crystal screen with the touch panel 701, and, by performing image processing on the image, displays an image stored in the tablet computer 130 in advance at a portion of background of the mobile robot 110. This is a technology called augmented reality (AR), and the learner can recognize the technology of augmented reality (AR) through learning experience. Further, it is also possible to display process of image processing for realizing augmented reality (AR) on the liquid crystal screen with the touch panel 701, so that the learner can learn how the image processing is performed.

Still further, according to Embodiment 1, the learner can change content of operation of the mobile robot 110 by manipulating the tablet computer 130. The learner can learn a method for manipulating the tablet computer 130 and can recognize a difference in roles between the program and the parameter through learning experience. Further, the learner can operate the mobile robot 110 so as not to perform operation itself by setting zero at the mobile robot operation parameter 600, so that the learner can learn concept of zero.

Still further, according to Embodiment 1, the learner can operate operation of the mobile robot 110 by manipulating the tablet computer 130. The learner can operate the mobile robot 110 not only from the command panel 121 but also from the tablet computer 130, so that the learner can learn that the mobile robot 110 which is one output target can be operated from a plurality of different input routes.

Still further, according to Embodiment 1, the tablet computer 130 displays an image or generates sound on the basis of a plurality of pieces of command information. It is possible to store a number of pieces of reproduction data of images to be displayed and sound to be generated on the basis of types and combination of the plurality of pieces of command information, and it is possible to variously change the images and sound in accordance with types and order of the command panels 121. Therefore, the learner can continue to learn without getting bored. Further, because the tablet computer 130 operates not only on the basis of one piece of command information but also on the basis of the plurality of pieces of command information, the learner needs to consider types and combination of the plurality of command panels 121, so that the learner can learn high-level programming.

Further, according to Embodiment 1, it is possible to purchase a plurality of mobile robots 110, and the learner can learn using the plurality of mobile robots 110.

Still further, according to Embodiment 1, because types of the command information recorded in the command panel 121 can be increased, it is possible to cause the mobile robot 110 to perform various kinds of operation. As a result, the learner can learn various kinds of high-level programming. Further, by selecting a type of the command panel 121, it is possible to adjust a difficulty level of programming in a stepwise manner. Therefore, it is possible to realize learning of programming in accordance with a development stage of the learner. Further, because it is possible to sell the command panel 121 alone, the learner can additionally purchase the command panel 121 as necessary.

Still further, according to Embodiment 1, the learner can learn a method for manipulating the tablet computer 130 through learning experience. Further, because the learner can use a commercially available tablet computer 130 as well as the tablet computer 130 developed and manufactured as exclusive goods, it is possible to realize learning of programming at low cost.

### [Embodiment 2 of the invention]

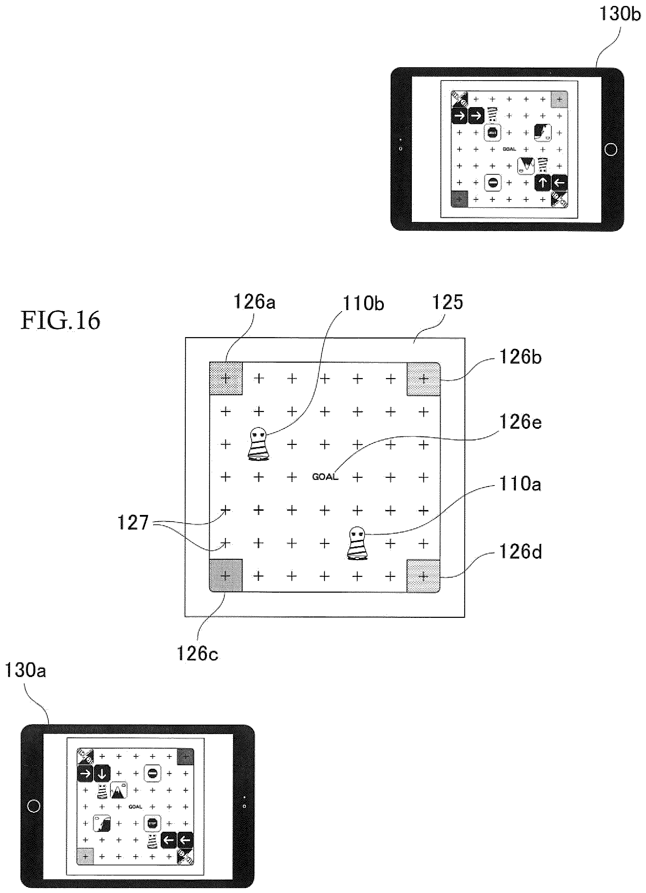

Embodiment 2 of the present invention will be described using FIG. 16 to FIG. 18.

The mobile robot 110 and the tablet computer 130 used in Embodiment 2 of the present invention are similar to those in Embodiment 1.

Outline of a competitive game according to Embodiment 2 of the present invention is as follows.

FIG. 16 is a plan view schematically illustrating aspect where a competitive game is executed by two mobile robots 110. The present embodiment is configured with two mobile robots 110 on command sheets 125, and two tablet computers 130. A mobile robot 110a is paired with a tablet computer 130a, and a mobile robot 110b is paired with a tablet computer 130b.

The command sheet 125 is segmented into seven rows and seven columns in a grid shape, and the mobile robot 110 can move on these grid points. In Embodiment 2 of the present invention, the mobile robot 110 stops at each grid point to be put into a state where the mobile robot 110 accepts operation instruction information transmitted from the tablet computer 130. By the learner inputting a virtual panel 122 to the liquid crystal screen with the touch panel 701 of the tablet computer 130, the operation instruction information is transmitted from the tablet computer 130 toward the mobile robot 110, and the mobile robot 110 moves forward by one grid point in a longitudinal direction or in a horizontal direction on the command sheet 125. When the mobile robot 110 moves forward by one grid point, the mobile robot 110 stops again to put into a state where the mobile robot 110 accepts the operation instruction information transmitted from the tablet computer 130.

In the competitive game, for example, first, two mobile robots 110 are disposed in a gird point region 126a and in a grid point region 126d on the command sheet 125 illustrated in FIG. 16 as initial positions which are diagonal positions of the command sheet 125. That is, the mobile robot 110a operated by one learner is disposed in the grid point region 126d centering around the grid point, and the mobile robot 110b operated by another leaner is disposed in the grid point region 126a.

When the competitive game is started, two learners alternately input virtual panels 122 to the respective tablet computers 130 to operate the respective mobile robots 110 to move forward by one grid point. Then, the learner whose mobile robot 110 first reaches a grid point region 126e which is the central position of the command sheet 125 and on which goal is printed becomes a winner. Note that the goal position is not limited to the central position of the command sheet 125, and, for example, it is also possible to set a rule such that the learner whose mobile robot 110 first reaches the initial position of the opponent becomes a winner.

The learner manipulates the tablet computer 130 while seeing regions where the virtual panel 122 can be input, which correspond to the positions on the command sheet 125 displayed on the tablet computer 130 on a one-to-one basis. Further, current positions of all the virtual panels 122 input by the learner so far and the mobile robot 110 operated by the learner are displayed while the current positions are superimposed on the region where the virtual panel 122 can be input, displayed on the tablet computer 130. Further, in addition to this, current positions of all the virtual panels 122 input by the opponent so far and the mobile robot 110 operated by the opponent are displayed in a superimposed manner. The learner can recognize history of the competitive game so far by observing the liquid crystal screen with the touch panel 701 of the tablet computer 130 of the learner.

Further, on the liquid crystal screen with the touch panel 701, types and the number of the remaining virtual panels 122 of the leaner may be displayed, and types and the number of the remaining virtual panels 122 of the opponent may be displayed. By this means, the learner can proceed with the competitive game and aim for a goal while considering strategy of the opponent by comparing the remaining virtual panels 122 of the learner and the remaining virtual panels 122 of the opponent.

The learner can input the virtual panel 122 at a position in the region where the virtual panel 122 can be input, which corresponds to the position on the command sheet 125 at which the mobile robot 110 operated by the learner exists at the time on a one-to-one basis. By inputting the virtual panel 122 at this position in the region where the virtual panel 122 can be input, it is possible to cause the mobile robot 110 to move forward to the adjacent grid point. Alternatively, as another option for the learner, the learner can also input the virtual panel 122 at a position where the mobile robot 110 operated by the learner does not exist at the time. If the virtual panel 122 is input at such a position, the mobile robot 110 operated by the learner stops and does not move forward at the grid point. However, it is possible to input the virtual panel 122 so as to obstruct movement of the mobile robot 110 of the opponent instead of causing the mobile robot 110 of the learner to move forward. The learner sequentially inputs the virtual panels 122 while selecting such an option.

The virtual panel will be described next.

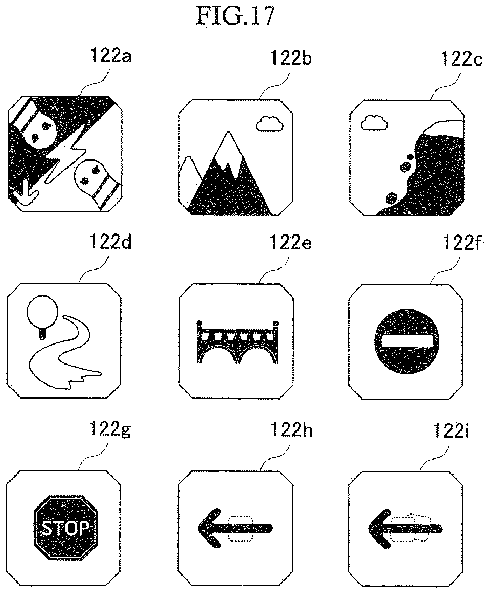

FIG. 17 illustrates images of pictures of the virtual panels 122 as one example. These virtual panels 122 are used in the competitive game in Embodiment 2 of the present invention.

The virtual panel 122 is input to the region where the virtual panel 122 can be input, displayed on the liquid crystal screen with the touch panel 701 while coordinate and a direction are designated.

A virtual panel 122a illustrated in an upper left part of FIG. 17 is input at a start position of the competitive game of the mobile robot 110. The mobile robot 110 is disposed at a position on the command sheet 125, which corresponds to the position in the region where the virtual panel 122 can be input at which this virtual panel 122a is input, on a one-to-one basis, and the competitive game is started.

The virtual panel 122b expresses an obstacle which gives the learner an image of a mountain in the competitive game and functions to restrict the traveling direction of the mobile robot 110. This virtual panel 122b is expressed with an image of a picture of a mountain, so that the learner can recognize that the virtual panel 122b expresses the obstacle of a mountain. A rule is set such that, in the grid point region one grid point before the position on the command sheet 125, which corresponds on a one-to-one basis to the position at which this virtual panel 122b is input, the mobile robot 110 cannot go straight and has to move in a right direction.

A virtual panel 122c expresses an obstacle which gives the leaner an image of a cliff in the competitive game and functions to restrict the traveling direction of the mobile robot 110. This virtual panel 122c is expressed with an image of a picture of a cliff, so that the learner can recognize that the virtual panel 122c expresses the obstacle of a cliff. A rule is set such that, in the grid point region one grid point before the position on the command sheet 125, which corresponds on a one-to-one basis to the position at which this virtual panel 122c is input, the mobile robot 110 cannot go straight and has to move in a left direction.

A virtual panel 122d expresses an obstacle which gives the learner an image of a river in the competitive game and functions to restrict the traveling direction of the mobile robot 110. This virtual panel 122d is expressed with an image of a picture of a river, so that the learner can recognize that the virtual panel 122d expresses the obstacle of a river. A rule is set such that, in the grid point region one grid point before the position on the command sheet 125, which corresponds on a one-to-one basis to the position at which this virtual panel 122d is input, the mobile robot 110 cannot go straight and has to move in a right direction or in a left direction. However, a rule is set such that, by a virtual panel 122e which gives the learner an image of a bridge which will be described next being input before this virtual panel 122d, the mobile robot 110 can go straight and pass through the virtual panel 122d without being subject to restriction by this virtual panel 122d.

A virtual panel 122e expresses a structure which gives the learner an image of a bridge in the competitive game and which enables the mobile robot 110 to pass through the obstacle. This virtual panel 122e is expressed with an image of a picture of a bridge, so that the learner can recognize that the virtual panel 122e expresses the structure of a bridge. A rule is set such that, by this virtual panel 122e being input before the above-described virtual panel 122d which expresses a river, the mobile robot 110 can go straight and pass through the virtual panel 122d which expresses a river without being subject to restriction of the virtual panel 122d.

A virtual panel 122f expresses a sign which gives the learner an image of a stop sign in the competitive game and functions to skip one input of the virtual panel 122 to the tablet computer 130. This virtual panel 122f is expressed with an image of a picture of a stop sign, so that the learner can recognize that the virtual panel 122f expresses a stop sign. A rule is set such that, if the mobile robot 110 reaches the grid point region one grid point before the position on the command sheet 125, which corresponds on a one-to-one basis to the position at which this virtual panel 122f is input, the learner skips one input of the virtual panel 122 to the tablet computer 130.

A virtual panel 122g expresses a sign which gives the learner an image of a no-entry sign in the competitive game and functions to restrict the traveling direction of the mobile robot 110. This virtual panel 122g is expressed with an image of a picture of a no-entry sign, so that the learner can recognize that the virtual panel 122g expresses a no-entry sign. A rule is set such that, in the grid point region one grid point before the position on the command sheet 125, which corresponds on a one-to-one basis to the position at which this virtual panel 122g is input, the mobile robot 110 cannot go straight and has to move in a right direction or in a left direction.

A virtual panel 122h includes operation instruction information for causing the mobile robot 110 to perform operation of moving forward in a direction of an arrow, and ignoring and skipping one virtual panel 122 immediately after this virtual panel 122h. An image of a picture which displays this virtual panel 122h is configured with combination of a figure of an arrow and the virtual panel 122 to be skipped which is expressed with a dashed line.

As a usage method of this virtual panel 122h, for example, it is possible to select and input this virtual panel 122h when the virtual panel 122b which expresses an obstacle giving the learner an image of a mountain is input at the position in the region where the virtual panel 122 can be input, corresponding the grid point region one grid point before the mobile robot 110. By this virtual panel 122h being input, the mobile robot 110 can skip and climb over the virtual panel 122b which expresses a mountain. Therefore, the mobile robot 110 can climb over the virtual panel 122b which expresses a mountain in the direction of the arrow indicated in the image of the picture of this virtual panel 122h and go straight.

Meanwhile, in the case where the position reached after the virtual panel is skipped by this virtual panel 122h is outside the region where the virtual panel 122 can be input, the competitive game is finished. A rule is set such that the learner who inputs this virtual panel 122h to the tablet computer 130 is a loser.

A virtual panel 122i includes operation instruction information for causing the mobile robot 110 to perform operation of moving forward in a direction of an arrow, and ignoring and skipping two virtual panels 122 immediately after this virtual panel 122i.

While operation of the mobile robot 110 based on the operation instruction information recorded in this virtual panel 122i is substantially the same as the operation of the mobile robot 110 based on the above-described virtual panel 122h, there is a difference in that the number of virtual panels 122 to be skipped is two.

By preparing the virtual panels 122 which impose various kinds of restriction in a direction of movement of the mobile robot 110, the learner needs to operate the mobile robot 110 by inputting the virtual panel 122 to the tablet computer 130 so as to avoid the restriction. As a result, because content of the competitive game becomes complicated, the learner can enjoy learning.

Note that virtual panels 122 which display images of pictures which are similar to the pictures printed on the command panels 121 illustrated in FIG. 9 and FIG. 10 are also prepared. Concerning the command panels 121 and the virtual panels 122 having similar pictures, operation of the mobile robot 110 performed on the basis of the command information recorded in the command panels 121 becomes the same as operation of the mobile robot 110 performed on the basis of the operation instruction information which corresponds to the virtual panels 122 on a one-to-one basis. That is, if the picture of the command panel 121 and the picture of the virtual panel 122 are the same, the operation of the mobile robot 110 is the same.

Further, command panels 121 on which images of the pictures from the virtual panel 122a to the virtual panel 122i illustrated in FIG. 17 are printed as pictures may be prepared.

The command sheet 125 to be used in the competitive game will be described next.

The command sheet 125, which is one sheet in a square shape, formed with a material of a plastic sheet, is used by being spread on a floor. Because the command sheet 125 is manufactured with a soft material, the command sheet 125 can be folded and can be stored in small space. Note that the material of the command sheet 125 is not limited to a plastic sheet and other materials such as cloth, paper and rubber may be used. However, because the command sheet 125 is used by children, it is preferable to use a safe material.

Further, the shape of the command sheet 125 is not limited to a square shape, and the command sheet 125 may have other shapes such as a rectangular shape. Still further, the command sheet 125 does not have to be one large sheet, and a plurality of small sheets may be prepared and pasted on one large sheet, or the small sheets may be pasted on the floor. The command sheet 125 to be used in the competitive game which is obtained by tightly paving a plurality of small command sheets 125 in a planar shape has the same configuration as that of one large command sheet 125.

The size of the command sheet 125 illustrated in FIG. 16 is the size having the same range as a planar region corresponding to seven command panels 121 in a row direction and seven command panels 121 in a column direction based on a size of one command panel 121. There are also prepared other sizes of the command sheet 125 having a range of 13 rows and 13 columns and a range of 21 rows and 21 columns, in addition to the size of the command sheet 125 having the range of seven rows and seven columns. However, the size of the command sheet 125 is arbitrary, and the command sheet 125 may have other sizes.

Further, a cross-line mark 127 is printed at each central position of the size corresponding to one command panel 121 on the surface of the command sheet 125 so that the learner can visually recognize that the command sheet 125 is segmented into portions corresponding to seven command panels 121 in the row direction and seven command panels in the column direction based on the size corresponding to one command panel 121. By using the cross-line mark 127 as a mark of the position of the grid point, the learner can recognize the central position of a portion of the size corresponding to one command panel 121 and can recognize the positions of the grid points from the first row and the first column to the seventh row and the seventh column.

Further, the grid point regions which become four corners of the command sheet 125 and which each center around the grid point corresponding to one command panel 121, are colored. By the grid point regions being colored in this manner, the leaner can recognize orientation of the command sheet 125. As illustrated in FIG. 16, a grid point region 126a which centers around the grid point in the first row and the first column on the command sheet 125 is colored in yellow, a grid point region 126b in the first row and the seventh column is colored in red, a grid point region 126c in the seventh row and the first column is colored in blue, and a grid point region 126d in the seventh row and the seventh column is colored in green. By the grid point regions which become the four corners of the command sheet 125 being colored, and the position of the grid point region 126a colored in yellow being set as a reference of the position in the first row and the first column, the learner can recognize orientation of the command sheet 125.

Further, a two-dimensional dot pattern which can be read with the optical reading module 240 of the mobile robot 110 is printed on the whole surface of the command sheet 125. However, as described above, because this two-dimensional dot pattern is small and printed so as not to be prominent, the learner does not pay attention to this two-dimensional dot pattern.

The printed two-dimensional dot pattern is segmented into regions corresponding to seven command panels 121 in the row direction and the seven command panels 121 in the column direction in a grid shape on the basis of the size corresponding to one command panel 121 in a similar manner to the grid point regions centering around the cross-line marks 127 illustrated in FIG. 16, and, within the grid point region corresponding to one command panel 121, the same command information is recorded. That is, by the mobile robot 110 reading the two-dimensional dot pattern printed on the whole surface of the command sheet 125 and reading out the command information, it is possible to detect the position of the mobile robot 110 on the command sheet 125. Further, from the read two-dimensional dot pattern, not only the position on the command sheet 125, but also orientation of the command sheet 125 can be detected. Therefore, it is possible to detect which direction the mobile robot 110 faces with respect to the command sheet 125.

Further, because the command information read by the mobile robot 110 is transmitted from the mobile robot 110 toward the tablet computer 130, the tablet computer 130 which receives the command information can also detect the position of the mobile robot 110 on the command sheet 125 by analyzing the command information.

Note that, it is also possible to employ a configuration where, instead of the command sheet 125, command information similar to the command information which indicates information of the position recorded in the command sheet 125 is recorded in the command panel 121, and the learner is allowed to play the competitive game in Embodiment 2 of the present invention by causing the mobile robot 110 to move on a region where the command panels 121 are arranged in a square region.

The competitive game according to Embodiment 2 of the present invention will be described in detail next.

Here, it is assumed that the competitive game is played with two learners of A and B. However, the competitive game can be not only played with two learners, but can be played with three or more learners at the same time. Further, learners in remote locations can play the competitive game at the same time through the Internet connection via a Wi-Fi communication unit 811 of the tablet computer 130.

The mobile robot 110 and the tablet computer 130 operated by A is combination of a mobile robot 110a and a tablet computer 130a. Meanwhile, the mobile robot 110 and the tablet computer 130 operated by B is combination of a mobile robot 110b and a tablet computer 130b.

To start the competitive game, A and B execute application software for the competitive game installed in the respective tablet computers 130. Then, the size of the command sheet 125 is selected. Three types of sizes including a size of seven rows and seven columns, a size of 13 rows and 13 columns and a size of 21 rows and 21 columns are prepared as the size of the command sheet 125. The learner can select one type of the size of the command sheet 125 from these three types by performing input to the liquid crystal screen with the touch panel 701. However, it is also possible to prepare and set the command sheet 125 having other sizes. Here, description will be provided assuming that the size of the command sheet 125 of seven rows and seven columns is selected.

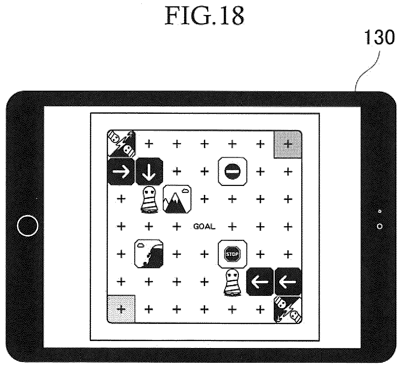

FIG. 18 illustrates an example of an image displayed on the liquid crystal screen with the touch panel 701 when the competitive game is played. While FIG. 18 illustrates aspect where a plurality of virtual panels 122 are arranged, at first, the virtual panels 122 are not displayed, and only the region where the virtual panel 122 can be input is displayed. In this description, because the size of the command sheet 125 having seven rows and seven columns is assumed, the grid points of seven rows and seven columns which have the same size as the size of the command sheet 125 are displayed as the region where the virtual panel 122 can be input. The grid points displayed as the region where the virtual panel 122 can be input have one-to-one correspondence relationship with the grid points configured with the cross-line marks 127 printed on the command sheet 125. That is, inputting the virtual panel 122 at a position of the grid point displayed as the region where the virtual panel 122 can be input corresponds to arranging the virtual panel 122 at a position of the cross-line mark 127 printed on the command sheet 125, which corresponds to the position of the gird point on a one-to-one basis. Further, when the mobile robot 110 exists at the position of the cross-line mark 127 on the command sheet 125, an image expressing the mobile robot 110 is displayed at the position of the grid point displayed as the region where the virtual panel 122 can be input, which corresponds to the position of the cross-line mark 127 on a one-to-one basis.

Then, it is determined which of A and B plays first. In the application software for the competitive game, exclusive processing of preventing a plurality of tablet computers 130 from inputting the virtual panel 122 at the same time is incorporated. Therefore, it is necessary to determine the order of inputting the virtual panel 122 to the liquid crystal screen with the touch panel 701. When the virtual panel 122 is input to the liquid crystal screen with the touch panel 701, A and B alternately input one virtual panel 122. Here, description will be provided assuming that A plays first.

Subsequently, A and B input the virtual panels 122a at start positions of the competitive game of the respective mobile robots 110 and dispose the mobile robots 110 at start positions of the competitive game on the command sheet 125. For example, as the start positions of the competitive game, the mobile robots 110 are disposed in the grid point region 126a in the first row and the first column and in the grid point region 126d in the seventh row and the seventh column on the command sheet 125, which are diagonal positions on the command sheet 125. In this case, for example, the mobile robot 110a of A is disposed in the grid point region 126d, and the mobile robot 110b of B is disposed in the grid point region 126a.

The above is preparation for starting the competitive game, and thereafter, the competitive game is started.

If the competitive game is started by A who plays first manipulates the liquid crystal screen with the touch panel 701, first, the mobile robot 110a of A reads the command information recorded in the command sheet 125. Then, the mobile robot side control unit 501 of the mobile robot 110a of A transmits the read command information toward the tablet computer 130a of A by controlling the mobile robot side Bluetooth (registered trademark) module I/F unit 509.

A data structure of data transmitted from the mobile robot 110 toward the tablet computer 130 is similar to that in the above-described FIG. 8B. In a first region, data indicating that the information is command information is stored, and, in a second region, data corresponding to the read command information is stored. In third to twelfth regions, while arbitrary data is stored because there is no data to be transmitted, here, zero is stored. In a thirteenth region, checksum is stored.

After the tablet computer 130a of A receives communication data transmitted from the mobile robot 110a of A, the tablet side control unit 801 of the tablet computer 130a of A analyzes the received data. By the first region of the received data being analyzed, it is detected that the command information is transmitted, and by the second region being analyzed, content of the command information is detected. Because the command information recorded in the command sheet 125 corresponds to the positions of the respective grid point regions of seven rows and seven columns of the command sheet 125 on a one-to-one basis, the tablet side control unit 801 of the tablet computer 130a of A can detect a current position of the mobile robot 110a of A. The tablet side control unit 801 then causes an image of the mobile robot 110 to be displayed at a position corresponding to the current position of the mobile robot 110a of A on the liquid crystal screen with the touch panel 701 by controlling the touch panel liquid crystal screen controller 803. Here, the position corresponding to the current position of the mobile robot 110a of A is a position of the grid point corresponding to the current position of the mobile robot 110a of A on a one-to-one basis among the grid points displayed on the liquid crystal screen with the touch panel 701 as the region where the virtual panel 122 can be input. A can recognize the current position of the mobile robot 110a on the command sheet 125 by seeing the position of the image of the mobile robot 110a of A displayed on the liquid crystal screen with the touch panel 701.

Further, the tablet side control unit 801 of the tablet computer 130a of A controls the Wi-Fi communication unit 811 to transmit the command information transmitted from the mobile robot 110a of A toward the tablet computer 130b of B.

An example of a data structure when the command information is transmitted from one tablet computer 130 toward the other tablet computer 130 is illustrated in FIG. 8E. In a first region, data indicating that the information is the command information is stored, and, in a second region, data corresponding to the read command information is stored. In a third region, a numerical value which can identify the tablet computer 130 which is a transmission source is stored. By the tablet computer 130 receiving this communication data detecting the numerical value stored in the third region, it is possible to specify the tablet computer 130 of the transmission source. If the tablet computer 130 of the transmission source can be specified, by reading content of the command information stored in the second region, it is possible to detect a position of the mobile robot 110 which is paired with the tablet computer 130 which transmits the communication data. As described above, because the command information recorded in the command sheet 125 corresponds to the positions of the respective grid point regions of the command sheet 125 on a one-to-one basis, it is possible to detect the position of the mobile robot 110 on the basis of the command information. In fourth to twelfth regions, while arbitrary data is stored because there is no data to be transmitted, here, zero is stored. In a thirteenth region, checksum is stored.

After the tablet computer 130b of B receives communication data including the command information transmitted from the tablet computer 130a of A, the tablet side control unit 801 of the tablet computer 130b of B analyzes the received data. By the first region of the received data being analyzed, it is detected that the command information is transmitted, and by the second region being analyzed, content of the command information is detected. As described above, because the command information recorded in the command sheet 125 corresponds to the positions of the respective grid point regions of seven rows and seven columns of the command sheet 125 on a one-to-one basis, the tablet side control unit 801 of the tablet computer 130b of B can detect the current position of the mobile robot 110 on the basis of the command information. Then, from the third region, it is detected that the transmission source is the tablet computer 130a of A. From a result of the above analysis, the tablet side control unit 801 of the tablet computer 130b of B can detect the current position of the mobile robot 110a of A. Then, the tablet side control unit 801 of the tablet computer 130b of B displays the current position of the mobile robot 110a of A on the liquid crystal screen with the touch panel 701.

By this means, B can see the position of the image of the mobile robot 110a of A which is the opponent, displayed on the liquid crystal screen with the touch panel 701, so that B can recognize the current position of the mobile robot 110a of A on the command sheet 125.

Subsequently, A inputs the virtual panel 122 at a position of the grid point displayed as the region where the virtual panel 122 can be input on the liquid crystal screen with the touch panel 701. The virtual panel 122 can be input at any position in the grid point region where the virtual panel 122 has not yet been input by the learner and other learners among the region where the virtual panel 122 can be input. In the case where the position on the command sheet 125 corresponding to the position at which the virtual panel 122 is input matches the current position of the mobile robot 110 operated by the learner at the time, the operation instruction information which has one-to-one correspondence relationship with the virtual panel 122 is transmitted from the tablet computer 130 toward the mobile robot 110 operated by the learner. Then, the mobile robot 110 operated by the learner performs desired operation on the basis of the received operation instruction information. Meanwhile, in the case where the position on the command sheet 125 corresponding to the position at which the virtual panel 122 is input does not match the current position of the mobile robot 110 operated by the learner at the time, the operation instruction information is not transmitted from the tablet computer 130 toward the mobile robot 110 operated by the learner. Therefore, the mobile robot 110 stops at the position. The meaning of inputting the virtual panel 122 at the position where the mobile robot 110 operated by the learner does not exist is to hinder movement of the mobile robot 110 of other learners.

A needs to determine and input a type of the virtual panel 122, a row number and a column number indicating input coordinate in the region where the virtual panel 122 can be input, and a direction of the virtual panel 122, to input the virtual panel 122 to the liquid crystal screen with the touch panel 701 of the tablet computer 130a operated by A.

As a specific input manipulation method of the virtual panel 122, for example, the learner performs action of touching and tapping the position of the grid point in the region where the virtual panel 122 can be input displayed on the liquid crystal screen with the touch panel 701 with his/her finger. Through this action, an image similar to a picture drawn on the virtual panel 122 is displayed at the position of the grid point in the region where the virtual panel 122 can be input, tapped by the learner. Still further, if the learner repeats tapping at the same position of the grid point on the liquid crystal screen with the touch panel 701, displayed images of pictures of the virtual panel 122 are sequentially switched. The learner stops tapping when the image of the picture of the virtual panel 122 which the learner wants to input at the position of the grid point is displayed. By this means, display of the image of the picture of the virtual panel 122 is fixed, and an instruction for inputting the direction with respect to the command sheet 125 is displayed (not illustrated). Therefore, the learner inputs and determines the direction of the virtual panel 122 with respect to the command sheet 125. Through such manipulation, a type of the virtual panel 122 at the position of the grid point on the command sheet 125, a row number and a column number indicating input coordinate in the region where the virtual panel 122 can be input, and a direction of the virtual panel 122 are input.

Note that, if the direction of the virtual panel 122 is input, the traveling direction of the mobile robot 110 is determined on the basis of the input direction of the virtual panel 122. Therefore, the learner can designate a desired traveling direction to cause the mobile robot 110 to move forward by selecting and inputting the direction of the virtual panel 122.

Input information of the virtual panel 122 input to the liquid crystal screen with the touch panel 701 of the tablet computer 130a of A is detected by the tablet side control unit 801 via the touch panel liquid crystal screen controller 803. The tablet side control unit 801 of the tablet computer 130a of A causes the type of the input virtual panel 122, the row number and the column number indicating the input coordinate in the region where the virtual panel 122 can be input, and the direction of the virtual panel 122 to be stored in the virtual panel RAM 810. Further, the tablet side control unit 801 causes content of input information of all the virtual panels 122 stored in the virtual panel RAM 810 to be displayed on the liquid crystal screen with the touch panel 701.

On the liquid crystal screen with the touch panel 701 of the tablet computer 130a of A, images of pictures of all the virtual panels 122 stored in the virtual panel RAM 810 are displayed so as to match coordinate in the region where the virtual panel 122 can be input and input directions. Therefore, A can confirm input results of all the virtual panels 122 in the region where the virtual panel 122 can be input at a glance by seeing the images of the pictures of the virtual panels 122 displayed on the liquid crystal screen with the touch panel 701.

Further, the tablet side control unit 801 of the tablet computer 130a of A controls the Wi-Fi communication unit 811 to transmit the input information of the virtual panel 122 toward the tablet computer 130b of B.

An example of a data structure when the input information of the virtual panel 122 is transmitted from one tablet computer 130 toward the other tablet computer 130 is illustrated in FIG. 8F. In a first region, a numerical value indicating input information of the virtual panel 122 is stored, so that it is possible to recognize that the communication data holds the input information of the virtual panel 122. In a second region, a numerical value corresponding to each type of virtual panel 122 on a one-to-one basis is stored so that a type of the input virtual panel 122 can be identified. In a third region, a row number of input coordinate of the virtual panel 122 is stored. In a fourth region, a column number of input coordinate of the virtual panel 122 is stored. In a fifth region, a numerical value indicating an input direction of the virtual panel 122 is stored. Further, in a sixth region, a numerical value from which the tablet computer 130 which is a transmission source can be identified is stored. Because communication is performed among a plurality of tablet computers 130, by detecting the numerical value stored in the sixth region, it is possible to specify the tablet computer 130 of the transmission source. By specifying the tablet computer 130 of the transmission source, it is possible to detect the type, the input coordinate, the input direction, or the like, of the virtual panel 122 input to the tablet computer 130 of the transmission source. In seventh to twelfth regions, arbitrary numerical values are stored. In a last region, a result obtained by calculating checksum is stored.

After the input information of the virtual panel 122 is transmitted from the tablet computer 130a of A and received by the tablet computer 130b of B, the tablet side control unit 801 of the tablet computer 130b of B analyzes the received data. The tablet side control unit 801 detects that the input information of the virtual panel 122 is transmitted by analyzing the first region for the received data including the input information of the virtual panel 122 and detects the type of the virtual panel 122 by analyzing the second region. Further, the tablet side control unit 801 detects the row number and the column number of the input coordinate of the virtual panel 122 respectively from the third and the fourth regions and detects the input direction of the virtual panel 122 from the fifth region. Further, the tablet side control unit 801 detects from the sixth region that the transmission source is the tablet computer 130a of A.

In this manner, the tablet side control unit 801 of the tablet computer 130b of B can detect the input information of the virtual panel 122 input to the tablet computer 130a of A. Then, the tablet side control unit 801 causes the type of the virtual panel 122 input by A, the row number and the column number which are the input coordinate, and the input direction to be stored in the virtual panel RAM 810. Further, the tablet side control unit 801 of the tablet computer 130b of B causes content of the input information of all the virtual panels 122 stored in the virtual panel RAM 810 to be displayed on the liquid crystal screen with the touch panel 701. Specifically, an image indicating the type of the input virtual panel 122 is displayed at the coordinate at which the virtual panel 122 is input, and in the input direction.

By this means, B can confirm input results of all the virtual panels 122 of A which is the opponent in the region where the virtual panel 122 can be input by seeing images of pictures of the virtual panels 122 displayed on the liquid crystal screen with the touch panel 701.

In the case where the mobile robot 110a of A exists at the time at the position on the command sheet 125 corresponding to the position at which A inputs the virtual panel 122, the tablet side control unit 801 of the tablet computer 130a of A controls the tablet side Bluetooth (registered trademark) communication unit 802 to transmit the operation instruction information which has one-to-one correspondence relationship with the virtual panel 122 toward the mobile robot 110a of A. A data structure of communication when the operation instruction information is transmitted toward the mobile robot 110 is as illustrated in FIG. 8D, and is configured as 13 successive data arrays. In a first region, data indicating that the information is the operation instruction information is stored, and, in a second region, data indicating content of the operation instruction information which is a command for causing the mobile robot 110 to perform desired operation is stored. In a third region, data indicating a direction of the virtual panel 122 with respect to the command sheet 125 is stored. For example, in the case where the direction of the virtual panel 122 input to the tablet computer 130 with respect to the command sheet 125 faces a direction in which the row number of the command sheet 125 becomes smaller, "1" is stored, and, in the case where the direction of the virtual panel 122 faces a direction in which the row number becomes greater, "3" is stored. Further, for example, the direction of the input virtual panel 122 with respect to the command sheet 125 faces a direction in which the column number of the command sheet 125 becomes greater, "2" is stored, and, in the case where the direction of the input virtual panel 122 faces a direction in which the column number becomes smaller, "4" is stored. While arbitrary data is stored because there is no data to be transmitted in fourth to twelfth regions, here, zero is stored. In a thirteenth region, checksum is stored.

By the mobile robot side control unit 501 analyzing this communication data transmitted from the tablet computer 130 and received by the mobile robot 110, it is detected from the first region that the information is the operation instruction information, and content of the operation instruction information is detected from the second region. Further, the direction of the input virtual panel 122 with respect to the command sheet 125 is detected from the third region.

Subsequently, while the mobile robot 110 executes operation on the basis of the received operation instruction information, because the operation instruction information and the command information have the same content as described above, the mobile robot 110 executes operation on the basis of the command information which has one-to-one correspondence relationship with the operation instruction information.

That is, the mobile robot side control unit 501 first detects the command information which has one-to-one correspondence relationship with the operation instruction information and reads out a setting value of the mobile robot operation parameter 600 corresponding to the command information from the operation parameter ROM 511. Then, the mobile robot side control unit 501 selects a program which specifies operation of the mobile robot 110 corresponding to the command information from the mobile robot side control unit ROM (flash memory) 521 and executes the program using the setting value of the mobile robot operation parameter 600 read in advance as input to the program. In this manner, the mobile robot 110 is caused to perform desired operation. At this time, the direction of the mobile robot 110 with respect to the command sheet 125 is determined while the direction of the input virtual panel 122 with respect to the command sheet 125, detected from the third region in the received data, is taken into account.

If the mobile robot 110 performs operation on the basis of the operation instruction information, the mobile robot 110 moves forward by one grid point region of the command sheet 125 in the traveling direction of the mobile robot 110, reads the command information recorded in the command sheet 125 in the grid point region of the command sheet 125, and transmits the read command information toward the tablet computer 130. Then, the mobile robot side control unit 501 of the mobile robot 110 causes the mobile robot 110 to stop at the position of the grid point region on the command sheet 125 and puts the mobile robot 110 into a state where the mobile robot 110 accepts the operation instruction information from the tablet computer 130.

As described above, the command information transmitted from the mobile robot 110 is received by the tablet computer 130, and the current position of the mobile robot 110 is displayed on the liquid crystal screen with the touch panel 701. Along with this, the tablet computer 130 transmits the received command information toward the other tablet computer 130 via the Wi-Fi communication unit 811. The other tablet computer 130 which receives this communication data from the tablet computer 130 detects the current position of the mobile robot 110 which is paired with the tablet computer 130 of the transmission source, on the command sheet 125 by analyzing the received data, and causes the current position of the mobile robot 110 to be displayed on the liquid crystal screen with the touch panel 701.

A series of operation when the virtual panel 122 is input to the tablet computer 130a of A is as described above.

Then, it is turn for the B side to input the virtual panel 122 to the tablet computer 130b. A series of operation is performed in a similar manner to the operation by A by B inputting the virtual panel 122.

A rule of the game is set such that A and B alternately input the virtual panel 122 one by one in this manner, and when the mobile robot 110 of one of A and B first reaches the grid point region 126e which is the central position of the command sheet 125 and on which a goal is printed, a person who operates the mobile robot 110 becomes a winner.

Input of the virtual panels 122 by A and B and transition of display of the liquid crystal screen with the touch panel 701 from when the competitive game is started until when the virtual panels 122 are arranged as illustrated in FIG. 18 will be described next with reference to FIG. 18.

A who plays first, inputs the virtual panel 122 having an image of an arrow at a coordinate position in the seventh row and the seventh column which is a position where the mobile robot 110a of A starts the competitive game, in a direction in which the row number becomes smaller. The virtual panel 122 having the image of the arrow is the virtual panel 122 which has an image of a picture of the command panel 121c for determining the traveling direction of the mobile robot 110. In a similar manner to operation of the mobile robot 110 based on the command panel 121c, the mobile robot 110 moves forward in the direction of the arrow of the virtual panel 122 having the image of the arrow.

Through input by A, the mobile robot 110a of A moves forward on the coordinate by one in the column direction which is the direction of the arrow, and stops at the coordinate position in the sixth row and the seventh column.

At this time, the input by A and the current positions of the mobile robots 110 of A and B are displayed at the tablet computers 130 of A and B.

After the mobile robot 110a of A moves to the coordinate position in the sixth row and the seventh column, the image of the virtual panel 122a is displayed at the coordinate position in the seventh row and the seventh column so that it can be confirmed later that this position is the start position of the competitive game.

B who plays subsequently, inputs the virtual panel 122 having the image of the arrow at the coordinate position in the first row and the first column in a direction in which the row number becomes greater as first move. The mobile robot 110b of B moves to a coordinate position in the second row and the first column and stops.

All the input results of A and B so far are displayed at the tablet computers 130 of A and B, and the current positions of the mobile robots 110 of A and B are displayed.

As the subsequent second moves of A and B, A inputs the virtual panel 122g of a no-entry sign in the second row and the fifth column, and B inputs the virtual panel 122c of a cliff in the fifth row and the second column. In this manner, the virtual panel 122 can be input at a position where the mobile robot 110 does not exist. However, a rule is set such that, for such input, the mobile robot 110 stops and cannot move forward to the next coordinate position.

As the subsequent third and fourth moves of A and B, the virtual panels 122 having the image of the arrow are input. A inputs the virtual panels 122 in the sixth row and the seventh column and in the sixth row and the sixth column in a direction in which the column number becomes smaller as the third and the fourth moves. B inputs the virtual panels 122 in the second row and the first column in a direction in which the column number becomes greater, and in the second row and the second column in a direction in which the row number becomes greater as the third and the fourth moves.

Through input by A and B so far, the images of the respective mobile robots 110 are displayed at the positions illustrated in FIG. 18. The mobile robot 110a of A is displayed in the sixth row and the fifth column, and the mobile robot 110b of B is displayed in the third row and the second column.

Then, A inputs the virtual panel 122b of a mountain at a position in the third row and the third column as the fifth move for the purpose of hindering movement of the mobile robot 110b of B. As described above, a rule is set such that the mobile robot 110 cannot go straight in a direction of this virtual panel 122b of a mountain, and the mobile robot 110 has to move in a right direction at a position one before this virtual panel 122b.

As the subsequent fifth move of B, the virtual panel 122f of a stop sign is input at the position in the fifth row and the fifth column. As described above, a rule is set such that, in the case where the mobile robot 110 exists at the position one before the virtual panel 122f of a stop sign, input of the virtual panel 122 for the mobile robot 110 is skipped. Therefore, A cannot input the virtual panel 122, and B successively inputs the virtual panel 122

All the input results of A and B so far, and the current positions of the mobile robots 110 of A and B are displayed at the tablet computers 130 of A and B. A screen which is similar to the screen illustrated in FIG. 18 is displayed on the liquid crystal screen with the touch panel 701 of the tablet computer 130a of A.

Input of the virtual panels 122 and display of the screen from when the competitive game is started until when the virtual panels 122 are arranged as illustrated in FIG. 18 have been described above.

As described above, by the input information of the virtual panels 122 input by A and B, and the command information read from the command sheet 125 by the mobile robots 110 of A and B being transmitted and received via the Wi-Fi communication unit 811, data is shared between the respective tablet computers 130. As a result of such a configuration, data of the current positions of the mobile robots 110 of all the learners who participate in the competitive game and the input results of the virtual panels 122 is shared among the respective tablet computers 130, stored and displayed at the respective tablet computers 130.

In the case where the virtual panels 122 from the virtual panel 122b to the virtual panel 122g which function to restrict the traveling direction of the mobile robot 110 are input, the respective tablet side control units 801 perform control so that the rule of the competitive game is followed by permitting or prohibiting input for the input by the learner. Further, a rule may be set such that, in the case where the learner performs erroneous input, the learner who performs the input becomes a loser, and the competitive game ends.

Note that, in the above description of the competitive game, a case has been described where the grid point region 126a which is the coordinate position in the first row and the first column illustrated in FIG. 16 and the grid point region 126d which is the coordinate position in the seventh row and the seventh column, which are diagonal positions are set as the start positions of the mobile robots 110, and the grid point region 126e which is the central position of the command sheet 125 is set as the goal position. However, the start positions and the goal position of the competitive game can be, of course, arbitrarily set.

Further, a plurality of learners can also play the competitive game only on the tablet computers 130 with a configuration using only the plurality of tablet computers 130 which can realize the competitive game without using the mobile robots 110 disposed on the command sheet 125.

Also according to Embodiment 2, it is possible to provide effects similar to those of the above-described Embodiment 1.

Further, according to Embodiment 2, by the learner inputting the virtual panel 122 to the tablet computer 130, the operation instruction information corresponding to the virtual panel 122 on a one-to-one basis is transmitted to the mobile robot 110, so that the learner can cause the mobile robot 110 to perform operation on the basis of the received operation instruction information. Therefore, the learner can perform similar learning by inputting the virtual panel 122 to the tablet computer 130 without actually arranging the command panel 121. As a result, the learner is free from troublesome task of arranging the command panel 121 and can efficiently learn programming.

Further, the plurality of learners can participate in the competitive game at the same time by using a plurality of sets of combination of the mobile robot 110 and the tablet computer 130. Therefore, it is possible to proceed with the competitive game while the learners performing communication with each other.

### [Reference Signs List]

100 learning toy
110 mobile robot
120 movement path
121 command panel
122 virtual panel
125 command sheet
130 tablet computer
211 body portion
212 bottom portion
220 light emitting portion
230 moving mechanism
231 rotating leg
232 supporting ball
240 optical reading module
401 motor
500 mobile robot side control circuit
501 mobile robot side control unit
502 RGB light source drive unit
503 RGB light source
504 power supply switch
506 motor controller
507 mobile robot side sound reproducing unit
508 mobile robot side speaker
509 mobile robot side Bluetooth (registered trademark) module I/F unit
510 mobile robot side Bluetooth (registered trademark) module
511 operation parameter ROM
520 mobile robot side CPU
521 mobile robot side control unit ROM (flash memory)
522 mobile robot side control unit RAM
600 mobile robot operation parameter
701 liquid crystal screen with touch panel
800 tablet side control circuit
801 tablet side control unit
802 tablet side Bluetooth (registered trademark) communication unit
803 touch panel liquid crystal screen controller
804 tablet side sound reproducing unit
805 tablet side speaker
806 image and sound reproduction data memory
807 two-dimensional area sensor drive unit
808 two-dimensional CMOS area sensor
809 tablet side command information RAM
810 virtual panel RAM
811 Wi-Fi communication unit
820 tablet side CPU
821 tablet side control unit ROM (flash memory)
822 tablet side control unit RAM

## Claims

1. A learning toy (100) comprising a mobile body (110), a portable information processing terminal (130) and a plurality of command panels (121) or command sheets(125) in which command information which is a command of operation for the mobile body(110) is recorded are successively arranged, the mobile body(110) reads the command information while self-traveling on the command panels (121) or the command sheets (125), and the mobile body (110) operates on a basis of the command information **characterized in that** the command information read by the mobile body(110) is transmitted from the mobile body(110) to the portable information processing terminal(130), and the portable information processing terminal(130) operates on a basis of the received command information,
the mobile body(110) comprising:
a moving unit(230) to self-travel on the command panels(121) or the command sheets(125);
a reading unit(240) to read the command information recorded in the command panels (121) or the command sheets (125) ;
a mobile body side communication unit (510) to enable the read command information to be communicated with the portable information processing terminal(130); and
a mobile body side control unit (501) to cause the mobile body (110) to operate on a basis of the read command information, and
the portable information processing terminal(130) comprising:
a first terminal side communication unit (802) to enable the command information read by the reading unit(240) to be communicated with the mobile body(110); and
a terminal side control unit (801) to cause an image to be displayed at a terminal side display unit(701) of the portable information processing terminal(130) or cause sound to be generated from a terminal side sound generating unit (805) of the portable information processing terminal(130), on a basis of the command information transmitted from the mobile body (110) and received by the first terminal side communication unit (802).

2. The learning toy (100) according to claim 1,
wherein the portable information processing terminal (130) comprises an image and sound reproduction data holding unit (806) to hold reproduction data of an image to be displayed at the terminal side display unit (701) or sound to be generated from the terminal side sound generating unit(805) on a basis of the command information transmitted from the mobile body (110) and received by the first terminal side communication unit (802),
the terminal side control unit(801) of the portable information processing terminal(130) reads out the reproduction data from the image and sound reproduction data holding unit(806) on a basis of the command information transmitted from the mobile body (110) and received by the first terminal side communication unit(802), and
causes an image to be displayed at the terminal side display unit(701) or causes sound to be generated from the terminal side sound generating unit(805).

3. The learning toy(100) according to claim 1,
wherein the portable information processing terminal(130) comprises:
an image and sound reproduction data holding unit(806) to hold reproduction data of an image to be displayed at the terminal side display unit (701) or sound to be generated from the terminal side sound generating unit (805) on a basis of the command information transmitted from the mobile body (110) and received by the first terminal side communication unit (802), and
a first terminal side storage unit(809) to store a plurality of pieces of the command information transmitted from the mobile body (110) and received by the first terminal side communication unit(802),
the terminal side control unit(801) of the portable information processing terminal(130) reads out predetermined reproduction data from the image and sound reproduction data holding unit (806) on a basis of the plurality of pieces of the command information stored in the first terminal side storage unit(809), and
causes an image to be displayed at the terminal side display unit(701) or causes sound to be generated from the terminal side sound generating unit(805).

4. The learning toy(100) according to claim 1,
wherein the portable information processing terminal(130) comprises:
an image and sound reproduction data holding unit(806) to hold the reproduction data of an image to be displayed at the terminal side display unit(701) or sound to be generated from the terminal side sound generating unit(805); and
an imaging unit(808) to be able to capture an image of the mobile body(110) and background,
the terminal side control unit(801) of the portable information processing terminal(130) causes the image of the mobile body(110) and the background captured by the imaging unit(808) to be displayed at the terminal side display unit (701),
reads out an image of the reproduction data from the image and sound reproduction data holding unit (806) on a basis of the command information transmitted from the mobile body(110) and received by the first terminal side communication unit(802), and
causes the read image of the reproduction data to be displayed at the terminal side display unit (701) so as to be superimposed on an image of a portion of the background.

5. The learning toy (110) according to claim 1,
wherein the mobile body(110) comprises an operation parameter storage unit(511) to store a mobile body operation parameter which determines content of operation of the mobile body(110) based on the command information,
the portable information processing terminal(130) comprises a terminal side input unit(701) to allow a learner to perform input,
the terminal side control unit (801) of the portable information processing terminal (130) causes the first terminal side communication unit (802) to transmit a rewrite parameter for rewriting the mobile body operation parameter and storing the rewritten mobile body operation parameter in the operation parameter storage unit(511), to the mobile body(110), the rewrite parameter being input to the terminal side input unit (701), and
the mobile body side control unit(501) of the mobile body(110) rewrites the mobile body operation parameter and stores the rewritten mobile body operation parameter in the operation parameter storage unit (511) on a basis of the rewrite parameter transmitted from the portable information processing terminal(130) and received by the mobile body side communication unit (510).

6. The learning toy (100) according to claim 1,
wherein the terminal side control unit (801) of the portable information processing terminal(130) detects a position of the mobile body (110) in a region where the plurality of the command panels(121) or the command sheets(125) are arranged on a basis of the command information transmitted from the mobile body(110) and received by the first terminal side communication unit(802), and
causes the detected position of the mobile body(110) in the region where the plurality of the command panels (121) or the command sheets(125) are arranged to be displayed at the terminal side display unit(701).

7. The learning toy according to claim 6,
wherein the portable information processing terminal(130) comprises a terminal side input unit(701) to allow a learner to perform input,
the terminal side control unit(801) of the portable information processing terminal (130) causes the first terminal side communication unit (802) to transmit operation instruction information which is a command of operation of the mobile body(110) input to the terminal side input unit(701), toward the mobile body (110), and
after the mobile body side control unit (501) of the mobile body (110) causes the mobile body (110) to operate on a basis of the operation instruction information transmitted from the portable information processing terminal (130) and received by the mobile body side communication unit(510),
the mobile body side control unit(501) of the mobile body (110) causes the reading unit (240) of the mobile body (110) to read the command information from the command panels(121) or the command sheets(125),
causes the mobile body side communication unit(510) to transmit the read command information toward the portable information processing terminal(130), and
then, stops operation of the mobile body(110) and puts the mobile body (110) into a state where the mobile body (110) accepts the operation instruction information.

8. The learning toy according to claim 7,
wherein the portable information processing terminal(130) comprises:
a second terminal side storage unit (810) to store a type of a virtual panel input(122) by a learner among a plurality of types of virtual panels(122) which have one-to-one correspondence relationship with a plurality of types of the operation instruction information input to the terminal side input unit(701), and an input position and an input direction of the virtual panel(122) in a region where the virtual panel(122) can be input, defined in advance,
the terminal side control unit(801) of the portable information processing terminal(130) causes the type of the virtual panel(122) input to the terminal side input unit(701) and the input position and the input direction of the virtual panel(122) to be stored in the second terminal side storage unit (810),
causes all the types of the virtual panels (122), and the input positions and the input directions of the virtual panels(122) stored in the second terminal side storage unit(810) to be displayed at the terminal side display unit(701),
in a case where the input position of the virtual panel (122) input to the terminal side input unit (701) matches the position of the mobile body(110) in the region where the plurality of the command panels (121) or the command sheets (125) are arranged, causes the first terminal side communication unit(802) to transmit the operation instruction information having one-to-one correspondence relationship with the input virtual panel(122) toward the mobile body(110), and
the mobile body side control unit(501) of the mobile body (110) causes the mobile body (110) to operate on a basis of the operation instruction information transmitted from the portable information processing terminal (130) and received by the mobile body side communication unit(510).

9. The learning toy(100) according to claim 8,
wherein a plurality of sets of combination of the mobile body(110) and the portable information processing terminal(130) included in the learning toy(100) according to claim 8 are provided,
the portable information processing terminal (130) in one set among the plurality of sets of the combination of the mobile body(110) and the portable information processing terminal(130) comprises:
a second terminal side communication unit (811) to be able to communicate the command information transmitted from the mobile body (110) in one set which is paired with the portable information processing terminal(130) in the one set and received by the first terminal side communication unit(802), and input information including the type of the virtual panel (122) input to the terminal side input unit (701), and the input position and the input direction of the virtual panel (122), with the portable information processing terminal(130) in another set among the plurality of sets of the combination of the mobile body(110) and the portable information processing terminal(130).

10. The learning toy (100) according to claim 9,
wherein the terminal side control unit(801) of the portable information processing terminal(130) in the one set among the plurality of sets of the combination of the mobile body(110) and the portable information processing terminal(130)
causes the second terminal side communication unit(811) of the portable information processing terminal (130) in the one set to transmit the received command information to the portable information processing terminal (130) in the other set when the command information is transmitted from the mobile body(110) in the one set which is paired with the portable information processing terminal (130) in the one set and is received by the terminal side communication unit of the portable information processing terminal(130) in the one set,
the terminal side control unit(801) of the portable information processing terminal(130) in the other set detects a position of the mobile body (110) in the one set in the region where the plurality of the command panels (121) or the command sheets (125) are arranged on a basis of the command information transmitted from the portable information processing terminal (130) in the one set and received by the second terminal side communication unit(811) of the portable information processing terminal(130) in the other set, and
causes the detected position of the mobile body(110) in the one set in the region where the plurality of the command panels(121) or the command sheets(125) are arranged to be displayed at the terminal side display unit (701) of the portable information processing terminal(130) in the other set.

11. The learning toy according to claim 9,
wherein the terminal side control unit(801) of the portable information processing terminal (130) in the one set among the plurality of sets of the combination of the mobile body(110) and the portable information processing terminal(130) causes the second terminal side communication unit (811) of the portable information processing terminal (130) in the one set to transmit the input information of the input virtual panel (122) toward the portable information processing terminal(130) in the other set when the type of the virtual panel (122), and the input position and the input direction of the virtual panel(122) are input to the terminal side input unit (701) of the portable information processing terminal (130) in the one set, and
the terminal side control unit(801) of the portable information processing terminal(130) in the other set causes the type of the virtual panel(122) input to the portable information processing terminal(130) in the one set, and the input position and the input direction of the virtual panel (122) to be stored in the second terminal side storage unit (810) of the portable information processing terminal (130) in the other set on a basis of the input information of the virtual panel (122) transmitted from the portable information processing terminal (130) in the one set and received by the second terminal side communication unit(811) of the portable information processing terminal(130) in the other set, and
causes all the types of the virtual panels (122), and the input positions and the input directions of the virtual panels(122) stored in the second terminal side storage unit (810) of the portable information processing terminal (130) in the other set to be displayed at the terminal side display unit (701) of the portable information processing terminal (130) in the other set.

12. The learning toy (100) according to any one of claims 1 to 11,
wherein the mobile body (110) comprises a mobile body side light emitting unit (503) to cause a body of the mobile body (110) to emit light or a mobile body side sound generating unit (508) to cause sound to be generated from the mobile body(110), on a basis of the command information.

13. A mobile body (110) for a learning toy (100) according to any of claims 1-12.

14. A command panel (121) for a learning toy (100) according to any of claims 1-12.

15. A command sheet (125) for a learning toy (100) according to any of claims 1-12.

## Patentansprüche

1. Lernspielzeug (100), umfassend einen Mobilkörper (110), ein tragbares Informationsverarbeitungsterminal (130) und mehrere Kommandotafeln (121) oder Kommandofolien (125), in denen Kommandoinformation, bei der es sich um ein Kommando für den Betrieb des Mobilkörpers (110) handelt, aufgezeichnet ist, die sukzessive angeordnet sind, wobei der Mobilkörper (110) die Kommandoinformation liest, während er selbständig auf den Kommandotafeln (121) oder den Kommandofolien (125) verfährt, und der Mobilkörper (110) auf der Grundlage der Kommandoinformation arbeitet,
**dadurch gekennzeichnet, dass** die von dem Mobilkörper (110) gelesene Kommandoinformation von dem Mobilkörper (110) zu dem tragbaren Informationsverarbeitungsterminal (130) gesendet wird, und das tragbare Informationsverarbeitungsterminal (130) auf der Grundlage der empfangenen Kommandoinformation arbeitet,
wobei der Mobilkörper (110) umfasst:
eine Bewegungseinheit (230) zum selbständigen Verfahren auf den Kommandotafeln (121) oder den Kommandofolien (125);
eine Leseeinheit (240) zum Lesen der in den Kommandotafeln (121) oder den Kommandofolien (125) aufgezeichneten Kommandoinformation;
eine mobilkörperseitige Kommunikationseinheit (510) zum Ermöglichen, dass die gelesene Kommandoinformation mit dem tragbaren Informationsverarbeitungsterminal (130) ausgetauscht wird; und
eine mobilkörperseitige Steuereinheit (501), um den Mobilkörper (110) zu veranlassen, auf der Grundlage der gelesenen Kommandoinformation zu arbeiten, und
wobei das tragbare Informationsverarbeitungsterminal (130) umfasst:
eine erste terminalseitige Kommunikationseinheit (802), um zu ermöglichen, dass die von der Leseeinheit (240) gelesene Kommandoinformation mit dem Mobilkörper (110) ausgetauscht wird; und
eine terminalseitige Steuereinheit (801) zum Veranlassen, dass ein Bild auf einer terminalseitigen Anzeigeeinheit (701) des tragbaren Informationsverarbeitungsterminals (130) angezeigt wird, oder um zu veranlassen, dass von einer terminalseitigen Tonerzeugungseinheit (805) des tragbaren Informationsverarbeitungsterminals (130) Ton erzeugt wird, auf der Grundlage der von dem Mobilkörper (110) gesendeten Kommandoinformation, die von der ersten terminalseitigen Kommunikationseinheit (802) empfangen wird.

2. Lernspielzeug (100) nach Anspruch 1,
bei dem das tragbare Informationsverarbeitungsterminal (130) eine Bild- und Ton-Wiedergabedaten-Haltereinheit (806) zum Halten von Wiedergabedaten eines auf der terminalseitigen Anzeigeeinheit (701) anzuzeigenden Bilds oder seitens der terminalseitigen Tonerzeugungseinheit (805) zu erzeugenden Tons auf der Grundlage der von dem Mobilkörper (110) gesendeten und von der ersten terminalseitigen Kommunikationseinheit (802) empfangenen Kommandoinformation,
die terminalseitige Steuereinheit (801) des tragbaren Informationsverarbeitungsterminals (130) die Wiedergabedaten aus der Bild- und Ton-Wiedergabedaten-Halteeinheit (806) ausliest auf einer Grundlage der Kommandoinformation, die von dem Mobilkörper (110) gesendet und von der ersten terminalseitigen Kommunikationseinheit (802) empfangen wurde, und
veranlasst, dass auf der terminalseitigen Anzeigeeinheit (701) ein Bild angezeigt wird, oder veranlasst, dass von der terminalseitigen Tonerzeugungseinheit (805) Ton erzeugt wird.

3. Lernspielzeug (100) nach Anspruch 1,
bei dem das tragbare Informationsverarbeitungsterminal (130) aufweist:
eine Bild- und Ton-Wiedergabedaten-Halteeinheit (806) zum Halten von Wiedergabedaten eines auf der terminalseitigen Anzeigeeinheit (701) anzuzeigenden Bilds oder von seitens der terminalseitigen Tonerzeugungseinheiten (805) zu erzeugenden Ton, auf der Grundlage der Kommandoinformation, die von dem Mobilkörper (110) gesendet wird und von der ersten terminalseitigen Kommunikationseinheit (802) empfangen wird, und
eine erste terminalseitige Speichereinheit (809) zum Speichern mehrerer Stücke der von dem Mobilkörper (110) gesendeten und von der ersten terminalseitigen Kommunikationseinheit (802) empfangenen Kommandoinformation,
wobei die terminalseitige Steuereinheit (801) des tragbaren Informationsverarbeitungsterminals (130) vorbestimmte Wiedergabedaten aus der Bild- und Ton-Wiedergabedaten-Halteeinheit (806) ausliest auf der Grundlage der mehreren Stücke der Kommandoinformation, die in der ersten terminalseitigen Speichereinheit (809) gespeichert sind, und
veranlasst, dass auf der terminalseitigen Anzeigeeinheit (701) ein Bild angezeigt wird, oder veranlasst, dass von der terminalseitigen Tonerzeugungseinheit (805) Ton erzeugt wird.

4. Lernspielzeug (100) nach Anspruch 1,
bei dem das tragbare Informationsverarbeitungsterminal (130) aufweist:
eine Bild- und Ton-Wiedergabedaten-Halteeinheit (806) zum Halten der Wiedergabedaten eines auf der terminalseitigen Anzeigeeinheit (701) anzuzeigenden Bilds oder von seitens der terminalseitigen Tonerzeugungseinheit (805) zu erzeugendem Ton; und
eine Bildgebungseinheit (808), die in der Lage ist, ein Bild des Mobilkörpers (110) und Hintergrund aufzunehmen,
wobei die terminalseitige Steuereinheit (801) des tragbaren Informationsverarbeitungsterminals (130) veranlasst, dass das Bild des Mobilkörpers (110) und des Hintergrunds, aufgenommen von der Bildgebungseinheit (808), auf der terminalseitigen Anzeigeeinheit (701) angezeigt werden,
ein Bild der Wiedergabedaten aus der Bild- und Ton-Wiedergabedaten-Halteeinheit (806) ausliest auf der Grundlage der Kommandoinformation, die von dem Mobilkörper (110) gesendet wird und von der ersten terminalseitigen Kommunikationseinheit (802) empfangen wird, und
veranlasst, dass das gelesene Bild der Wiedergabedaten auf der terminalseitigen Anzeigeeinheit (701) angezeigt wird in Überlagerung mit einem Bild eines Abschnitts des Hintergrunds.

5. Lernspielzeug (100) nach Anspruch 1,
bei dem der Mobilkörper (110) eine Betriebsparameter-Speichereinheit (511) zum Speichern eines Mobilkörper-Betriebsparameters aufweist, der den Arbeitsinhalt des Mobilkörpers (110) festlegt, basierend auf der Kommandoinformation,
wobei das tragbare Informationsverarbeitungsterminal (130) eine terminalseitige Eingabeeinheit (701) aufweist, um einer lernenden Person das Ausführen einer Eingabe zu ermöglichen,
die terminalseitige Steuereinheit (801) des tragbaren Informationsverarbeitungsterminals (130) die erste terminalseitige Kommunikationseinheit (802) veranlasst, einen Überschreibparameter zum Überschreiben des Mobilkörper-Betriebsparameters an den Mobilkörper (110) zu senden und den überschriebenen Mobilkörper-Betriebsparameter in der Betriebsparameter-Speichereinheit (511) zu speichern, wobei der Überschreibparameter in die terminalseitige Eingabeeinheit (701) eingegeben wird, und
die mobilkörperseitige Steuereinheit (501) des Mobilkörpers (110) den Mobilkörper-Betriebsparameter überschreibt und den überschriebenen Mobilkörper-Betriebsparameter in der Betriebsparameter-Speichereinheit (511) auf der Grundlage des von den tragbaren Informationsverarbeitungsterminal (130) gesendeten und von der mobilkörperseitigen Kommunikationseinheit (510) empfangenen Überschreibparameters speichert.

6. Lernspielzeug (100) nach Anspruch 1,
bei dem die terminalseitige Steuereinheit (801) des tragbaren Informationsverarbeitungsterminals (130) eine Position des Mobilkörpers (110) in einer Zone ermittelt, in der die mehreren Befehlstafeln (121) oder Befehlsfolien (125) angeordnet sind, auf der Grundlage der seitens des Mobilkörpers (110) gesendeten und von der ersten terminalseitigen Kommunikationseinheit (802) empfangenen Kommandoinformation, und
veranlasst, dass die ermittelte Position des Mobilkörpers (110) in der Zone, in der die mehreren Kommandotafeln (121) oder Kommandofolien (125) angeordnet sind, auf der terminalseitigen Anzeigeeinheit (701) angezeigt wird.

7. Lernspielzeug nach Anspruch 6,
bei dem das tragbare Informationsverarbeitungsterminal (130) eine terminalseitige Eingabeeinheit (701) aufweist, um einer lernenden Person die Ausführung einer Eingabe zu ermöglichen,
die terminalseitige Steuereinheit (801) des tragbaren Informationsverarbeitungsterminals (130) veranlasst, dass die erste terminalseitige Kommunikationseinheit (802) Betriebsbefehlsinformation, bei der es sich um einen Befehl des Betriebs des Mobilkörpers (110) handelt, der über die terminalseitige Eingabeeinheit (701) eingegeben wurde, zu dem Mobilkörper (110) zu übertragen, und
nachdem die mobilkörperseitige Steuereinheit (501) des Mobilkörpers (110) den Mobilkörper (110) veranlasst hat, auf der Grundlage der von dem tragbaren Informationsverarbeitungsterminal (130) gesendeten und von der mobilkörperseitigen Kommunikationseinheit (510) empfangenen Betriebsbefehlsinformation zu arbeiten,
die mobilkörperseitige Steuereinheit (501) des Mobilkörpers (110) die Leseeinheit (240) des Mobilkörpers (110) veranlasst, Kommandoinformation von den Kommandotafeln (121) oder den Kommandofolien (125) zu lesen,
die mobilkörperseitige Kommunikationseinheit (510) veranlasst, die gelesene Kommandoinformation zu dem tragbaren Informationsverarbeitungsterminal (130) zu senden, und
anschließend den Betrieb des Mobilkörpers (110) anhält und den Mobilkörper (110) in einen Zustand bringt, in welchem der Mobilkörper (110) die Betriebsbefehlsinformation akzeptiert.

8. Lernspielzeug (100) nach Anspruch 7,
bei der das tragbare Informationsverarbeitungsterminal (130) aufweist:
eine zweite terminalseitige Speichereinheit (810) zum Speichern eines Typs einer virtuellen Tafeleingabe (122) durch eine lernende Person unter einer Mehrzahl von Typen virtueller Tafeln (122), die eine Eins-zu-Eins-Entsprechung bezüglich mehrerer Typen der über die terminalseitige Eingabeeinheit (701) eingegebenen Betriebsbefehlsinformation aufweisen, und einer Eingabeposition sowie einer Eingaberichtung der virtuellen Tafel (122) in einer Zone, in der die virtuelle Tafel (122) eingegeben werden kann, die vorab definiert ist,
wobei die terminalseitige Steuereinheit (801) des tragbaren Informationsverarbeitungsterminals (130) veranlasst, dass der Typ der über die terminalseitige Eingabeeinheit (701) eingegebenen virtuellen Tafel (122) und die eingegebene Position sowie Eingaberichtung der virtuellen Tafel (122) in der zweiten terminalseitig Speichereinheit (810) gespeichert werden,
veranlasst, dass sämtliche Typen virtueller Tafeln (122) sowie die Eingabepositionen und die Eingaberichtungen der virtuellen Tafeln (122), die in der zweiten terminalseitigen Speichereinheit (810) gespeichert sind, auf der terminalseitigen Anzeigeeinheit (701) angezeigt werden,
für den Fall, dass die über die terminalseitige Eingabeeinheit (701) eingegebene Eingabeposition der virtuellen Tafel (122) übereinstimmt mit der Position des Mobilkörpers(110) innerhalb der Zone, in der mehrere der Kommandotafeln (122) oder Kommandofolien (125) angeordnet sind, die erste terminalseitige Kommunikationseinheit (802) veranlasst, die Betriebsbefehlsinformation mit der Eins-zu-Eins-Entsprechung mit der eingegebenen virtuellen Tafel (122) zu dem Mobilkörper (110) zu senden, und
die mobilkörperseitige Steuereinheit (501) des Mobilkörpers (110) den Mobilkörper (110) veranlasst, auf der Grundlage der Betriebsbefehlsinformation zu arbeiten, wie seitens des tragbaren Informationsverarbeitungsterminals (130) gesendet und von der mobilkörperseitigen Kommunikationseinheit (510) empfangen wurde.

9. Lernspielzeug (100) nach Anspruch 8,
bei dem mehrerer Sätze einer Kombination aus Mobildkörper (110) und tragbarem Informationsverarbeitungsterminal (130) in dem Lernspielzeug (100) nach Anspruch 8 vorgesehen sind,
das tragbare Informationsverarbeitungsterminal (130) in einem Satz unter den mehreren Sätzen der Kombination aus dem Mobilkörper (110) und dem tragbaren Informationsverarbeitungsterminal (130) umfasst:
eine zweite terminalseitige Kommunikationseinheit (811) zum Kommunizieren der seitens des Mobilkörpers (110) in einem Satz des Paares mit dem tragbaren Informationsverarbeitungsterminal (130) in dem einen Satz gesendeten und von der ersten terminalseitigen Kommunikationseinheit (802) empfangenen Befehlsinformation, sowie von der über die terminalseitige Eingabeeinheit (701) eingegebenen virtuellen Tafel (122) und die Eingabeposition sowie die Eingaberichtung der virtuellen Tafel (122) enthält, mit dem tragbaren Informationsverarbeitungsterminal (130) in einem anderen Satz unter den mehreren Sätzen der Kombination aus Mobilkörper (110) und tragbarem Informationsverarbeitungsterminal (130) kommuniziert.

10. Lernspielzeug (100) nach Anspruch 9,
bei dem die terminalseitige Steuereinheit (801) des tragbaren Informationsverarbeitungsterminals (130) in den einen Satz von den mehreren Sätzen der Kombination aus Mobilkörper (110) und tragbarem Informationsverarbeitungsterminal (130) die zweite terminalseitige Kommunikationseinheit (811) des tragbaren Informationsverarbeitungsterminals (130) in dem einen Satz veranlasst, die empfangene Befehlsinformation zu dem tragbaren Informationsverarbeitungsterminal (130) in dem anderen Satz zu senden, wenn die Befehlsinformation von dem Mobilkörper (110) in dem einen Satz, paarweise zugehörig zu den tragbaren Informationsverarbeitungsterminal (130) in dem einen Satz, übertragen wird und von der terminalseitigen Kommunikationseinheit des tragbaren Informationsverarbeitungsterminals (130) in dem einen Satz empfangen wird,
die terminalseitige Steuereinheit (801) des tragbaren Informationsverarbeitungsterminals (130) in dem anderen Satz eine Position des Mobilkörpers (110) in dem einen Satz innerhalb der Zone ermittelt, wo die mehreren Kommandotafeln (121) oder Kommandofolien (125) angeordnet sind, auf der Basis der von dem tragbaren Informationsverarbeitungsterminal (130) in dem einen Satz gesendeten Kommandoinformation, die von der zweiten terminalseitigen Kommunikationseinheit (811) des tragbaren Informationsverarbeitungsterminals (130) in dem anderen Satz empfangen wird, und
veranlasst, dass die ermittelte Position des Mobilkörpers (110) in dem einen Satz innerhalb der Zone, wo die mehreren Befehlstafeln (121) oder Befehlsfolien (125) angeordnet sind, angezeigt werden auf der terminalseitigen Anzeigeeinheit (701) des tragbaren Informationsverarbeitungsterminals (130) in den anderen Satz.

11. Lernspielzeug (100) nach Anspruch 9,
bei dem die terminalseitige Steuereinheit (801) des tragbaren Informationsverarbeitungsterminals (130) in dem einen Satz der mehreren Sätze der Kombination aus Mobilkörper (110) und tragbarem Informationsverarbeitungsterminal (130) die zweite terminalseitige Kommunikationseinheit (811) des tragbaren Informationsverarbeitungsterminals (130) in dem einen Satz veranlasst, die Eingangsinformation der eingegebenen virtuellen Tafel (122) zu dem tragbaren Informationsverarbeitungsterminal (130) in dem anderen Satz zu senden, wenn der Typ der virtuellen Tafel (122) sowie die Eingabeposition und die Eingaberichtung der virtuellen Tafel (122) in die terminalseitige Eingabeeinheit (701) des tragbaren Informationsverarbeitungsterminals (130) des einen Satzes eingegeben werden, und
die terminalseitige Steuereinheit (801) des tragbaren Informationsverarbeitungsterminals (130) in dem anderen Satz veranlasst, dass der Typ der virtuellen Tafel (122), der in das tragbare Informationsverarbeitungsterminal (130) in dem anderen Satz eingegeben wurde, und die Eingabeposition sowie die Eingaberichtung der virtuellen Tafel (122) in der zweiten terminalseitigen Speichereinheit (810) des tragbaren Informationsverarbeitungsterminals (130) in dem anderen Satz gespeichert werden auf der Grundlage der Eingabeinformation der virtuellen Tafel (122), die von dem tragbaren Informationsverarbeitungsterminal (130) in dem einen Satz gesendet und von der zweiten terminalseitigen Kommunikationseinheit (811) des tragbaren Informationsverarbeitungsterminals (130) in dem anderen Satz empfangen wurde, und
veranlasst, dass sämtliche Typen virtueller Tafeln (122) und die Eingabepositionen und die Eingaberichtungen der virtuellen Tafeln (122) in der zweiten terminalseitigen Speichereinheit (810) des tragbaren Informationsverarbeitungsterminals (130) in dem anderen Satz auf der terminalseitigen Anzeigeeinheit (701) des tragbaren Informationsverarbeitungsterminals (130) in dem anderen Satz angezeigt werden.

12. Lernspielzeug (100) nach einem der Ansprüche 1 bis 11,
bei dem der Mobilkörper (110) eine mobilkörperseitige Lichtemissionseinheit (503) aufweist, um einen Körper des Mobilkörpers (110) zu veranlassen, Licht zu emittieren, oder eine mobilkörperseitige Tonerzeugungseinheit (508) enthält, um zu veranlassen, dass von dem Mobilkörper (110) Ton erzeugt wird, auf der Grundlage der Befehlsinformation.

13. Mobilkörper (110) für ein Lernspielzeug (100) nach einem der Ansprüche 1 bis 12.

14. Kommandotafel (121) für ein Lernspielzeug (100) nach einem der Ansprüche 1 bis 12.

15. Kommandofolie (125) eines Lernspielzeugs (100) nach einem der Ansprüche 1 bis 12.

## Revendications

1. Jouet d'apprentissage (100) comprenant un corps mobile (110), un terminal de traitement d'informations portable (130), et une pluralité de panneaux de commande (121) ou de feuilles de commande (125), suivant un agencement successif, dans lesquels sont enregistrées des informations de commande, lesquelles sont une commande de fonctionnement pour le corps mobile (110),
le corps mobile (110) lisant les informations de commande tout en se déplaçant de manière autonome sur les panneaux de commande (121) ou les feuilles de commande (125), et le corps mobile (110) fonctionnant sur la base des informations de commande,
**caractérisé en ce que** les informations de commande lues par le corps mobile (110) sont transmises du corps mobile (110) au terminal de traitement d'informations portable (130), et le terminal de traitement d'informations portable (130) fonctionne sur la base des informations de commande reçues,
le corps mobile (110) comprenant :
une unité de déplacement (230) pour un déplacement autonome sur les panneaux de commande (121) ou les feuilles de commande (125) ;
une unité de lecture (240) pour lire les informations de commande enregistrées dans les panneaux de commande (121) ou les feuilles de commande (125) ;
une unité de communication côté corps mobile (510) pour permettre la communication des informations de commande lues avec le terminal de traitement d'informations portable (130), et
une unité de contrôle côté corps mobile (501) pour faire en sorte que le corps mobile (110) fonctionne sur la base des informations de commande lues, et
le terminal de traitement d'informations portable (130) comprenant :
une première unité de communication côté terminal (802) pour permettre la communication des informations de commande lues par l'unité de lecture (240) avec le corps mobile (110), et
une unité de contrôle côté terminal (801) pour faire en sorte qu'une image soit affichée sur une unité d'affichage côté terminal (701) du terminal de traitement d'informations portable (130) ou faire en sorte que du son soit généré à partir d'une unité de génération de son côté terminal (805) du terminal de traitement d'informations portable (130), sur la base des informations de commande transmises à partir du corps mobile (110) et reçues par la première unité de communication côté terminal (802).

2. Jouet d'apprentissage (100) selon la revendication 1,
dans lequel le terminal de traitement d'informations portable (130) comprend une unité de conservation de données de reproduction d'image et de son (806) pour conserver des données de reproduction d'une image devant être affichée sur l'unité d'affichage côté terminal (701) ou de son devant être généré à partir de l'unité de génération de son côté terminal (805) sur la base des informations de commande transmises à partir du corps mobile (110) et reçues par la première unité de communication côté terminal (802),
l'unité de contrôle côté terminal (801) du terminal de traitement d'informations portable (130) lit les données de reproduction à partir de l'unité de conservation de données de reproduction d'image et de son (806) sur la base des informations de commande transmises à partir du corps mobile (110) et reçues par la première unité de communication côté terminal (802), et
fait en sorte qu'une image soit affichée sur l'unité d'affichage côté terminal (701) ou fait en sorte que du son soit généré à partir de l'unité de génération de son côté terminal (805).

3. Jouet d'apprentissage (100) selon la revendication 1,
dans lequel le terminal de traitement d'informations portable (130) comprend :
une unité de conservation de données de reproduction d'image et de son (806) pour conserver des données de reproduction d'une image devant être affichée sur l'unité d'affichage côté terminal (701) ou de son devant être généré à partir de l'unité de génération de son côté terminal (805) sur la base des informations de commande transmises à partir du corps mobile (110) et reçues par la première unité de communication côté terminal (802),
une première unité de stockage côté terminal (809) pour stocker une pluralité d'éléments des informations de commande transmises à partir du corps mobile (110) et reçues par la première unité de communication côté terminal (802) ;
l'unité de contrôle côté terminal (801) du terminal de traitement d'informations portable (130) lit des données de reproduction prédéterminées à partir de l'unité de conservation de données de reproduction d'image et de son (806) sur la base de la pluralité d'éléments d'informations de commande stockées dans la première unité de stockage côté terminal (809), et
fait en sorte qu'une image soit affichée sur l'unité d'affichage côté terminal (701) ou fait en sorte que du son soit généré à partir de l'unité de génération de son côté terminal (805).

4. Jouet d'apprentissage (100) selon la revendication 1,
dans lequel le terminal de traitement d'informations portable (130) comprend :
une unité de conservation de données de reproduction d'image et de son (806) pour conserver les données de reproduction d'une image devant être affichée sur l'unité d'affichage côté terminal (701) ou du son devant être généré à partir de l'unité de génération de son côté terminal (805), et
une unité d'imagerie (808) en mesure de capturer une image du corps mobile (110) et de l'arrière-plan,
l'unité de contrôle côté terminal (801) du terminal de traitement d'informations portable (130) fait en sorte que l'image du corps mobile (110) et de l'arrière-plan capturée par l'unité d'imagerie (808) soient affichée sur l'unité d'affichage côté terminal (701) ;
lit une image des données de reproduction à partir de l'unité de conservation de données de reproduction d'image et de son (806) sur la base des informations de commande transmises à partir du corps mobile (110) et reçues par la première unité de communication côté terminal (802), et
fait en sorte que l'image lue des données de reproduction soit affichée sur l'unité d'affichage côté terminal (701) de manière à ce qu'elle soit superposée à une image d'une portion de l'arrière-plan.

5. Jouet d'apprentissage (110) selon la revendication 1,
dans lequel le corps mobile (110) comprend une unité de stockage de paramètre de fonctionnement (511) pour stocker un paramètre de fonctionnement de corps mobile, lequel détermine le contenu de fonctionnement du corps mobile (110) sur la base des informations de commande ;
le terminal de traitement d'informations portable (130) comprend une unité d'entrée côté terminal (701) afin de permettre à un apprenant d'exécuter l'entrée ;
l'unité de contrôle côté terminal (801) du terminal de traitement d'informations portable (130) fait en sorte que la première unité de communication côté terminal (802) transmette un paramètre de réécriture pour réécrire le paramètre de fonctionnement de corps mobile et stocker le paramètre de fonctionnement de corps mobile réécrit dans l'unité de stockage de paramètre de fonctionnement (511), au corps mobile (110), le paramètre de réécriture étant entré dans l'unité d'affichage côté terminal (701), et
l'unité de contrôle côté corps mobile (501) du corps mobile (110) réécrit le paramètre de fonctionnement de corps mobile et stocke le paramètre de fonctionnement de corps mobile réécrit dans l'unité de stockage de paramètre de fonctionnement (511) sur la base du paramètre de réécriture transmis à partir du terminal de traitement d'informations portable (130) et reçu par l'unité de communication côté corps mobile (510).

6. Jouet d'apprentissage (100) selon la revendication 1,
dans lequel l'unité de contrôle côté terminal (801) du terminal de traitement d'informations portable (130) détecte une position du corps mobile (110) dans une région où est agencée la pluralité des panneaux de commande (121) ou des feuilles de commande (125) sur la base des informations de commande transmises à partir du corps mobile (110) et reçues par la première unité de communication côté terminal (802), et
fait en sorte que la position détectée du corps mobile (110) dans la région où est agencée la pluralité des panneaux de commande (121) ou des feuilles de commande (125) soit affichée sur l'unité d'affichage côté terminal (701).

7. Jouet d'apprentissage selon la revendication 6,
dans lequel le terminal de traitement d'informations portable (130) comprend une unité d'entrée côté terminal (701) pour permettre à un apprenant d'exécuter l'entrée ;
l'unité de contrôle côté terminal (801) du terminal de traitement d'informations portable (130) fait en sorte que la première unité de communication côté terminal (802) transmette des informations d'instruction de fonctionnement, lesquelles sont une commande de fonctionnement du corps mobile (110) entrée dans l'unité d'entrée côté terminal (701), vers le corps mobile (110), et
une fois que l'unité de contrôle côté corps mobile (501) du corps mobile (110) a fait en sorte que le corps mobile (110) fonctionne sur la base des informations d'instruction de fonctionnement transmises à partir du terminal de traitement d'informations portable (130) et reçues par l'unité de communication côté corps mobile (510) ;
l'unité de contrôle côté corps mobile (501) du corps mobile (110) fait en sorte que l'unité de lecture (240) du corps mobile (110) lise les informations de commande à partir des panneaux de commande (121) ou des feuilles de commande (125),
fait en sorte que l'unité de communication côté corps mobile (510) transmette les informations de commande lues vers le terminal de traitement d'informations portable (130), et
arrête alors le fonctionnement du corps mobile (110) et place le corps mobile (110) dans un état où le corps mobile (110) accepte les informations d'instruction de fonctionnement.

8. Jouet d'apprentissage selon la revendication 7,
dans lequel le terminal de traitement d'informations portable (130) comprend :
une seconde unité de stockage côté terminal (810) pour stocker un type d'une entrée de panneau virtuel (122) par un apprenant parmi une pluralité de types de panneaux virtuels (122), lesquels présentent une relation de correspondance de un à un avec une pluralité de types des informations d'instruction de fonctionnement entrées dans l'unité d'entrée côté terminal (701), ainsi qu'une position d'entrée et une direction d'entrée du panneau virtuel (122) dans une région où le panneau virtuel (122) peut être entré, définis à l'avance,
l'unité de contrôle côté terminal (801) du terminal de traitement d'informations portable (130) fait en sorte que le type du panneau virtuel (122) entré dans l'unité d'entrée côté terminal (701) ainsi que la position d'entrée et la direction d'entrée du panneau virtuel (122) soit stockés dans la seconde unité de stockage côté terminal (810) ;
fait en sorte que tous les types des panneaux virtuels (122), ainsi que les positions d'entrée et les directions d'entrée des panneaux virtuels (122) stockés dans la seconde unité de stockage côté terminal (810) soient affichés sur l'unité d'affichage côté terminal (701),
dans un cas où la position d'entrée du panneau virtuel (122) entrée dans l'unité d'entrée côté terminal (701) coïncide avec la position du corps mobile (110) dans la région où est agencée la pluralité des panneaux de commande (121) ou des feuilles de commande (125), fait en sorte que la première unité de communication côté terminal (802) transmette les informations d'instruction de fonctionnement présentant une relation de correspondance de un à un avec le panneau virtuel d'entrée (122) au corps mobile (110), et
l'unité de contrôle côté corps mobile (501) du corps mobile (110) fait en sorte que le corps mobile (110) fonctionne sur la base des informations d'instruction de fonctionnement transmises à partir du terminal de traitement d'informations portable (130) et reçues par l'unité de communication côté corps mobile (510).

9. Jouet d'apprentissage (100) selon la revendication 8,
dans lequel il est prévu une pluralité de jeux de combinaison entre le corps mobile (110) et le terminal de traitement d'informations portable (130) inclus dans le jouet d'apprentissage (100) selon la revendication 8,
le terminal de traitement d'informations portable (130) dans un jeu parmi la pluralité de jeux de combinaison entre le corps mobile (110) et le terminal de traitement d'informations portable (130) comprend :
une seconde unité de communication côté terminal (811) en mesure de communiquer les informations de commande transmises à partir du corps mobile (110) dans un jeu, lequel est apparié avec le terminal de traitement d'informations portable (130) dans le un jeu, et reçues par la première unité de communication côté terminal (802), et des informations d'entrée incluant le type du panneau virtuel (122) entré dans l'unité d'entrée côté terminal (701), ainsi que la position d'entrée et la direction d'entrée du panneau virtuel (122), avec le terminal de traitement d'informations portable (130) dans un autre jeu parmi la pluralité de jeux de la combinaison entre le corps mobile (110) et le terminal de traitement d'informations portable (130).

10. Jouet d'apprentissage (100) selon la revendication 9,
dans lequel l'unité de contrôle côté terminal (801) du terminal de traitement d'informations portable (130) dans le un jeu parmi la pluralité de jeux de la combinaison entre le corps mobile (110) et le terminal de traitement d'informations portable (130)
fait en sorte que la seconde unité de communication côté terminal (811) du terminal de traitement d'informations portable (130) dans le un jeu transmette les informations de commande reçues au terminal de traitement d'informations portable (130) dans l'autre jeu lorsque les informations de commande sont transmises à partir du corps mobile (110) dans le un jeu, lequel est apparié avec le terminal de traitement d'informations portable (130) dans le un jeu, et sont reçues par l'unité de communication côté terminal du terminal de traitement d'informations portable (130) dans le un jeu ;
l'unité de contrôle côté terminal (801) du terminal de traitement d'informations portable (130) dans l'autre jeu détecte une position du corps mobile (110) dans le un jeu dans la région où est agencée la pluralité des panneaux de commande (121) ou des feuilles de commande (125) sur la base des informations de commande transmises à partir du terminal de traitement d'informations portable (130) dans le un jeu, et reçues par la seconde unité de communication côté terminal (811) du terminal de traitement d'informations portable (130) dans l'autre jeu, et
fait en sorte que la position détectée du corps mobile (110) dans le un jeu dans la région où est agencée la pluralité des panneaux de commande (121) ou des feuilles de commande (125) soit affichée sur l'unité d'affichage côté terminal (701) du terminal de traitement d'informations portable (130) dans l'autre jeu.

11. Jouet d'apprentissage selon la revendication 9,
dans lequel l'unité de contrôle côté terminal (801) du terminal de traitement d'informations portable (130) dans le un jeu parmi la pluralité de jeux de la combinaison entre le corps mobile (110) et le terminal de traitement d'informations portable (130) fait en sorte que la seconde unité de communication côté terminal (811) du terminal de traitement d'informations portable (130) dans le un jeu transmette les informations d'entrée du panneau virtuel d'entrée (122) vers le terminal de traitement d'informations portable (130) dans l'autre jeu lorsque le type du panneau virtuel (122), ainsi que la position d'entrée et la direction d'entrée du panneau virtuel (122) sont entrés dans l'unité d'entrée côté terminal (701) du terminal de traitement d'informations portable (130) dans le un jeu, et
l'unité de commande côté terminal (801) du terminal de traitement d'informations portable (130) dans l'autre jeu fait en sorte que le type du panneau virtuel (122) entré dans le terminal de traitement d'informations portable (130) dans le un jeu, ainsi que la position d'entrée et la direction d'entrée du panneau virtuel (122) soient stockés dans la seconde unité de stockage côté terminal (810) du terminal de traitement d'informations portable (130) dans l'autre jeu sur la base des informations d'entrée du panneau virtuel (122) transmises à partir du terminal de traitement d'informations portable (130) dans le un jeu, et reçues par la seconde unité de communication côté terminal (811) du terminal de traitement d'informations portable (130) dans l'autre jeu, et
fait en sorte que tous les types des panneaux virtuels (122), ainsi que les positions d'entrée et les directions d'entrée des panneaux virtuels (122) stockés dans la seconde unité de stockage côté terminal (810) du terminal de traitement d'informations portable (130) dans l'autre jeu soient affichés sur l'unité d'affichage côté terminal (701) du terminal de traitement d'informations portable (130) dans l'autre jeu.

12. Jouet d'apprentissage (100) selon l'une quelconque des revendications 1 à 11,
dans lequel le corps mobile (110) comprend une unité d'émission de lumière côté corps mobile (503) pour faire en sorte qu'un corps du corps mobile (110) émette une lumière, ou une unité de génération de son côté corps mobile (508) pour faire en sorte de générer du son à partir du corps mobile (110), sur la base des informations de commande.

13. Corps mobile (110) pour un jouet d'apprentissage (100) selon l'une quelconque des revendications 1 à 12.

14. Panneau de commande (121) pour un jouet d'apprentissage (100) selon l'une quelconque des revendications 1 à 12.

15. Feuille de commande (125) pour un jouet d'apprentissage (100) selon l'une quelconque des revendications 1 à 12.
